# EUROPEAN PATENT APPLICATION

(11) **EP 4 426 003 A1**
(43) Date of publication of application: **04.09.2024**
(21) Application number: 22897528.0
(22) Date of filing: 27.10.2022
(51) Int. Cl.: H04W 28/04

(54) **COMMUNICATION METHOD AND COMMUNICATION APPARATUS**

(30) Priority: 25.11.2021 CN 202111418043
(71) Applicant: Huawei Technologies Co., Ltd., Shenzhen, Guangdong 518129 (CN)
(72) Inventor: LIU, Nannan, Shenzhen, Guangdong 518129 (CN); CHANG, Junren, Shenzhen, Guangdong 518129 (CN); LI, Jiaojiao, Shenzhen, Guangdong 518129 (CN); YOU, Chunhua, Shenzhen, Guangdong 518129 (CN); LIU, Jianghua, Shenzhen, Guangdong 518129 (CN)
(74) Representative: Goddar, Heinz J.
(86) International application number: PCT/CN2022/127911
(87) International publication number: WO 2023/093445

(57) **Abstract**

This application provides a communication method and a communication apparatus. The method includes: receiving first DCI from a network device; and determining, based on the first DCI, that first data scheduled by the first DCI includes a first SIB 1, where the first SIB 1 includes information related to network access in a first operation mode. The first DCI includes first indication information, and the first indication information indicates that the first data includes the first SIB 1. Alternatively, one or more of the following information associated with the first DCI is different from that associated with second DCI: scrambling information, DCI format information, time domain or frequency domain resource information, the second DCI is used to schedule a second SIB 1, and the second SIB 1 includes information related to network access in a second operation mode. In this application, a specific SIB 1 scheduled by DCI is determined based on information related to the DCI, so that a terminal device can correctly identify content scheduled by the DCI. This helps improve communication reliability.

## Description

This application claims priority to Chinese Patent Application No. 202111418043.8, filed with the China National Intellectual Property Administration on November 25, 2021 and entitled "COMMUNICATION METHOD AND COMMUNICATION APPARATUS", which is incorporated herein by reference in its entirety.

### TECHNICAL FIELD

This application relates to the field of communication technologies, and in particular, to a communication method and a communication apparatus.

### BACKGROUND

Currently, a mobile communication network becomes increasingly complex. Usually, a terminal device may transmit a service by establishing a connection to a network device. Usually, the terminal device may obtain, by receiving and parsing a system information block 1 (system information block, SIB 1) from the network device, information about a network that can be accessed. However, in some cases, the terminal device may fail to access the network. For example, when the terminal device is incompatible with the network device because the network device is successfully upgraded but the terminal device is not successfully upgraded or the terminal device cannot be upgraded, the terminal device may not correctly receive, parse, or decode the SIB 1 sent by the network device, and therefore cannot access the network. Based on this, how to ensure successful access by a terminal device to a network to improve communication reliability becomes one of urgent problems that need to be resolved currently.

### SUMMARY

This application provides a communication method and a communication apparatus, to improve communication reliability.

According to a first aspect, this application provides a communication method, and the method is applicable to a terminal device. The method includes: receiving first downlink control information DCI from a network device, where the first DCI is used to schedule first data; and determining, based on the first DCI, that the first data includes a first system information block 1 SIB 1, where the first SIB 1 includes information related to network access in a first operation mode. The first DCI includes first indication information, and the first indication information indicates that the first data includes the first SIB 1; or one or more of the following information associated with the first DCI is different from that associated with second DCI: scrambling information, downlink control information format DCI format information, time domain resource information, or frequency domain resource information, the second DCI is used to schedule a second SIB 1, and the second SIB 1 includes information related to network access in a second operation mode.

In this application, the terminal device receives the first DCI from the network device, and determines, based on the first indication information carried in the first DCI, the scrambling information of the first DCI, a DCI format, the time domain resource information of the first DCI, or the frequency domain resource information of the first DCI, a type or a version of a SIB 1 scheduled by the first DCI, so that the terminal device can correctly identify content scheduled by DCI and correctly perform HARQ combination, to improve reliability of data reception and improve reliability of subsequent communication.

In a possible implementation, the first data includes a first message, and the first message includes the first SIB 1.

In a possible implementation, the first message further includes second indication information, and the second indication information indicates that the first message includes the first SIB 1.

In this application, the second indication information is carried in the first message (namely, an RRC message), so that the terminal device can determine, based on the second indication information, a type or a version of the first SIB 1 included in the first message, to ensure that the terminal device can correctly perform RRC ASN.1 decoding. This also helps improve communication reliability.

In a possible implementation, the first SIB 1 is associated with a first radio link control RLC entity, or the first SIB 1 is associated with a first logical channel LCH. The first RLC entity is different from a second RLC entity, or the first LCH is different from a second LCH. The second RLC entity is associated with the second SIB 1, and the second LCH is associated with the second SIB 1.

In this application, the terminal device determines a type or a version of the first SIB 1 based on a logical channel or an RLC entity, so that the terminal device can correctly identify content included in an RRC message, to correctly perform RRC decoding to obtain correct information.

In a possible implementation, the method further includes: obtaining third indication information associated with the first message, where the third indication information indicates that the first message includes the first SIB 1.

In this application, the terminal device obtains the third indication information associated with the first message, and then determines a type or a version of the first SIB 1 based on the third indication information, to ensure that the terminal device can correctly perform RRC ASN.1 decoding.

In a possible implementation, the obtaining third indication information associated with the first message includes: A radio resource control RRC layer of the terminal device obtains the third indication information from a physical PHY layer of the terminal device or a media access control MAC layer, a radio link control RLC layer, or a packet data convergence protocol PDCP layer of the terminal device.

In this application, the third indication information may be generated at the physical layer, the MAC layer, the RLC layer, or the PDCP layer of the terminal device and transmitted to an upper layer (for example, the RRC layer). For example, the third indication information may be included in a newly defined MAC, RLC, or PDCP subheader. The third indication information may be used to determine a decoding scheme at the RRC layer, to ensure that the terminal device can correctly perform RRC ASN.1 decoding. This inter-layer interaction mode is diversified, highly operable, and highly applicable.

In a possible implementation, the method further includes: receiving fourth indication information from the network device, where the fourth indication information indicates the network device to send the first SIB 1, and the fourth indication information is carried in a master information block MIB or the second DCI.

In this application, the terminal device receives the fourth indication information, and determines, based on the fourth indication information, whether the network device is to send the first SIB 1. In this way, when the terminal device determines that the network device is not to send the first SIB 1, the terminal device may no longer need to monitor a PDCCH corresponding to the first SIB 1. This can save energy for the terminal device.

In a possible implementation, the method further includes: receiving the first data from the network device based on the first DCI.

According to a second aspect, this application provides a communication method, and the method is applicable to a terminal device. The method includes: receiving third downlink control information DCI from a network device, where the third DCI is used to schedule at least two pieces of data, or the third DCI is used to schedule second data and fourth DCI, and the fourth DCI is used to schedule first data; and receiving the first data and/or the second data from the network device based on the third DCI, where the at least two pieces of data include the first data and the second data, the first data includes a first system information block 1 SIB 1, the second data includes a second SIB 1, the first SIB 1 includes information related to network access in a first operation mode, and the second SIB 1 includes information related to network access in a second operation mode.

In this application, one piece of DCI is used to schedule two SIBs 1, or DCI for the first SIB 1 is used to schedule DCI for the second SIB 1, so that the terminal device can correctly identify same data and correctly perform HARQ combination, to improve reliability of data reception.

In a possible implementation, the third DCI includes time domain resource information and/or frequency domain resource information of the first data.

In this application, the time domain resource information and the frequency domain resource information of the first data are dynamically or semi-statically configured in the third DCI, so that the terminal device can correctly receive the first data and/or the second data based on information configured in the third DCI.

In a possible implementation, the time domain resource information of the first data includes an interval between a time domain resource for the first data and a time domain resource for the second data, or the time domain resource information of the first data includes an interval between a time domain resource for the first data and a time domain resource for the third DCI; and/or
the frequency domain resource information of the first data includes an interval between a frequency domain resource for the first data and a frequency domain resource for the second data, or the frequency domain resource information of the first data includes an interval between a frequency domain resource for the first data and a frequency domain resource for the third DCI, where
the interval between the time domain resources is used to determine the time domain resource for the first data, and the interval between the frequency domain resources is used to determine the frequency domain resource for the first data.

In this application, the time domain resource information and/or the frequency domain resource information of the first data are indirectly configured, to be specific, the interval between the time domain resource for the first data and the time domain resource for the second data and/or the interval between the frequency domain resource for the first data and the frequency domain resource for the second data are configured, so that the terminal device can determine a specific frequency domain resource and/or frequency domain resource for the first data based on the interval configured in the third DCI and with reference to the time domain resource and/or the frequency domain resource for the second data that are included in the third DCI, to correctly receive the corresponding first data. Optionally, the terminal device may alternatively determine a specific frequency domain resource and/or frequency domain resource for the first data based on the interval configured in the third DCI and with reference to the time domain resource and/or the frequency domain resource for the third DCI, to correctly receive the corresponding first data. In a possible implementation, the third DCI includes time domain resource information and/or frequency domain resource information of the fourth DCI.

In this application, the time domain resource information and the frequency domain resource information of the fourth DCI are dynamically or semi-statically configured in the third DCI, so that the terminal device can correctly receive the fourth DCI based on information configured in the third DCI, and then receive the first data based on the fourth DCI.

In a possible implementation, the time domain resource information of the fourth DCI includes an interval between a time domain resource for the fourth DCI and a time domain resource for the second data, or the time domain resource information of the fourth DCI includes an interval between a time domain resource for the fourth DCI and a time domain resource for the third DCI; and/or
the frequency domain resource information of the fourth DCI includes an interval between a frequency domain resource for the fourth DCI and a frequency domain resource for the second data, or the frequency domain resource information of the fourth DCI includes an interval between a frequency domain resource for the fourth DCI and a frequency domain resource for the third DCI, where
the interval between the time domain resources is used to determine the time domain resource for the fourth DCI, and the interval between the frequency domain resources is used to determine the frequency domain resource for the fourth DCI.

In this application, the time domain resource information and/or the frequency domain resource information of the fourth DCI are indirectly configured, to be specific, the interval between the time domain resource for the fourth DCI and the time domain resource for the second data and/or the interval between the frequency domain resource for the fourth DCI and the frequency domain resource for the second data are configured, so that the terminal device can determine a specific frequency domain resource and/or frequency domain resource for the fourth DCI based on the interval configured in the third DCI and with reference to the time domain resource and/or the frequency domain resource for the second data that are included in the third DCI, to correctly receive the corresponding fourth DCI. Optionally, the terminal device may alternatively determine a specific frequency domain resource and/or frequency domain resource for the fourth DCI based on the interval configured in the third DCI and with reference to the time domain resource and/or the frequency domain resource for the third DCI, to correctly receive the corresponding fourth DCI. Therefore, the first data may be correctly received based on the fourth DCI.

In a possible implementation, one or more of the following intervals are predefined: the interval between the time domain resource for the first data and the time domain resource for the second data, the interval between the time domain resource for the first data and the time domain resource for the third DCI, the interval between the frequency domain resource for the first data and the frequency domain resource for the second data, or the interval between the frequency domain resource for the first data and the frequency domain resource for the third DCI, where the interval between the time domain resources is used to determine the time domain resource for the first data, and the interval between the frequency domain resources is used to determine the frequency domain resource for the first data.

In this application, the interval between the time domain resource for the first data and the time domain resource for the second data and/or the interval between the frequency domain resource for the first data and the frequency domain resource for the second data are pre-specified in a protocol, so that the terminal device can determine a specific frequency domain resource and/or frequency domain resource for the first data based on the predefined interval and with reference to the time domain resource and/or the frequency domain resource for the second data that are included in the third DCI, to correctly receive the corresponding first data. Alternatively, the interval between the time domain resource for the first data and the time domain resource for the third DCI and/or the interval between the frequency domain resource for the first data and the frequency domain resource for the third DCI are pre-specified in a protocol, so that the terminal device can determine a specific frequency domain resource and/or frequency domain resource for the first data based on the predefined interval and with reference to the time domain resource and/or the frequency domain resource for the third DCI, to correctly receive the corresponding first data.

In a possible implementation, the first data includes a first message, and the first message includes the first SIB 1.

In a possible implementation, the first message further includes second indication information, and the second indication information indicates that the first message includes the first SIB 1.

In this application, the second indication information is carried in the first message (namely, an RRC message), so that the terminal device can determine, based on the second indication information, a type or a version of the first SIB 1 included in the first message, to ensure that the terminal device can correctly perform RRC ASN.1 decoding. This also helps improve communication reliability.

In a possible implementation, the first SIB 1 is associated with a first radio link control RLC entity, or the first SIB 1 is associated with a first logical channel LCH. The first RLC entity is different from a second RLC entity, or the first LCH is different from a second LCH. The second RLC entity is associated with the second SIB 1, and the second LCH is associated with the second SIB 1.

In this application, the terminal device determines a type or a version of the first SIB 1 based on a logical channel or an RLC entity, so that the terminal device can correctly identify content included in an RRC message, to correctly perform RRC decoding to obtain correct information.

In a possible implementation, the method further includes: obtaining third indication information associated with the first message, where the third indication information indicates that the first message includes the first SIB 1.

In this application, the terminal device obtains the third indication information associated with the first message, and then determines a type or a version of the first SIB 1 based on the third indication information, to ensure that the terminal device can correctly perform RRC ASN.1 decoding.

In a possible implementation, the obtaining third indication information associated with the first message includes: A radio resource control RRC layer of the terminal device obtains the third indication information from a physical PHY layer of the terminal device or a media access control MAC, radio link control RLC, or packet data convergence protocol PDCP layer of the terminal device.

In this application, the third indication information may be generated at the physical layer, the MAC layer, the RLC layer, or the PDCP layer of the terminal device and transmitted to an upper layer (for example, the RRC layer). For example, the third indication information may be included in a newly defined MAC, RLC, or PDCP subheader. The third indication information may be used to determine a decoding scheme at the RRC layer, to ensure that the terminal device can correctly perform RRC ASN.1 decoding. This inter-layer interaction mode is diversified, highly operable, and highly applicable.

In a possible implementation, the method further includes: receiving a master information block MIB from the network device, where the MIB includes fourth indication information, and the fourth indication information indicates the network device to send the first SIB 1.

In a possible implementation, the third DCI further includes fourth indication information, and the fourth indication information indicates the network device to send the first SIB 1.

In this application, the terminal device receives the fourth indication information, and determines, based on the fourth indication information, whether the network device is to send the first SIB 1. In this way, when the terminal device determines that the network device is not to send the first SIB 1, the terminal device may no longer need to monitor a PDCCH corresponding to the first SIB 1. This can save energy for the terminal device.

According to a third aspect, this application provides a communication method, and the method is applicable to a network device. The method includes: determining first downlink control information DCI, where the first DCI is used to schedule first data, the first data includes a first system information block 1 SIB 1, and the first SIB 1 includes information related to network access in a first operation mode; and sending the first DCI to a terminal device, where the first DCI includes first indication information, and the first indication information indicates that the first data includes the first SIB 1; or one or more of the following information associated with the first DCI is different from that associated with second DCI: scrambling information, downlink control information format DCI format information, time domain resource information, or frequency domain resource information, the second DCI is used to schedule a second SIB 1, and the second SIB 1 includes information related to network access in a second operation mode.

In a possible implementation, the first data includes a first message, and the first message includes the first SIB 1.

In a possible implementation, the first message further includes second indication information, and the second indication information indicates that the first message includes the first SIB 1.

In a possible implementation, the method further includes: sending fourth indication information to the terminal device, where the fourth indication information indicates the network device to send the first SIB 1, and the fourth indication information is carried in a master information block MIB or the second DCI.

In a possible implementation, the method further includes: sending the first data to the terminal device.

According to a fourth aspect, this application provides a communication method, and the method is applicable to a network device. The method includes: sending third downlink control information DCI to a terminal device, where the third DCI is used to schedule at least two pieces of data, or the third DCI is used to schedule second data and fourth DCI, and the fourth DCI is used to schedule first data; and sending the first data and the second data to the terminal device, where the at least two pieces of data include the first data and the second data, the first data includes a first system information block 1 SIB 1, the second data includes a second SIB 1, the first SIB 1 includes information related to network access in a first operation mode, and the second SIB 1 includes information related to network access in a second operation mode.

In a possible implementation, the third DCI includes time domain resource information and/or frequency domain resource information of the first data.

In a possible implementation, the time domain resource information of the first data includes an interval between a time domain resource for the first data and a time domain resource for the second data, or the time domain resource information of the first data includes an interval between a time domain resource for the first data and a time domain resource for the third DCI; and/or
the frequency domain resource information of the first data includes an interval between a frequency domain resource for the first data and a frequency domain resource for the second data, or the frequency domain resource information of the first data includes an interval between a frequency domain resource for the first data and a frequency domain resource for the third DCI, where
the interval between the time domain resources is used to determine the time domain resource for the first data, and the interval between the frequency domain resources is used to determine the frequency domain resource for the first data.

In a possible implementation, the third DCI includes time domain resource information and/or frequency domain resource information of the fourth DCI.

In this application, the time domain resource information and the frequency domain resource information of the fourth DCI are dynamically or semi-statically configured in the third DCI, so that the terminal device can correctly receive the fourth DCI based on information configured in the third DCI, and then receive the first data based on the fourth DCI.

In a possible implementation, the time domain resource information of the fourth DCI includes an interval between a time domain resource for the fourth DCI and a time domain resource for the second data, or the time domain resource information of the fourth DCI includes an interval between a time domain resource for the fourth DCI and a time domain resource for the third DCI; and/or
the frequency domain resource information of the fourth DCI includes an interval between a frequency domain resource for the fourth DCI and a frequency domain resource for the second data, or the frequency domain resource information of the fourth DCI includes an interval between a frequency domain resource for the fourth DCI and a frequency domain resource for the third DCI, where
the interval between the time domain resources is used to determine the time domain resource for the fourth DCI, and the interval between the frequency domain resources is used to determine the frequency domain resource for the fourth DCI.

In this application, the time domain resource information and/or the frequency domain resource information of the fourth DCI are indirectly configured, to be specific, the interval between the time domain resource for the fourth DCI and the time domain resource for the second data and/or the interval between the frequency domain resource for the fourth DCI and the frequency domain resource for the second data are configured, so that the terminal device can determine a specific frequency domain resource and/or frequency domain resource for the fourth DCI based on the interval configured in the third DCI and with reference to the time domain resource and/or the frequency domain resource for the second data that are included in the third DCI, to correctly receive the corresponding fourth DCI. Optionally, the terminal device may alternatively determine a specific frequency domain resource and/or frequency domain resource for the fourth DCI based on the interval configured in the third DCI and with reference to the time domain resource and/or the frequency domain resource for the third DCI, to correctly receive the corresponding fourth DCI. Therefore, the first data may be correctly received based on the fourth DCI.

In a possible implementation, one or more of the following intervals are predefined: the interval between the time domain resource for the first data and the time domain resource for the second data, the interval between the time domain resource for the first data and the time domain resource for the third DCI, the interval between the frequency domain resource for the first data and the frequency domain resource for the second data, or the interval between the frequency domain resource for the first data and the frequency domain resource for the third DCI, where the interval between the time domain resources is used to determine the time domain resource for the first data, and the interval between the frequency domain resources is used to determine the frequency domain resource for the first data.

In a possible implementation, the first data includes a first message, and the first message includes the first SIB 1.

In a possible implementation, the first message further includes second indication information, and the second indication information indicates that the first message includes the first SIB 1.

In a possible implementation, the method further includes: sending a master information block MIB to the terminal device, where the MIB includes fourth indication information, and the fourth indication information indicates the network device to send the first SIB 1.

In a possible implementation, the third DCI further includes fourth indication information, and the fourth indication information indicates the network device to send the first SIB 1.

According to a fifth aspect, this application provides a communication apparatus. The apparatus may be a terminal device, and the apparatus includes:
a transceiver unit, configured to receive first downlink control information DCI from a network device, where the first DCI is used to schedule first data; and
a processing unit, configured to determine, based on the first DCI, that the first data includes a first system information block 1 SIB 1, where the first SIB 1 includes information related to network access in a first operation mode, where
the first DCI includes first indication information, and the first indication information indicates that the first data includes the first SIB 1; or one or more of the following information associated with the first DCI is different from that associated with second DCI: scrambling information, downlink control information format DCI format information, time domain resource information, or frequency domain resource information, the second DCI is used to schedule a second SIB 1, and the second SIB 1 includes information related to network access in a second operation mode.

In a possible implementation, the first data includes a first message, and the first message includes the first SIB 1.

In a possible implementation, the first message further includes second indication information, and the second indication information indicates that the first message includes the first SIB 1.

In a possible implementation, the first SIB 1 is associated with a first radio link control RLC entity, or the first SIB 1 is associated with a first logical channel LCH. The first RLC entity is different from a second RLC entity, or the first LCH is different from a second LCH. The second RLC entity is associated with the second SIB 1, and the second LCH is associated with the second SIB 1.

In a possible implementation, the transceiver unit is further configured to obtain third indication information associated with the first message, where the third indication information indicates that the first message includes the first SIB 1.

In a possible implementation, the transceiver unit is specifically configured to obtain, through a radio resource control RRC layer, the third indication information from a physical layer, a media access control MAC layer, a radio link control RLC layer, or a packet data convergence protocol PDCP layer.

In a possible implementation, the transceiver unit is further configured to receive fourth indication information from the network device, where the fourth indication information indicates the network device to send the first SIB 1, and the fourth indication information is carried in a master information block MIB or the second DCI.

In a possible implementation, the transceiver unit is further configured to receive the first data from the network device based on the first DCI.

According to a sixth aspect, this application provides a communication apparatus. The apparatus may be a terminal device, and the apparatus includes: a transceiver unit, configured to receive third downlink control information DCI from a network device, where the third DCI is used to schedule at least two pieces of data, or the third DCI is used to schedule second data and fourth DCI, and the fourth DCI is used to schedule first data. The transceiver unit is configured to receive the first data and/or the second data from the network device based on the third DCI, where the at least two pieces of data include the first data and the second data, the first data includes a first system information block 1 SIB 1, the second data includes a second SIB 1, the first SIB 1 includes information related to network access in a first operation mode, and the second SIB 1 includes information related to network access in a second operation mode.

In a possible implementation, the third DCI includes time domain resource information and/or frequency domain resource information of the first data.

In a possible implementation, the time domain resource information of the first data includes an interval between a time domain resource for the first data and a time domain resource for the second data, or the time domain resource information of the first data includes an interval between a time domain resource for the first data and a time domain resource for the third DCI; and/or
the frequency domain resource information of the first data includes an interval between a frequency domain resource for the first data and a frequency domain resource for the second data, or the frequency domain resource information of the first data includes an interval between a frequency domain resource for the first data and a frequency domain resource for the third DCI, where
the interval between the time domain resources is used to determine the time domain resource for the first data, and the interval between the frequency domain resources is used to determine the frequency domain resource for the first data.

In a possible implementation, one or more of the following intervals are predefined: the interval between the time domain resource for the first data and the time domain resource for the second data, the interval between the time domain resource for the first data and the time domain resource for the third DCI, the interval between the frequency domain resource for the first data and the frequency domain resource for the second data, or the interval between the frequency domain resource for the first data and the frequency domain resource for the third DCI, where the interval between the time domain resources is used to determine the time domain resource for the first data, and the interval between the frequency domain resources is used to determine the frequency domain resource for the first data.

In a possible implementation, the first data includes a first message, and the first message includes the first SIB 1.

In a possible implementation, the first message further includes second indication information, and the second indication information indicates that the first message includes the first SIB 1.

In a possible implementation, the first SIB 1 is associated with a first radio link control RLC entity, or the first SIB 1 is associated with a first logical channel LCH. The first RLC entity is different from a second RLC entity, or the first LCH is different from a second LCH. The second RLC entity is associated with the second SIB 1, and the second LCH is associated with the second SIB 1.

In a possible implementation, the transceiver unit is further configured to obtain third indication information associated with the first message, where the third indication information indicates that the first message includes the first SIB 1.

In a possible implementation, the transceiver unit is further configured to obtain, through a radio resource control RRC layer, the third indication information from a physical layer or a media access control MAC, radio link control RLC, or packet data convergence protocol PDCP layer.

In a possible implementation, the transceiver unit is further configured to receive a master information block MIB from the network device, where the MIB includes fourth indication information, and the fourth indication information indicates the network device to send the first SIB 1.

In a possible implementation, the third DCI further includes fourth indication information, and the fourth indication information indicates the network device to send the first SIB 1.

According to a seventh aspect, this application provides a communication apparatus. The apparatus may be a network device, and the apparatus includes: a processing unit, configured to determine first downlink control information DCI, where the first DCI is used to schedule first data, the first data includes a first system information block 1 SIB 1, and the first SIB 1 includes information related to network access in a first operation mode; and a transceiver unit, configured to send the first DCI to a terminal device, where the first DCI includes first indication information, and the first indication information indicates that the first data includes the first SIB 1; or one or more of the following information associated with the first DCI is different from that associated with second DCI: scrambling information, downlink control information format DCI format information, time domain resource information, or frequency domain resource information, the second DCI is used to schedule a second SIB 1, and the second SIB 1 includes information related to network access in a second operation mode.

In a possible implementation, the first data includes a first message, and the first message includes the first SIB 1.

In a possible implementation, the first message further includes second indication information, and the second indication information indicates that the first message includes the first SIB 1.

In a possible implementation, the transceiver unit is further configured to send fourth indication information to the terminal device, where the fourth indication information indicates the network device to send the first SIB 1, and the fourth indication information is carried in a master information block MIB or the second DCI.

In a possible implementation, the transceiver unit is further configured to send the first data to the terminal device.

According to an eighth aspect, this application provides a communication apparatus. The apparatus may be a network device, and the apparatus includes: a transceiver unit, configured to send third downlink control information DCI to a terminal device, where the third DCI is used to schedule at least two pieces of data, or the third DCI is used to schedule second data and fourth DCI, and the fourth DCI is used to schedule first data. The transceiver unit is configured to send the first data and the second data to the terminal device, where the at least two pieces of data include the first data and the second data, the first data includes a first system information block 1 SIB 1, the second data includes a second SIB 1, the first SIB 1 includes information related to network access in a first operation mode, and the second SIB 1 includes information related to network access in a second operation mode.

In a possible implementation, the third DCI includes time domain resource information and/or frequency domain resource information of the first data.

In a possible implementation, the time domain resource information of the first data includes an interval between a time domain resource for the first data and a time domain resource for the second data, or the time domain resource information of the first data includes an interval between a time domain resource for the first data and a time domain resource for the third DCI; and/or
the frequency domain resource information of the first data includes an interval between a frequency domain resource for the first data and a frequency domain resource for the second data, or the frequency domain resource information of the first data includes an interval between a frequency domain resource for the first data and a frequency domain resource for the third DCI, where
the interval between the time domain resources is used to determine the time domain resource for the first data, and the interval between the frequency domain resources is used to determine the frequency domain resource for the first data.

In a possible implementation, one or more of the following intervals are predefined: the interval between the time domain resource for the first data and the time domain resource for the second data, the interval between the time domain resource for the first data and the time domain resource for the third DCI, the interval between the frequency domain resource for the first data and the frequency domain resource for the second data, or the interval between the frequency domain resource for the first data and the frequency domain resource for the third DCI, where the interval between the time domain resources is used to determine the time domain resource for the first data, and the interval between the frequency domain resources is used to determine the frequency domain resource for the first data.

In a possible implementation, the first data includes a first message, and the first message includes the first SIB 1.

In a possible implementation, the first message further includes second indication information, and the second indication information indicates that the first message includes the first SIB 1.

In a possible implementation, the transceiver unit is further configured to send a master information block MIB to the terminal device, where the MIB includes fourth indication information, and the fourth indication information indicates the network device to send the first SIB 1.

In a possible implementation, the third DCI further includes fourth indication information, and the fourth indication information indicates the network device to send the first SIB 1.

According to a ninth aspect, this application provides a communication apparatus. The apparatus may be a terminal device, an apparatus in a terminal device, or an apparatus that can be used with a terminal device. Alternatively, the communication apparatus may be a chip system. The communication apparatus may perform the method according to the first aspect or the third aspect. A function of the communication apparatus may be implemented by hardware, or may be implemented by hardware executing corresponding software. The hardware or the software includes one or more units or modules corresponding to the function. The unit or the module may be software and/or hardware. For operations performed by the communication apparatus and beneficial effect thereof, refer to the method according to the first aspect or the third aspect and the beneficial effect thereof. Repeated descriptions are omitted.

According to a tenth aspect, this application provides a communication apparatus. The apparatus may be a network device, an apparatus in a network device, or an apparatus that can be used with a network device. Alternatively, the communication apparatus may be a chip system. The communication apparatus may perform the method according to the second aspect or the fourth aspect. A function of the communication apparatus may be implemented by hardware, or may be implemented by hardware executing corresponding software. The hardware or the software includes one or more units or modules corresponding to the function. The unit or the module may be software and/or hardware. For operations performed by the communication apparatus and beneficial effect thereof, refer to the method according to the second aspect or the fourth aspect and the beneficial effect thereof. Repeated descriptions are omitted.

According to an eleventh aspect, this application provides a communication apparatus. The apparatus may be a terminal device. The communication apparatus includes a processor and a transceiver. The processor and the transceiver are configured to execute a computer program or instructions stored in at least one memory to enable the apparatus to implement the method according to either the first aspect or the third aspect.

For another example, the communication apparatus includes a processor, a transceiver, and a memory. The processor, the transceiver, and the memory are coupled to each other. The processor and the transceiver are configured to implement the method according to either the first aspect or the third aspect.

According to a twelfth aspect, this application provides a communication apparatus. The apparatus may be a network device. The communication apparatus includes a processor and a transceiver. The processor and the transceiver are configured to execute a computer program or instructions stored in at least one memory to enable the apparatus to implement the method according to either the second aspect or the fourth aspect.

For another example, the communication apparatus includes a processor, a transceiver, and a memory. The processor, the transceiver, and the memory are coupled to each other. The processor and the transceiver are configured to implement the method according to either the second aspect or the fourth aspect.

According to a thirteenth aspect, this application provides a computer-readable storage medium. The storage medium stores a computer program or instructions. When the computer program or the instructions are executed by a computer, the method according to any one of the first aspect to the fourth aspect is implemented.

According to a fourteenth aspect, this application provides a computer program product including instructions. The computer program product includes computer program code. When the computer program code is run on a computer, the method according to any one of the first aspect to the fourth aspect is implemented.

According to a fifteenth aspect, a chip system is provided. The chip system includes a processor, and may further include a memory, to implement the method according to any one of the first aspect to the fourth aspect or any possible designs thereof. The chip system may include a chip, or may include a chip and another discrete component.

According to a sixteenth aspect, a communication system is provided. The communication system includes the terminal device according to the ninth aspect and the network device according to the tenth aspect.

### BRIEF DESCRIPTION OF DRAWINGS

FIG. 1 is a diagram of a network architecture of a 5G system;
FIG. 2 is a diagram of channel mapping;
FIG. 3 is a diagram of scheduling a SIB 1 and an SI message based on DCI;
FIG. 4 is a diagram of downlink transmission between layers;
FIG. 5 is a diagram of a structure of a MAC PDU;
FIG. 6a is a diagram of delivering, by a MAC layer of a terminal device, first data upward layer by layer according to an embodiment of this application;
FIG. 6b is a diagram of delivering, by a MAC layer of a terminal device, first data to an RRC layer through an RLC layer according to an embodiment of this application;
FIG. 6c is a diagram of directly delivering, by a MAC layer of a terminal device, first data to an RRC layer according to an embodiment of this application;
FIG. 7a is a diagram of delivering, by a PHY layer of a terminal device, first data upward layer by layer according to an embodiment of this application;
FIG. 7b is a diagram of delivering, by a PHY layer of a terminal device, first data to an RRC layer through an RLC layer according to an embodiment of this application;
FIG. 7c is a diagram of directly delivering, by a PHY layer of a terminal device, first data to an RRC layer according to an embodiment of this application;
FIG. 8a is a diagram of receiving, by a terminal device, data and performing processing at each layer according to an embodiment of this application;
FIG. 8b is another diagram of receiving, by a terminal device, data and performing processing at each layer according to an embodiment of this application;
FIG. 9 is a schematic flowchart of a communication method according to an embodiment of this application;
FIG. 10 is a diagram of a scheduling mode according to an embodiment of this application;
FIG. 11 is another schematic flowchart of a communication method according to an embodiment of this application;
FIG. 12 is a diagram of another scheduling mode according to an embodiment of this application;
FIG. 13 is a diagram of another scheduling mode according to an embodiment of this application;
FIG. 14 is a diagram of another scheduling mode according to an embodiment of this application;
FIG. 15 is a diagram of another scheduling mode according to an embodiment of this application;
FIG. 16 is a diagram of another scheduling mode according to an embodiment of this application;
FIG. 17 is a diagram of another scheduling mode according to an embodiment of this application;
FIG. 18 is a diagram of another scheduling mode according to an embodiment of this application;
FIG. 19 is a diagram of another scheduling mode according to an embodiment of this application;
FIG. 20 is a diagram of another scheduling mode according to an embodiment of this application;
FIG. 21 is a diagram of another scheduling mode according to an embodiment of this application;
FIG. 22 is another schematic flowchart of a communication method according to an embodiment of this application;
FIG. 23 is a diagram of a scenario in which a SIB 1 set is scheduled based on sixth DCI according to an embodiment of this application;
FIG. 24 is a diagram of another scenario in which a SIB 1 set is scheduled based on sixth DCI according to an embodiment of this application;
FIG. 25 is a diagram of a structure of a communication apparatus according to an embodiment of this application;
FIG. 26 is a diagram of a structure of another communication apparatus according to an embodiment of this application;
FIG. 27 is a diagram of a structure of another communication apparatus according to an embodiment of this application; and
FIG. 28 is a diagram of a structure of another communication apparatus according to an embodiment of this application.

### DESCRIPTION OF EMBODIMENTS

The following clearly and completely describes technical solutions in embodiments of this application with reference to accompanying drawings in embodiments of this application.

In descriptions of this application, "/" indicates "or", unless otherwise specified. For example, A/B may indicate A or B. The term "and/or" in this specification describes only an association relationship between associated objects and indicates that three relationships may exist. For example, A and/or B may represent the following three cases: Only A exists, both A and B exist, and only B exists. In addition, "at least one" means one or more, and "a plurality of" means two or more. The terms "first", "second", and the like do not limit a quantity or an execution sequence, and the terms "first", "second", and the like do not indicate a definite difference. In this application, the term "example", "for example", or the like is used to give an example, an illustration, or a description. Any embodiment or design scheme described as an "example" or "for example" in this application should not be construed as being more preferred or more advantageous than another embodiment or design scheme. To be precise, the term "example", "for example", or the like is intended to present a related concept in a specific manner.

Technical solutions in embodiments of this application may be applied to various communication systems, for example, a global system for mobile communications (global system for mobile communications, GSM), a code division multiple access (code division multiple access, CDMA) system, a wideband code division multiple access (wideband code division multiple access, WCDMA) system, a general packet radio service (general packet radio service, GPRS) system, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a worldwide interoperability for microwave access (worldwide interoperability for microwave access, WiMAX) communication system, a 5th generation (5th generation, 5G) system or a new radio (new radio, NR) system, and a future communication system. This is not limited herein.

For ease of understanding, in embodiments of this application, a 5G system is used as an example to describe in detail network elements related to this application.

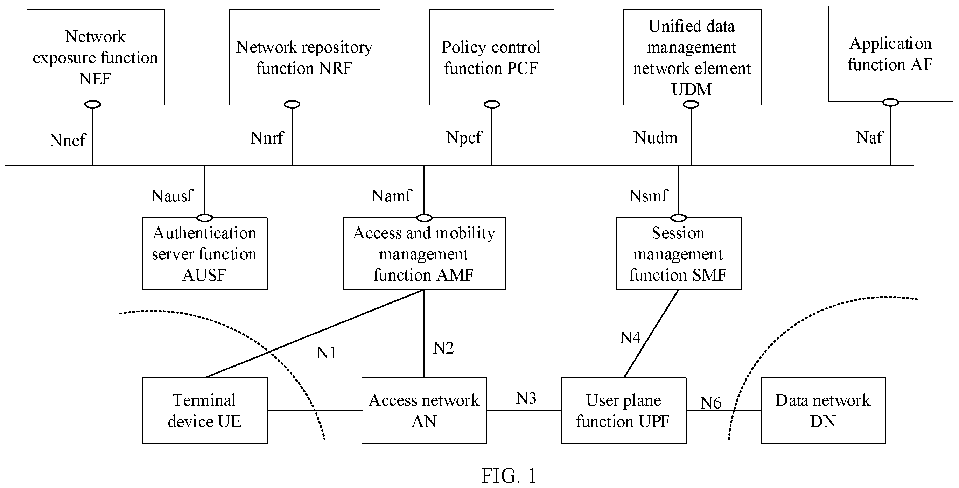

FIG. 1 is a diagram of a network architecture of a 5G system. As shown in FIG. 1, the network architecture may include a terminal device part, a (radio) access network ((radio) access network, (R)AN), a core network (core network, CN), and a data network (data network, DN). The (R)AN (described as a RAN below) is configured to connect the terminal device to a wireless network, and the CN is configured to manage the terminal device and provide a gateway for communication with the DN.

The following separately describes in detail the terminal device, the RAN, the CN, and the DN in FIG. 1.

### 1. Terminal device

The terminal device includes a device that provides voice and/or data connectivity for a user, and may include, for example, a handheld device with a wireless connection function or a processing device connected to a wireless modem. The terminal device may communicate with the core network through the radio access network. The terminal device may include user equipment (user equipment, UE), a wireless terminal device, a mobile terminal device, a device-to-device (device-to-device, D2D) communication terminal device, a vehicle-to-everything (vehicle-to-everything, V2X) terminal device, a machine-to-machine/machine-type communications (machine-to-machine/machine-type communications, M2M/MTC) terminal device, an internet of things (internet of things, IoT) terminal device, a subscriber unit, a subscriber station, a mobile station, a remote station, an access point (access point, AP), a remote terminal, an access terminal, a user terminal, a user agent, a user device, or the like. For example, the terminal device may include a mobile phone (or referred to as a "cellular" phone), a computer with a mobile terminal device, or a portable, pocket-sized, handheld, or computer built-in mobile apparatus, for example, a personal communication service (personal communication service, PCS) phone, a cordless phone, a session initiation protocol (session initiation protocol, SIP) phone, a wireless local loop (wireless local loop, WLL) station, a personal digital assistant (personal digital assistant, PDA), or another device. The terminal device may further include a limited device, for example, a device with low power consumption, a device with a limited storage capability, or a device with a limited computing capability.

### 2. RAN

The RAN may include one or more RAN devices (namely, access network devices), and an interface between the access network device and the terminal device may be a Uu interface (or referred to as an air interface). Certainly, in future communication, names of these interfaces may remain unchanged, or may be replaced with other names. This is not limited in this application.

The access network device is a node or a device that connects the terminal device to a wireless network. For example, the access network device includes but is not limited to a next-generation NodeB (generation NodeB, gNB), an evolved NodeB (evolved NodeB, eNB), a next-generation evolved NodeB (next-generation eNB, ng-eNB), a radio backhaul device, a radio network controller (radio network controller, RNC), a NodeB (NodeB, NB), a base station controller (base station controller, BSC), a base transceiver station (base transceiver station, BTS), a home NodeB ((home evolved NodeB, HeNB) or (home NodeB, HNB)), a baseband unit (baseband unit, BBU), a transmitting and receiving point (transmitting and receiving point, TRP), a transmitting point (transmitting point, TP), and a mobile switching center in a 5G communication system. This is not limited herein.

### 3. CN

The CN may include one or more CN devices. A 5G communication system is used as an example. The CN may include an access and mobility management function (access and mobility management function, AMF) network element, a session management function (session management function, SMF) network element, a user plane function (user plane function, UPF) network element, a policy control function (policy control function, PCF) network element, a unified data management (unified data management, UDM) network element, an application function (application function, AF) network element, and the like.

The AMF network element is a control plane network element provided by an operator network, and is responsible for access control and mobility management for accessing the operator network by the terminal device. For example, the AMF network element includes functions of mobility status management, temporary user identity allocation, user authentication and authorization, and the like.

The SMF network element is a control plane network element provided by the operator network, and is responsible for managing a PDU session of the terminal device. The PDU session is a channel for transmitting a PDU. The terminal device and the DN need to use the PDU session to transmit a PDU to each other. The SMF network element is responsible for establishment, maintenance, deletion, and the like of the PDU session. The SMF network element includes session-related functions such as session management (for example, session establishment, modification, and version, including tunnel maintenance between the UPF and the RAN), selection and control of the UPF network element, service and session continuity (service and session continuity, SSC) mode selection, and roaming.

The UPF network element is a gateway provided by an operator, and is a gateway for communication between the operator network and the DN. The UPF network element includes functions related to a user plane, such as data packet routing and transmission, packet detection, quality of service (quality of service, QoS) processing, lawful interception, uplink packet detection, and downlink data packet storage.

The PCF network element is a control plane function provided by the operator, and is configured to provide a PDU session policy for the SMF network element. The policy may include a charging-related policy, a QoS-related policy, an authorization-related policy, and the like.

The AF network element is a function network element for providing various business services, and can interact with the core network through another network element and interact with a policy management framework to perform policy management.

In addition, although not shown, the CN may further include other possible network elements, for example, a network exposure function (network exposure function, NEF) network element or a unified data repository (unified data repository, UDR) network element.

It should be noted that, in embodiments of this application, the access network device and a core network device may be collectively referred to as a network device.

### 4. DN

The DN may also be referred to as a packet data network (packet data network, PDN), and is a network beyond the operator network. The operator network may access a plurality of DNs. Application servers corresponding to a plurality of services may be deployed in the DN, to provide a plurality of possible services for the terminal device.

Npcf, Nudm, Naf, Namf, Nsmf, N1, N2, N3, N4, and N6 in FIG. 1 are interface sequence numbers. For meanings of these interface sequence numbers, refer to meanings defined in a related standard protocol. This is not limited herein.

It can be understood that the 5G communication system is used as an example for illustration in FIG. 1, and solutions in embodiments of this application are also applicable to other possible communication systems, for example, an LTE communication system or a future 6th generation (the 6th generation, 6G) communication system. The foregoing network elements or functions each may be a network element in a hardware device, a software function running on dedicated hardware, or a virtualized function instantiated on a platform (for example, a cloud platform). Optionally, the foregoing network elements or functions each may be implemented by one device, or may be implemented jointly by a plurality of devices, or may be a functional module in a device. This is not specifically limited in embodiments of this application.

The following describes related technical features in embodiments of this application. It should be noted that the descriptions are intended to make embodiments of this application easier to understand, but should not be construed as a limitation on the protection scope claimed in this application.

### 1. System information (system information, SI)

Currently, the SI may include a master information block (master information block, MIB) and several system information blocks (system information block, SIB). The SI may be classified into two categories: minimum SI (minimum SI, MSI) and other SI (other SI, OSI).

The MSI includes basic information used for initial access and information used for obtaining the OSI. UE needs to receive a MIB and a SIB 1 from a cell to access the cell, in other words, camp on the cell. The MSI includes a MIB and a SIB 1. The MIB includes barred status information of a cell and basic physical layer information, for example, a CORESET#0 configuration, of the cell that is used for further receiving system information. The MIB is periodically broadcast in a broadcast channel (broadcast channel, BCH). The SIB 1 defines scheduling of another type of system information block, and includes information used for initial access. The SIB 1 may also be described as remaining minimum SI (Remaining MSI, RMSI), and is periodically broadcast in a downlink shared channel (downlink shared channel, DL-SCH), or is sent, in a DL-SCH by using dedicated signaling, to UE in a connected state.

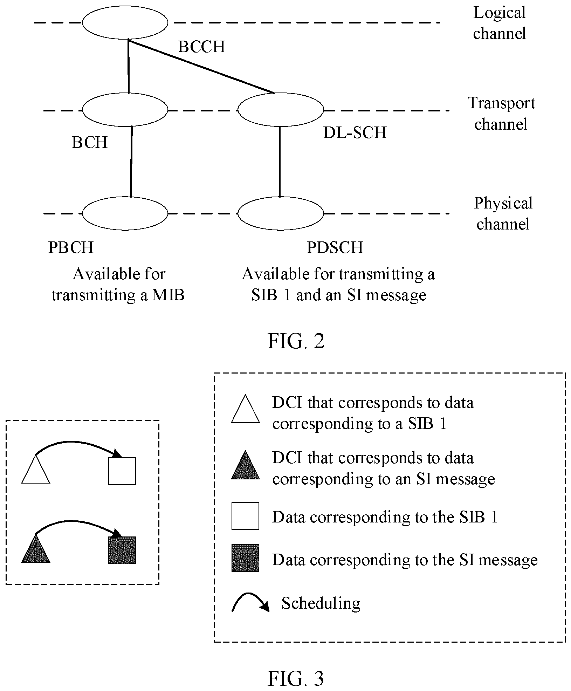

The OSI includes SIBs other than the SIB 1, for example, a SIB 2 to a SIB 14, and more SIBs that may be extended subsequently. These SIBs may be periodically broadcast in the DL-SCH, or broadcast in the DL-SCH in an on-demand manner, or sent, in the DL-SCH by using dedicated signaling, to the UE in the connected state. It should be noted that, for the OSI, SIBs with a same periodicity may be mapped to one SI message (SI message) for sending. For example, FIG. 2 is a diagram of channel mapping. As shown in FIG. 2, currently, a logical channel, a transport channel, and a physical channel that correspond to a MIB are a broadcast control channel (broadcast control channel, BCCH), a broadcast channel (broadcast channel, BCH), and a physical broadcast channel (physical broadcast channel, PBCH) respectively. Currently, a logical channel, a transport channel, and a physical channel that correspond to a SIB 1 or an SI message are a BCCH, a downlink shared channel (downlink shared channel, DL-SCH), and a physical downlink shared channel (physical downlink shared channel, PDSCH) respectively.

### 2. SIB 1

Currently, even if a network device supports functions of a plurality of protocol versions, the network device supports only one SIB 1. To be specific, in a cell, a network device sends only one SIB 1, and all UEs that receive the SIB 1 in the cell receive the same SIB 1 regardless of whether protocol versions supported by the UEs are the same. It should be noted that, that the network device sends only one SIB 1 does not mean that the SIB 1 remains unchanged at any time. The SIB 1 may change. This may be understood as that the network device sends only one SIB 1 within a period of time (for example, within a periodicity of the SIB 1).

### 3. Downlink control information (downlink control information, DCI) for scheduling a SIB 1

Currently, a SIB 1 is transmitted in a PDSCH, and the PDSCH for transmitting the SIB 1 is scheduled by DCI that is scrambled by using a system information-radio network temporary identity (system information radio network temporary identity, SI-RNTI). In addition, a format of the DCI for scheduling the SIB 1 is the same as a format of DCI for scheduling an SI message (to be specific, both are a DCI format 1_0 in a current NR protocol), and scrambling information of the DCI for scheduling the SIB 1 is the same as scrambling information of the DCI for scheduling the SI message (to be specific, both are SI-RNTIs in the current NR protocol, where only one value of the SI-RNTI is supported, and the value of the SI-RNTI is FFFF). A length of the SI-RNTI is 16 bits. In addition, in NR, transmission of the SIB 1 may conflict with transmission of the SI message in time domain. Specifically, the DCI for scheduling the SIB 1 may conflict with the DCI for scheduling the SI message in time domain. For example, from a perspective of a protocol, search spaces of the SIB 1 and the SI message (namely, other system information) are separately configured. That UE determines, based on a search space configuration, an occasion for the UE to monitor a PDCCH may be understood as that the UE determines, based on the search space configuration, a time domain resource on which the UE may obtain the SIB 1 or the SI message through monitoring. It should be noted that the conflict may be understood as overlapping in this application. Herein, the DCI scrambled by using the SI-RNTI is used to schedule the SIB 1 or the SI message, and one bit (to be specific, a system information indicator (system information indicator) field in the NR protocol) in the DCI indicates whether the DCI schedules the SIB 1 or the SI message.

For example, FIG. 3 is a diagram of scheduling a SIB 1 and an SI message based on DCI. As shown in FIG. 3, a network device separately schedules the SIB 1 and the SI message by using two pieces of DCI, or the network device separately schedules data corresponding to the SIB 1 and data corresponding to the SI message by using two pieces of DCI. Formats of the two pieces of DCI are the same. Scrambling information of the two pieces of DCI is the same, and both are SI-RNTIs. After receiving the two pieces of DCI, UE may determine, based on a system information indicator in the DCI, whether the DCI schedules the SIB 1 or the SI message.

It should be noted that, for reception of the SIB 1 and the SI message, transmission of the SIB 1 may conflict with transmission of the SI message in time domain, scrambling information and a DCI format of DCI corresponding to the SIB 1 are the same as those of DCI corresponding to the SI message, and the DCI for scheduling the SIB 1 and the DCI for scheduling the SI message do not include HARQ process ID information; and for reception of the SIB 1 and the SI message, a MAC layer of the UE supports HARQ combined decoding. Therefore, whether DCI schedules the SIB 1 or the SI message needs to be indicated in the DCI. If the indication is not included, the UE may incorrectly perform HARQ combined decoding on the SIB 1 and the SI message that are received separately. This leads to a decoding error.

In LTE, a SIB 1 and an SI message are separately transmitted in time domain. Therefore, in LTE, although one SI-RNTI is still used to schedule the SIB 1 and the SI message, UE may determine, based on time domain information (for example, search space) of DCI, whether the SIB 1 or the SI message is received. Therefore, in LTE, whether DCI schedules the SIB 1 or the SI message does not need to be indicated in the DCI.

In NR, for transmission of different SI messages, SI windows of the SI messages are separated in time domain without overlapping. Therefore, if UE receives two pieces of DCI scrambled by using SI-RNTIs and both indicate that the DCI schedules an SI message, the UE may determine, based on a time domain resource on which DCI is monitored (for example, based on whether the two pieces of DCI belong to a same SI window), whether SI messages scheduled by the two pieces of DCI are a same SI message. If the SI messages scheduled by the two pieces of DCI are a same SI message, HARQ combined decoding may be performed on data corresponding to newly received DCI and previously received data. If the SI messages scheduled by the two pieces of DCI are different SI messages, HARQ decoding needs to be separately performed on the data corresponding to the newly received DCI.

### 4. MAC layer processing and RLC layer processing that correspond to a SIB 1

Currently, a control plane protocol stack may include a NAS, a radio resource control (radio resource control, RRC) layer, a packet data convergence protocol (packet data convergence protocol, PDCP) layer, a radio link control (radio link control, RLC) layer, a media access control (media access control, MAC) layer, and a physical layer (Physical Layer, PHY). A user plane protocol stack may include a service data adaptation protocol (service data adaptation protocol, SDAP) layer, a PDCP layer, an RLC layer, a MAC layer, and a PHY layer.

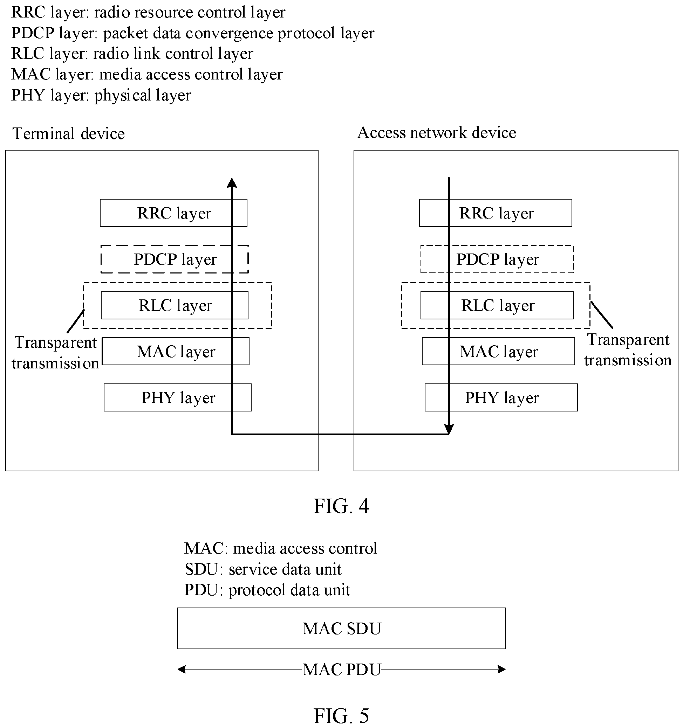

FIG. 4 is a diagram of downlink transmission between layers. In FIG. 4, a down arrow indicates sending, and an up arrow indicates receiving. After generating to-be-transmitted signaling (for example, an RRC message or an RRC PDU), an RRC layer of an access network device may deliver the signaling to a corresponding PDCP entity. For ease of description, the signaling is referred to as or replaced with data below. For data (for example, a PDCP SDU) received from the RRC layer, the PDCP entity may obtain a PDCP PDU through specific processing or without processing, and then deliver the PDCP PDU to an RLC entity corresponding to the PDCP entity. For data (for example, an RLC SDU) received from a PDCP layer, the RLC entity may obtain an RLC PDU through specific processing or without processing, and then deliver the RLC PDU to a corresponding MAC entity. For data (for example, a MAC SDU) received from an RLC layer, the MAC entity may obtain a MAC PDU through specific processing or without processing, and then deliver the MAC PDU to a PHY layer. The PHY layer performs transmission through an air interface. Correspondingly, after receiving data (for example, a transport block (transport block, TB)), a PHY layer of a terminal device delivers the TB to a MAC layer. For data (for example, a TB or a MAC PDU) received from the PHY, a MAC entity may obtain a MAC SDU through specific processing or without processing, and then deliver the MAC SDU to a corresponding RLC layer. For data (for example, an RLC PDU) received from the MAC layer, an RLC entity may obtain an RLC SDU through specific processing or without processing, and then deliver the RLC SDU to a corresponding PDCP entity. For data (for example, a PDCP PDU) received from the RLC layer, the PDCP entity may obtain a PDCP SDU through specific processing or without processing, and then deliver the PDCP SDU to an RRC layer. For data (for example, an RRC message or an RRC PDU) received from a PDCP layer, where the data may also be referred to as signaling, the RRC layer performs RRC decoding or ASN. 1 decoding to determine a meaning of the received data (for example, a bit string (bit string)).

For sending and receiving of data (or signaling), the data may be correspondingly encapsulated/processed at each layer, or may be transparently transmitted. For example, for sending, data received by a layer from an upper layer of the layer is referred to as a service data unit (service data unit, SDU), and data delivered by the layer to a lower layer is referred to as a protocol data unit (protocol data unit, PDU). For the layer, the data received from the upper layer and the data delivered to the lower layer may be the same (for example, the data is transparently transmitted), or may be different (for example, the data delivered to the lower layer is obtained by encapsulating/processing, at the layer, the data received from the upper layer). For example, data received by the PDCP entity from an upper layer is referred to as a PDCP SDU, and data sent by the PDCP entity to a lower layer is referred to as a PDCP PDU; data received by the RLC entity from an upper layer is referred to as an RLC SDU, and data sent by the RLC entity to a lower layer is referred to as an RLC PDU; and data received by the MAC entity from an upper layer is referred to as a MAC SDU, and data sent by the MAC entity to a lower layer is referred to as a MAC PDU. For example, for receiving, data received by a layer from a lower layer of the layer is referred to as a PDU, and data delivered by the layer to an upper layer is referred to as an SDU. For the layer, the data received from the lower layer and the data delivered to the upper layer may be the same (for example, the data is transparently transmitted), or may be different (for example, the data delivered to the upper layer is obtained by processing, at the layer, the data received from the lower layer). For example, data received by the PDCP entity from a lower layer is referred to as a PDCP PDU, and data sent by the PDCP entity to an upper layer is referred to as a PDCP SDU; data received by the RLC entity from a lower layer is referred to as an RLC PDU, and data sent by the RLC entity to an upper layer is referred to as an RLC SDU; and data received by the MAC entity from a lower layer is referred to as a MAC PDU, and data sent by the MAC entity to an upper layer is referred to as a MAC SDU.

The upper layer and the lower layer in embodiments of this application are relative concepts. For example, the RLC layer is used as an example. For the RRC layer, the RLC layer may be a lower layer of the RRC layer. However, for the MAC layer, the RLC layer may be an upper layer of the MAC layer. For another example, a lower layer of the RRC layer may include any one or more of the following: the PHY layer, the MAC layer, the RLC layer, and the PDCP layer.

It should be noted that data (or signaling) is not necessarily sent or received through all the foregoing layers. For example, currently, a SIB 1 and an SI message may not be transmitted through the PDCP layer.

It should be noted that, for the RLC layer, there may be a plurality of transmission modes, for example, TM. For example, currently, the TM is used at the RLC layer for transmission of a SIB 1 and an SI message.

FIG. 5 is a diagram of a structure of a MAC PDU. As shown in FIG. 5, in this embodiment of this application, a MAC PDU format corresponding to a logical channel (namely, a BCCH) and a transport channel (namely, a DL-SCH) for a SIB 1 is transparent MAC (transparent MAC). In other words, the MAC PDU may be used for transmission mapped from the BCCH to the DL-SCH. In other words, transmission at a MAC layer is transparent transmission. To be specific, one MAC PDU includes only one MAC SDU, and the MAC SDU is the same as the MAC PDU.

It should be noted that, currently, for transmission of the SIB 1 and an SI message, UE processes received data (for example, a TB) by using a HARQ process corresponding to broadcast. If the data is newly transmitted, the UE attempts to decode the received data. If the data is retransmitted, the UE attempts to perform combined decoding. If the UE successfully performs decoding, the UE delivers a decoded MAC PDU or MAC SDU to an RLC layer. Because the MAC PDU format corresponding to the SIB 1 is the transparent MAC, content of the MAC PDU is the same as that of the MAC SDU, and the MAC PDU does not need to be disassembled or demultiplexed (disassemble and demultiplex).

As shown in FIG. 4, a transmission mode at the RLC layer may be the TM. To be specific, the TM is used at the RLC layer for BCCH-related transmission. After receiving data (an RLC PDU) from the MAC layer of the UE, the RLC layer of the UE delivers the RLC PDU or an RLC SDU to the RRC layer without any processing.

It should be noted that data or signaling (for example, data corresponding to a SIB 1, or data including a SIB 1) has different names at different layers in a protocol. For example, the data or the signaling is referred to as a TB at a physical layer, is referred to as a MAC PDU or a MAC SDU at a MAC layer, is referred to as an RLC PDU or an RLC SDU at an RLC layer, is referred to as a PDCP PDU or a PDCP SDU at a PDCP layer, and is referred to as RRC signaling, an RRC message, or an RRC PDU at an RRC layer.

### 5. Abstract syntax notation one (Abstract Syntax Notation One, ASN. 1) corresponding to a SIB 1

Currently, a logical channel (BCCH) and a transport channel (DL-SCH) corresponding to a SIB 1 are the same as those corresponding to an SI message. A message (for example, an RRC message, an RRC PDU, an RRC message set, or an RRC message class) corresponding to the logical channel (BCCH) or the transport channel (DL-SCH), or a message (for example, an RRC message, an RRC PDU, an RRC message set, or an RRC message class (for example, class)) transmitted in the logical channel (BCCH) or the transport channel (DL-SCH) may be a broadcast control channel-downlink shared channel-message (broadcast control channel-downlink shared channel-Message, BCCH-DL-SCH-Message). The BCCH-DL-SCH-Message or a message structure (message structure) of the BCCH-DL-SCH-Message may include indication information, to indicate whether the BCCH-DL-SCH-Message includes the SIB 1 or the SI message, so that UE can correctly perform RRC decoding or ASN. 1 decoding. For example, the UE receives DCI scrambled by using an SI-RNTI, and the DCI indicates that data or a PDSCH scheduled by the DCI is or includes the SIB 1. A MAC layer of the UE performs decoding (HARQ combined decoding may be performed). After successfully decoding the data scheduled by the DCI scrambled by using the SI-RNTI, the MAC layer of the UE delivers the data to an RRC layer of the UE. The RRC layer of the UE determines, based on indication information in a received RRC message, RRC PDU, RRC message set, or RRC message class, that the received RRC message, RRC PDU, RRC message set, or RRC message class includes the SIB 1. The UE may decode each bit in the received RRC message based on ASN. 1 of the SIB 1 to obtain correct information. It should be noted that, that the data is delivered to the RRC layer of the UE may be understood as follows: The MAC layer of the UE delivers the data to an RLC layer of the UE, and the RLC layer of the UE delivers the data to the RRC layer of the UE.

### 6. SI message

Currently, a plurality of SIBs with a same periodicity may be mapped to one SI message. A system information message (system information message) or a message definition (message definition) of a system information message (system information message) may include indication information, to indicate specific SIBs included in the RRC message, SI message, or RRC PDU, so that UE can correctly perform RRC decoding or ASN. 1 decoding.

### 7. DCI format

Different DCI formats may correspond to different functions. Different DCI formats may also correspond to different RNTIs.

### 8. Full configuration and delta configuration of a SIB 1

The full configuration is a full configuration or complete configuration mode, and a configuration in this mode may waste resources. The delta configuration is a partial configuration mode, and a new part and/or an upgraded part of a later version relative to a base version are mainly configured in this mode. For example, a terminal device may combine a SIB 1 of the base version with a delta configuration of a SIB 1 of the later version to obtain a complete SIB 1 of the later version.

### 9. Control resource set (control resource set, CORESET)

The CORESET may indicate a frequency domain resource of a control channel and/or a length of a symbol occupied in time domain. The symbol may be an orthogonal frequency division multiplexing (orthogonal frequency division multiplexing, OFDM) symbol.

### 10. Search space (search space, SS)

The search space may indicate time domain resource information of a control channel. The control channel is a physical downlink control channel (physical downlink control channel, PDCCH). The search space includes common search space (common search space, CSS) or user-specific search space (UE specific search space, USS). The common search space may include search space corresponding to a SIB 1, search space corresponding to paging, search space corresponding to other system information, search space corresponding to random access, and the like.

It should be noted that a terminal device may transmit a service by establishing a connection to a network device. Usually, the terminal device may obtain, by receiving a SIB 1 from the network device, information about a network that can be accessed. However, in some cases, the terminal device may fail to access the network. For example, when the terminal device is incompatible with the network device because the network device is successfully upgraded but the terminal device is not successfully upgraded or the terminal device cannot be upgraded, the terminal device may not correctly receive, parse, or decode the SIB 1 sent by the network device, and therefore cannot access the network. For example, in an internet of things (internet of things, IoT) scenario, a large quantity of terminal devices exist, and these terminal devices are characterized by long online time and difficulty in upgrading. If a compatibility problem occurs on a terminal device or a network in this scenario, a large quantity of terminal devices may not be able to access the network, and consequently, a service fails. Therefore, how to resolve a problem that communication reliability is low because a terminal device cannot (normally) access a network or cannot (normally) perform communication becomes one of problems that urgently need to be resolved currently.

Based on this, embodiments of this application provide a communication method. In the method, communication reliability can be improved. It should be noted that solutions in this application are applicable to all scenarios in which two or more SIBs 1 need to be sent, and solutions about how to correctly perform HARQ combination at a MAC layer and how to correctly perform decoding at an RRC layer are universal. In addition, all access-related information in this application is described by using a SIB 1. However, a name of the SIB 1 is not limited in this application. To be specific, solutions in this application are applicable to sending of access-related information. For example, the SIB 1 in this application may be replaced with or understood as information.

It should be noted that, in embodiments of this application, a time domain resource for DCI may be understood as a time domain resource corresponding to the DCI, a frequency domain resource for DCI may be understood as a frequency domain resource corresponding to the DCI, a resource for DCI may be understood as a resource corresponding to the DCI, a time domain resource for data may be understood as a time domain resource corresponding to the data, a frequency domain resource for data may be understood as a frequency domain resource corresponding to the data, and a resource for data may be understood as a resource corresponding to the data. In embodiments of this application, scrambling information of DCI may be understood as scrambling information corresponding to the DCI, format information of DCI may be understood as format information corresponding to the DCI, time domain resource information of DCI may be understood as time domain resource information corresponding to the DCI, and frequency domain resource information of DCI may be understood as frequency domain resource information corresponding to the DCI.

It should be noted that, in embodiments of this application, DCI may schedule data transmitted in a PDSCH, a TB, a MAC PDU, or the like. This is not limited herein. For example, X^{th} data (for example, any one or more of first data, second data, third data, or fourth data) in embodiments of this application may be data transmitted in a PDSCH, a TB, or a MAC PDU. This is not limited herein. Therefore, scheduling information included in DCI may be understood as scheduling information of data, for example, resource information corresponding to the data. In addition, because data includes a SIB 1, that DCI includes scheduling information of data may also be described as that DCI includes scheduling information of a SIB 1 in embodiments of this application. In descriptions of an SI message, DCI used to schedule the SI message may also be described as DCI used to schedule third data, where the third data includes the SI message. In descriptions of a SIB 1 set, DCI used to schedule the SIB 1 set may also be described as DCI used to schedule fourth data, where the fourth data includes the SIB 1 set.

DCI used to schedule a first SIB 1 may also be described as DCI used to schedule first data, where the first data includes the first SIB 1. Correspondingly, DCI used to schedule a second SIB 1 may be described as DCI used to schedule second data, where the second data includes the second SIB 1. To be specific, in embodiments of this application, that "first DCI schedules first data, and the first data includes a first SIB 1" may also be described as that "first DCI is used to schedule a first SIB 1". Correspondingly, in embodiments of this application, that "second DCI schedules second data, and the second data includes a second SIB 1" may also be described as that "second DCI is used to schedule a second SIB 1". In addition, in the following descriptions of an SI message, DCI used to schedule the SI message may also be described as DCI used to schedule third data, where the third data includes the SI message; and in descriptions of a SIB 1 set, DCI used to schedule the SIB 1 set may also be described as DCI used to schedule fourth data, where the fourth data includes the SIB 1 set, and so on This is not limited herein.

It should be noted that, in embodiments of this application, a "time domain resource for DCI" may be understood as a range of a time domain resource for the DCI, search space corresponding to the DCI, a range of a time domain resource on which a terminal device monitors the DCI, or a time domain resource on which the DCI may exist or appear. For example, a network device may separately configure search space corresponding to DCI used to schedule a first SIB 1 and search space corresponding to DCI used to schedule a second SIB 1, and the terminal device receives one or two of the two search space configurations; or a network device may configure a search space configuration parameter corresponding to DCI used to schedule a first SIB 1 and a search space configuration parameter corresponding to DCI used to schedule a second SIB 1, and the terminal device receives the search space configuration parameters, and then determines, according to a predefined or protocol-specified method, search space corresponding to the DCI used to schedule the first SIB 1 and search space corresponding to the DCI used to schedule the second SIB 1. This is not limited in this application.

It should be noted that, in embodiments of this application, a "frequency domain resource for DCI" may be understood as a range of a frequency domain resource for the DCI, a control resource set corresponding to the DCI, a range of a frequency domain resource on which a terminal device monitors the DCI, or a frequency domain resource on which the DCI may exist or appear. For example, a network device may separately configure a control resource set corresponding to DCI used to schedule a first SIB 1 and a control resource set corresponding to DCI used to schedule a second SIB 1, and the terminal device receives one or two of the two control resource set configurations; or a network device may configure a control resource set configuration parameter corresponding to DCI used to schedule a first SIB 1 and a control resource set configuration parameter corresponding to DCI used to schedule a second SIB 1, and the terminal device receives the control resource set configuration parameters, and then determines, according to a predefined or protocol-specified method, a control resource set corresponding to the DCI used to schedule the first SIB 1 and a control resource set corresponding to the DCI used to schedule the second SIB 1. This is not limited in this application.

It should be noted that a monitoring occasion or the search space for the DCI used to schedule the first SIB 1 and a monitoring occasion or the search space for the DCI used to schedule the second SIB 1 may be predefined in a protocol, or may be determined according to a preset rule. For example, total search space for the DCI used to schedule the first SIB 1 and the DCI used to schedule the second SIB 1 may be common search space indicated by a MIB. Apart of the common search space corresponds to the DCI used to schedule the first SIB 1, and a part of the common search space corresponds to the DCI used to schedule the second SIB 1. This is not limited herein.

It should be noted that, in embodiments of this application, that "time domain resources are different" may be understood as that the time domain resources do not overlap; and that "time domain resources are the same" may be understood as that the time domain resources are partially or fully the same or that the time domain resources partially or fully overlap, and the time domain resources are not limited to be completely the same. Correspondingly, for understanding of that "frequency domain resources are different" and that "frequency domain resources are the same", refer to the descriptions of that "time domain resources are different" and that "time domain resources are the same", provided that the "time domain" is replaced with "frequency domain". Details are not described herein again. DCI in this application may be understood as a PDCCH. In embodiments of this application, that "a terminal device determines, based on first data, that the first data includes a first SIB 1" may be understood as follows: The terminal device determines, based on the first data, that a first message includes the first SIB 1; or the terminal device determines, based on a first message, that the first message includes the first SIB 1. Correspondingly, that "a terminal device determines, based on second data, that the second data includes a second SIB 1" may be understood as follows: The terminal device determines, based on the second data, that a second message includes the second SIB 1; or the terminal device determines, based on a second message, that the second message includes the second SIB 1. Correspondingly, that "a terminal device determines, based on fourth data, that the fourth data includes a SIB 1 set" may be understood as follows: The terminal device determines, based on the fourth data, that a fourth message includes the SIB 1 set; or the terminal device determines, based on a fourth message, that the fourth message includes the SIB 1 set.

It should be noted that, in embodiments of this application, the first data includes the first message, or the first message may be the same as the first data, where the first message includes the first SIB 1. Correspondingly, the second data includes the second message, or the second message may be the same as the second data, where the second message includes the second SIB 1. Correspondingly, a third message may be a message included in third data, in other words, the third data includes the third message, or the third message may be the same as the third data, where the third message includes an SI message.

It should be noted that, that the first data includes the first message may be understood as follows: (1) The first data is associated with the first message, and the first message is obtained based on the first data. For example, the first message is obtained through specific processing in a process in which a MAC layer of the terminal device delivers all or some of the first data to an RRC layer through another layer. In this case, a bit of the first message may not match a bit of the first data. For example, an example in which a length of the first data is 100 bits is used for description, and values of the bits of the first data are all 0. A length of the first message may be 90 bits, and values of the bits of the first message may not all be 0. (2) The first data includes a bit of the first message. For example, an example in which a length of the first data is 100 bits is used for description, and values of the bits of the first data are all 0. A length of the first message may be 90 bits, and values of the bits of the first message are also all 0. For example, the first message is 90 least significant bits of the first data. Whether a bit value of the first data is the same as that of the first message is not limited in this application.

Understanding of that the second data includes the second message may be the same as the understanding of that the first data includes the first message, provided that the "first" in the foregoing related descriptions is replaced with "second". Details are not described herein again. Correspondingly, understanding of that the third data includes the third message may be the same as the understanding of that the first data includes the first message, provided that the "first" in the foregoing related descriptions is replaced with "third". Details are not described herein again. Correspondingly, understanding of that the fourth data includes the fourth message may be the same as the understanding of that the first data includes the first message, provided that the "first" in the foregoing related descriptions is replaced with "fourth". Details are not described herein again.

It should be noted that, for an RRC layer, data received from a lower layer may be usually referred to as a message, an RRC message, an RRC PDU, an RRC message set, an RRC message class, or the like. This is not limited herein. For example, for the RRC layer, data (for example, first data) received from a lower layer may be referred to as a first RRC message, a first RRC PDU, a first RRC message set, or a first RRC message class. For another example, for the RRC layer, data (for example, second data) received from a lower layer may be referred to as a second RRC message, a second RRC PDU, a second RRC message set, or a second RRC message class. For another example, for the RRC layer, data (for example, third data) received from a lower layer may be referred to as a third RRC message, a third RRC PDU, a third RRC message set, or a third RRC message class. For another example, for the RRC layer, data (for example, fourth data) received from a lower layer may be referred to as a fourth RRC message, a fourth RRC PDU, a fourth RRC message set, or a fourth RRC message class.

It should be noted that "all or some of first data" in this application may be understood as a first MAC PDU or a first MAC SDU. For example, the first data is the first MAC PDU. In a possible case, a MAC PDU format corresponding to a logical channel and a transport channel that correspond to a first SIB 1 is transparent MAC. Therefore, the first MAC PDU is the same as the first MAC SDU, and a MAC layer of a terminal device needs to deliver all of the first data (namely, the first MAC PDU or the first MAC SDU) to an RRC layer for decoding. For another example, the first data is the first MAC PDU. In a possible case, a MAC PDU format corresponding to a logical channel and a transport channel that correspond to a first SIB 1 is not transparent MAC. Therefore, the first MAC PDU is different from the first MAC SDU, and a MAC layer of a terminal device needs to deliver some of the first data (namely, the first MAC SDU) to an RRC layer for decoding. For ease of description, in this application, "all or some of first data" may be described as "first data". Similarly, for understanding of all or some of second data, third data, or fourth data, refer to the foregoing descriptions of the all or some of first data, provided that the "first" is replaced with "second", "third", or "fourth". Details are not described herein again.

It should be noted that all or some of first data delivered by a MAC layer or a PHY layer of a terminal device may be the same as or different from a first message received by an RRC layer of the terminal device. For example, all or some of the first data may be directly delivered by the MAC layer or the PHY layer of the terminal device to the RRC layer of the terminal device. For another example, all or some of the first data may be transparently transmitted by the MAC layer or the PHY layer of the terminal device to the RRC layer of the terminal device through another layer. For another example, all or some of the first data may be delivered by the MAC layer or the PHY layer of the terminal device to the RRC layer of the terminal device after being processed at another layer.

It should be noted that, in this application, that data or indication information is delivered by a MAC layer or a PHY layer of a terminal device to an RRC layer of the terminal device may be understood as follows: The data or the indication information may be directly delivered by the MAC layer or the PHY layer of the terminal device to the RRC layer of the terminal device; or the data or the indication information may be transparently transmitted by the MAC layer or the PHY layer of the terminal device to the RRC layer of the terminal device through another layer; or the data or the indication information may be delivered by the MAC layer or the PHY layer of the terminal device to the RRC layer of the terminal device after being processed at another layer.

For example, that first data is delivered by a MAC layer or a PHY layer of a terminal device to an RRC layer of the terminal device may be understood as follows: The first data may be directly delivered by the MAC layer or the PHY layer of the terminal device to the RRC layer of the terminal device; or the first data may be transparently transmitted by the MAC layer or the PHY layer of the terminal device to the RRC layer of the terminal device through another layer; or the first data may be delivered by the MAC layer or the PHY layer of the terminal device to the RRC layer of the terminal device after being processed at another layer. Similarly, for understanding of that second data, third data, or fourth data is delivered by a MAC layer or a PHY layer of a terminal device to an RRC layer of the terminal device, refer to the descriptions of the first data, provided that the "first" is replaced with "second", "third", or "fourth". Details are not described herein again. Similarly, for understanding of that third indication information or seventh indication information is delivered by a MAC layer or a PHY layer of a terminal device to an RRC layer of the terminal device, refer to the descriptions of the first data, provided that the "first data" is replaced with "third indication information" or "seventh indication information". Details are not described herein again.

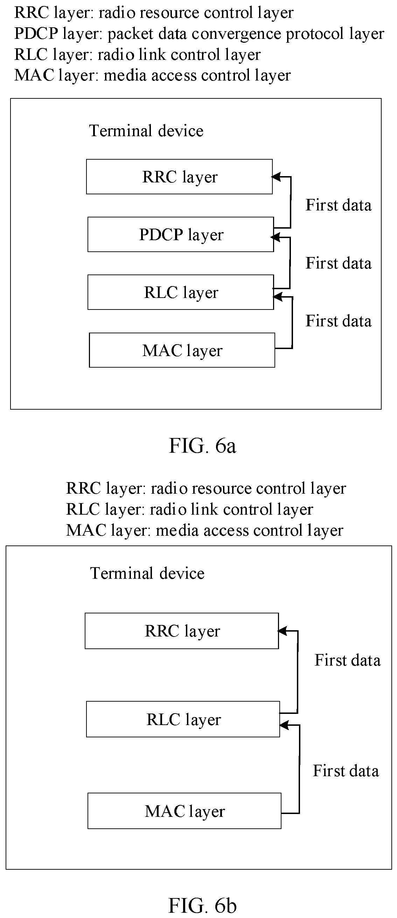

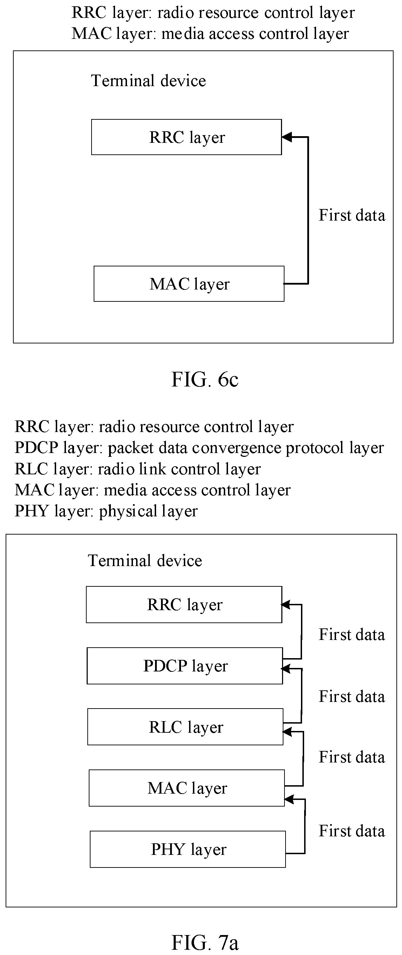

For example, that a MAC layer of a terminal device delivers first data to an RRC layer may be understood as follows: The MAC layer of the terminal device delivers the first data to an RLC layer of the terminal device, the RLC layer delivers the first data to a PDCP layer, and the PDCP layer then delivers the first data to the RRC layer. That is, the MAC layer of the terminal device delivers the first data upward layer by layer (for example, FIG. 6a is a diagram of delivering, by a MAC layer of a terminal device, first data upward layer by layer according to an embodiment of this application). Alternatively, that a MAC layer of a terminal device delivers first data to an RRC layer may be understood as follows: The MAC layer of the terminal device delivers the first data to the RRC layer of the terminal device through either an RLC layer or a PDCP layer (for example, FIG. 6b is a diagram of delivering, by a MAC layer of a terminal device, first data to an RRC layer through an RLC layer according to an embodiment of this application). Alternatively, that a MAC layer of a terminal device delivers first data to an RRC layer may be understood as follows: The MAC layer of the terminal device directly delivers the first data to the RRC layer of the terminal device (for example, FIG. 6c is a diagram of directly delivering, by a MAC layer of a terminal device, first data to an RRC layer according to an embodiment of this application). This is specifically determined based on an actual scenario, and is not limited herein.

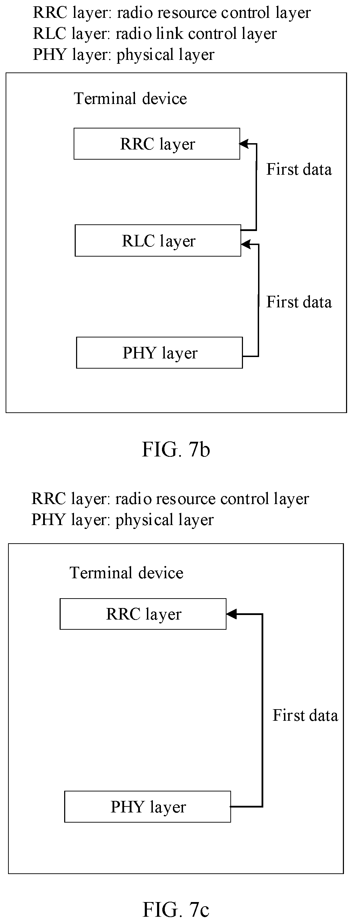

For another example, that a PHY layer of a terminal device delivers first data to an RRC layer may be understood as follows: The PHY layer of the terminal device delivers the first data to a MAC layer of the terminal device, the MAC layer of the terminal device delivers the first data to an RLC layer of the terminal device, and then the RLC layer delivers the first data to a PDCP layer, and finally, the PDCP layer delivers the first data to the RRC layer. That is, the PHY layer of the terminal device delivers the first data upward layer by layer (for example, FIG. 7a is a diagram of delivering, by a PHY layer of a terminal device, first data upward layer by layer according to an embodiment of this application). Alternatively, that a PHY layer of a terminal device delivers first data to an RRC layer may be understood as follows: The PHY layer of the terminal device delivers the first data to the RRC layer of the terminal device through any one or two of a MAC layer, an RLC layer, and a PDCP layer (for example, FIG. 7b is a diagram of delivering, by a PHY layer of a terminal device, first data to an RRC layer through an RLC layer according to an embodiment of this application). Alternatively, that a PHY layer of a terminal device delivers first data to an RRC layer may be understood as follows: The PHY layer of the terminal device directly delivers the first data to the RRC layer of the terminal device (for example, FIG. 7c is a diagram of directly delivering, by a PHY layer of a terminal device, first data to an RRC layer according to an embodiment of this application). This is specifically determined based on an actual scenario, and is not limited herein.

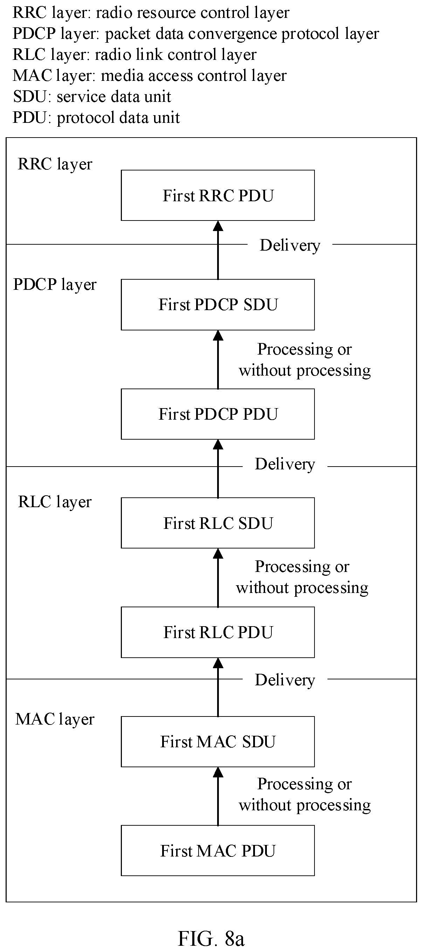

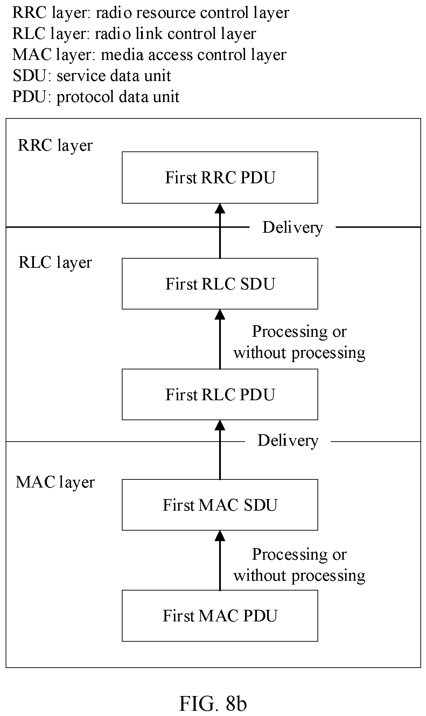

For ease of understanding different descriptions, at different layers, of data scheduled by DCI in embodiments of this application, the following further provides descriptions with reference to FIG. 8a and FIG. 8b.

FIG. 8a is a diagram of receiving, by a terminal device, data and performing processing at each layer according to an embodiment of this application. As shown in FIG. 8a, a terminal device receives first data, where the first data is a first MAC PDU. A MAC layer may obtain a first MAC SDU directly or through specific processing (for example, disassembly and demultiplexing), where the first MAC PDU may be the same as or different from the first MAC SDU. The MAC layer delivers the first MAC SDU to an RLC layer. The RLC layer receives a first RLC PDU, and the RLC layer may obtain a first RLC SDU directly (for example, in the case of transparent transmission) or through specific processing (for example, RLC header removal and/or RLC SDU reassembly), where the first RLC PDU may be the same as or different from the first RLC SDU. The RLC layer delivers the first RLC SDU to a PDCP layer. The PDCP layer receives a first PDCP PDU, and the PDCP layer may obtain a first PDCP SDU directly or through specific processing (for example, any one or more of the following: PDCP header removal, decryption, integrity protection check, reordering, header decompression, and data decompression), where the first PDCP PDU may be the same as or different from the first PDCP SDU. The PDCP layer delivers the first PDCP SDU to an RRC layer. The RRC layer receives a first RRC PDU.

FIG. 8b is another diagram of receiving, by a terminal device, data and performing processing at each layer according to an embodiment of this application. As shown in FIG. 8b, a terminal device receives first data, where the first data is a first MAC PDU. A MAC layer may obtain a first MAC SDU directly or through specific processing (for example, disassembly and demultiplexing), where the first MAC PDU may be the same as or different from the first MAC SDU. The MAC layer delivers the first MAC SDU to an RLC layer. The RLC layer receives a first RLC PDU, and the RLC layer may obtain a first RLC SDU directly (for example, in the case of transparent transmission) or through specific processing (for example, RLC header removal and/or RLC SDU reassembly), where the first RLC PDU may be the same as or different from the first RLC SDU. The RLC layer delivers the first RLC SDU to an RRC layer. The RRC layer receives a first RRC PDU.

It should be noted that, when a layer directly delivers data to another layer, the data delivered by the layer may be the same as data received by the another layer, but the data has different names at different layers. For example, when the MAC layer delivers the first MAC SDU to the RLC layer, the first MAC SDU is the same as the first RLC PDU. For example, when the RLC layer delivers the first RLC SDU to the PDCP layer, the first RLC SDU is the same as the first PDCP PDU. For example, when the PDCP layer delivers the first PDCP SDU to the RRC layer, the first PDCP SDU is the same as the first RRC PDU. For example, when the RLC layer delivers the first RLC SDU to the RRC layer, the first RLC SDU is the same as the first RRC PDU.

It should be noted that, for understanding of processing of second data, third data, or fourth data at each layer, reference may be made to the descriptions of the first data, provided that the "first" is replaced with "second", "third", or "fourth". Details are not described herein again.

It should be noted that, in embodiments of this application, that a first SIB 1 is associated with a first RLC entity may also be described as that a first message is associated with the first RLC entity, or may also be described as that first data is associated with the first RLC entity; and that a first SIB 1 is associated with a first LCH may also be described as that a first message is associated with the first LCH, or may also be described as that first data is associated with the first LCH. Correspondingly, that a second SIB 1 is associated with a second RLC entity may also be described as that a second message is associated with the second RLC entity, or may also be described as that second data is associated with the second RLC entity; and that a second SIB 1 is associated with a second LCH may also be described as that a second message is associated with the second LCH, or may also be described as that second data is associated with the second LCH. Correspondingly, an SI message may be associated with a third RLC entity, or an SI message may be associated with a third LCH. That an SI message is associated with a third RLC entity may also be described as that a third message is associated with the third RLC entity, or may also be described as that third data is associated with the third RLC entity. That an SI message is associated with a third LCH may also be described as that a third message is associated with the third LCH, or may also be described as that third data is associated with the third LCH. For ease of description, in this application, that the first SIB 1 is associated with the first RLC entity or the first SIB 1 is associated with the first LCH is used for description, that the second SIB 1 is associated with the second RLC entity or the second SIB 1 is associated with the second LCH is used for description, and that the SI message is associated with the third RLC entity or the SI message is associated with the third LCH is used for description.

It should be noted that, that DCI schedules a SIB 1 (for example, a first SIB 1 or a second SIB 1), an SI message, or a SIB 1 set may be understood as that the DCI schedules data corresponding to the SIB 1 (for example, the first SIB 1 or the second SIB 1), the SI message, or the SIB 1 set.

Resource information in embodiments of this application may include time domain resource information and/or frequency domain resource information.

It should be noted that "generated" in this application may be understood as "determined". "Configure" and "indicate" in this application may be understood as "include". "Identify" described in this application may be described as "determine". "Understood as" described in this application may be described as "including" or "replaced with". "Carried in" described in embodiments of this application may be described as "implicitly included in". This is not limited herein.

The following describes in detail a communication method and a communication apparatus that are provided in this application.

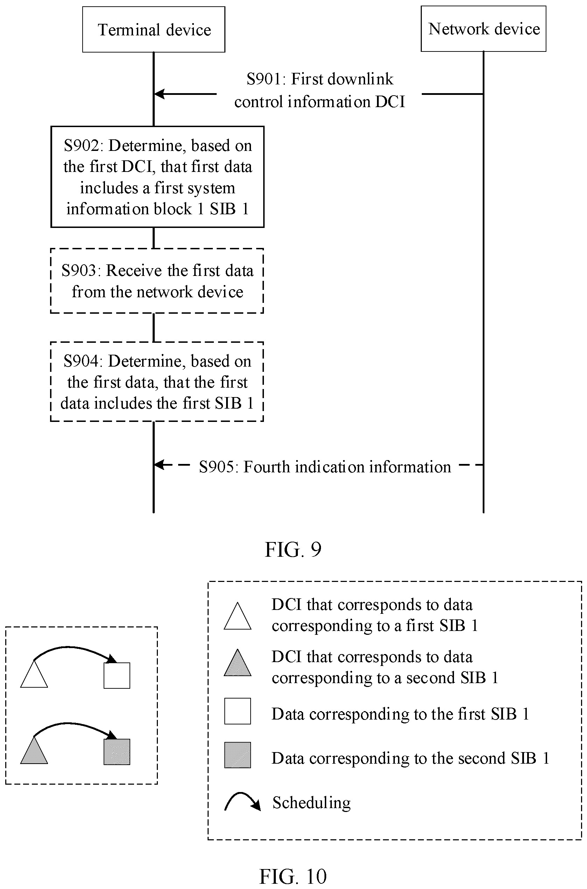

FIG. 9 is a schematic flowchart of a communication method according to an embodiment of this application. As shown in FIG. 9, the communication method includes the following steps S901 to S905.

S901: A terminal device receives first downlink control information DCI from a network device.

Correspondingly, the network device sends the first downlink control information DCI. The first DCI is used to schedule first data, and the first data includes a first SIB 1. The first SIB 1 includes information related to network access in a first operation mode. Alternatively, this is understood as that the first SIB 1 is a SIB 1 related to the first operation mode.

In some feasible implementations, the network device may send at least one piece of DCI, and different DCI may be used to schedule different data. For ease of understanding, in this embodiment of this application, an example in which the at least one piece of DCI sent by the network device includes the first DCI and/or second DCI is mainly used for description. The second DCI is used to schedule second data, and the second data includes a second SIB 1. The second SIB 1 includes information related to network access in a second operation mode. Alternatively, this is understood as that the second SIB 1 is a SIB 1 related to the second operation mode.

Optionally, the at least one piece of DCI sent by the network device may further include fifth DCI. The fifth DCI is used to schedule third data, and the third data includes an SI message. The SI message includes at least one SIB.

It should be noted that the SIB included in the SI message may include any one or more of a SIB 2 to a SIB 14, or may include more SIBs that may be extended subsequently, for example, a SIB 15 and a SIB 16. This is not limited herein.

For example, FIG. 10 is a diagram of a scheduling mode according to an embodiment of this application. As shown in FIG. 10, the network device separately schedules the first SIB 1 and the second SIB 1 by using two pieces of DCI. It can be understood that the network device separately schedules, by using the two pieces of DCI, data corresponding to the first SIB 1 and data corresponding to the second SIB 1.

It should be noted that, in this embodiment of this application, the first operation mode may be a secure mode, and the second operation mode may be a normal mode; or in this embodiment of this application, the first operation mode may be a normal mode, and the second operation mode may be a secure mode. This is not limited herein. The secure mode may be understood as any one or more of the following: a limited operation mode, an operation mode used when a compatibility problem occurs, and an operation mode that can be used to identify and/or resolve a problem. The normal mode may be understood as any one or more of the following: an operation mode used when no compatibility problem occurs.

For example, after accessing a network in the secure mode, the terminal device may perform any one or more of the following processes: problem reporting, problem identification, updating, upgrading, error correction, and the like. For another example, when the terminal device cannot access the network in the normal mode, the terminal device may access the network in the secure mode. For another example, when a compatibility problem occurs on the terminal device, or when a compatibility problem occurs between the terminal device and the network device, the terminal device cannot access the network in the normal mode, and the terminal device may access the network in the secure mode.

It should be noted that, in this embodiment of this application, the secure mode may be understood as a first protocol version, and the normal mode may be understood as a second protocol version. In this embodiment of this application, the first SIB 1 may also be understood as a SIB 1 of the first protocol version, and the second SIB 1 may be understood as a SIB 1 of the second protocol version. The first protocol version may be a base protocol version (referred to as a base version), or may be described as an earlier protocol version (referred to as an earlier version), and the second protocol version may be a later protocol version (referred to as a later version). Alternatively, the first protocol version may be a later version, and the second protocol version may be a base version, an earlier version, or the like. This is not limited herein. A SIB 1 of the base version may be a SIB 1 of 5G R18, a SIB 1 of a first version of 6G, or the like. This is not limited herein. A SIB 1 of the later version may be a SIB 1 in a future communication system or the like. This is not limited herein. The SIB 1 of the base version may be used for communication in the secure mode, or the SIB 1 of the base version may be used for communication in the normal mode. For example, when a terminal device that supports the later protocol version performs normal communication, the terminal device may combine the SIB 1 of the base version with a delta configuration of the SIB 1 of the later version to obtain a complete SIB 1 of the later version, or may use a full configuration of the SIB 1 of the later version. In a possible implementation, information elements of a SIB 1 related to the secure mode and values of the information elements are the same as all or some of information elements of a SIB 1 related to the normal mode and values of the information elements. In another possible implementation, a SIB 1 related to the secure mode and a SIB 1 related to the normal mode may have different configurations, for example, may include different information elements. If the two SIBs 1 include a same information element, the information element may have different values. For ease of understanding, two SIBs 1 (for example, the first SIB 1 and the second SIB 1) are mainly used below as examples for detailed description in this embodiment of this application.

S902: The terminal device determines, based on the first DCI, that the first data includes the first system information block 1 SIB 1.

There are many manners of determining, by the terminal device based on the first DCI, that the first data includes the first SIB 1. The following provides descriptions with reference to implementations 1 to 5. It should be noted that a specific implementation may be performed by a physical layer or a MAC layer of the terminal device, or may be performed by another layer (for example, another newly defined layer). This is not limited in this application.

Implementation 1: The terminal device determines, based on first indication information included in the first DCI, that the first data includes the first SIB 1.

The first indication information indicates a type of a system message scheduled by the first DCI, or indicates a type of a system message included in data scheduled by the first DCI. For ease of description, the "type of a system message" may be referred to as a "system message type". The system message type includes at least one of the first SIB 1, the second SIB 2, or the SI message.

The first indication information may be carried in a first field in the first DCI.

In an implementation, for example, the first indication information may indicate that the first DCI schedules the first SIB 1 or the second SIB 1. Different values of the first field may indicate a specific SIB 1 (for example, the first SIB 1 or the second SIB 1) scheduled by the first DCI, or indicate a specific SIB 1 (for example, the first SIB 1 or the second SIB 1) included in data scheduled by the first DCI. A length of the first field may be one bit, two bits, four bits, or another quantity of bits. This is not limited in this application. Optionally, the first field may be a newly defined field. For example, it is assumed that the length of the first field is one bit. A value of the first field being 0 may indicate that the DCI schedules the first SIB 1, and the value of the first field being 1 may indicate that the DCI schedules the second SIB 1. Alternatively, the value of the first field being 0 may indicate that the DCI schedules the second SIB 1, and the value of the first field being 1 may indicate that the DCI schedules the first SIB 1. This is not limited herein.

Optionally, the first field may alternatively be indicated in a form of a bitmap (bitmap). Each bit in the bitmap corresponds to a system message type, and a value of each bit indicates whether DCI schedules a corresponding type of system message. For example, if the value of the bit is 1, it indicates that the DCI schedules the corresponding type of system message; or if the value of the bit is 0, it indicates that the DCI does not schedule the corresponding type of system message. It should be noted that the system message type corresponding to each bit in the bitmap may be preset in a protocol, or may be configured by a network. This is not limited in this application. For example, a length of the bitmap is two bits, and the 1^{st} bit and the 2^{nd} bit from left to right in the two bits correspond to the first SIB 1 and the second SIB 1 respectively. If a value of the 1^{st} bit is 1, it indicates that the DCI schedules the first SIB 1. If a value of the 1^{st} bit is 0, it indicates that the DCI does not schedule the first SIB 1.

Optionally, if the first indication information indicates that the first DCI schedules the first SIB 1 or the second SIB 1, the first indication information may further perform j oint indication with a second field or tenth indication information (for example, a system information indicator (system information indicator) field), to indicate a specific SIB 1 scheduled by the DCI, or indicate that the SI message is scheduled. Different values of the second field or the tenth indication information may indicate whether the DCI schedules a SIB 1 or the SI message. To be specific, whether the DCI schedules a SIB 1 or the SI message may be first determined based on the second field or the tenth indication information. If it is determined that the DCI schedules a SIB 1, a specific SIB 1 scheduled by the DCI is further determined based on a specific value of the first field or the first indication information in the DCI.

In another implementation, the first indication information may indicate that the first DCI schedules the first SIB 1, the second SIB 1, or the SI message. Different values of the first field may indicate a specific SIB 1 (for example, the first SIB 1 or the second SIB 1) or SI message scheduled by the first DCI, or indicate a specific SIB 1 (for example, the first SIB 1 or the second SIB 1) or SI message included in data scheduled by the first DCI. A length of the first field may be two bits, four bits, or another quantity of bits. This is not limited in this application. For example, it is assumed that the length of the first field is two bits. In this case, a value of the first field being 01 may indicate that the DCI schedules the first SIB 1, the value of the first field being 10 may indicate that the DCI schedules the second SIB 1, and the value of the first field being 00 may indicate that the DCI schedules the SI message. Alternatively, the value of the first field being 01 may indicate that the DCI schedules the first SIB 1, the value of the first field being 10 may indicate that the DCI schedules the second SIB 1, and the value of the first field being 11 may indicate that the DCI schedules the SI message. Examples are not described herein one by one.

Optionally, the first field may alternatively be indicated in a form of a bitmap (bitmap). Each bit in the bitmap corresponds to a system message type, and a value of each bit indicates whether DCI schedules a corresponding type of system message. For example, if the value of the bit is 1, it indicates that the DCI schedules the corresponding type of system message; or if the value of the bit is 0, it indicates that the DCI does not schedule the corresponding type of system message. It should be noted that the system message type corresponding to each bit in the bitmap may be preset in a protocol, or may be configured by a network. This is not limited in this application.

For example, a length of the bitmap is three bits, and the 1^{st} bit, the 2^{nd} bit, and the 3^{rd} bit from left to right in the three bits correspond to the first SIB 1, the second SIB 1, and the SI message respectively. If a value of the 1^{st} bit is 1, it indicates that the DCI schedules the first SIB 1. If a value of the 1^{st} bit is 0, it indicates that the DCI does not schedule the first SIB 1.

Optionally, the first field may be a newly defined field, or may be an extended field, for example, an extended system information indicator field or an extended HARQ process ID field. To be specific, in this embodiment of this application, meanings corresponding to different values of a system information indicator field or a HARQ process ID field in the conventional technology may be extended, so that an extended field can indicate different SIBs 1, for example, the first SIB 1 and the second SIB 1, in addition to the SI message. For ease of description, an example in which the first field is the extended system information indicator field is used for description in this embodiment of this application. The extended system information indicator field may include two bits, three bits, or the like. This is not limited herein.

For ease of understanding, an example in which a length of the extended system information indicator field is two bits is used for description in this embodiment of this application. For example, refer to Table 1. Meanings of different values of the extended system information indicator field may be shown in Table 1. A value of the field being 00 indicates that the DCI schedules the first SIB 1. The value of the field being 01 indicates that the DCI schedules the SI message. The value of the field being 10 indicates that the DCI schedules the second SIB 1. A value 11 of the field may be reserved or used for another purpose. This is not limited in this application. Alternatively, meanings corresponding to different values of the field may be exchanged. This is not limited herein.

**Table 1**

| Value of the field | Meaning |
|---|---|
| 00 | First SIB 1 |
| 01 | SI message |
| 10 | Second SIB 1 |
| 11 | Reserved |

It should be noted that, in the implementation 1, one or more of the following corresponding to DCI (for example, the first DCI) used to schedule the first SIB 1 may be the same as that corresponding to DCI (for example, the second DCI) used to schedule the second SIB 1:
(1) Time domain resources may be the same. Herein, the time domain resource includes a range of a time domain resource on which DCI for scheduling a SIB is monitored, search space, or the like.
(2) Frequency domain resources may be the same. Herein, the frequency domain resource includes a range of a frequency domain resource on which DCI for scheduling a SIB is monitored, a control resource set, or the like.
(3) DCI formats may be the same. For example, the DCI format may be a DCI format 1_0.
(4) Scrambling information of the DCI may be the same. For example, the scrambling information may include an SI-RNTI, where a value of the SI-RNTI may be FFFF.

Implementation 2: The terminal device may determine, based on scrambling information of the first DCI, that the first data includes the first SIB 1.

It can be understood that the terminal device may distinguish, based on scrambling information (for example, RNTIs) of different DCI, between content scheduled by different DCI, or distinguish between types of system messages scheduled by different DCI. For example, the terminal device may determine, based on the scrambling information of the first DCI, that data scheduled by the first DCI includes the first SIB 1. For example, the terminal device determines, based on scrambling information of the second DCI, that data scheduled by the second DCI includes the second SIB 1. The scrambling information of the first DCI is different from the scrambling information of the second DCI.

For example, the scrambling information of the first DCI may be an SI-RNTI, and the scrambling information of the second DCI may be another RNTI (for example, a newly defined RNTI); or the scrambling information of the second DCI may be an SI-RNTI, and the scrambling information of the first DCI may be another RNTI (for example, a newly defined RNTI). This is not limited herein. For another example, the scrambling information of the first DCI may be an RNTI (for example, a newly defined RNTI 1), and the scrambling information of the second DCI may be another RNTI (for example, a newly defined RNTI 2). This is not limited herein. It should be noted that scrambling information of the fifth DCI may be the same as the scrambling information of the first DCI, or the scrambling information of the fifth DCI may be the same as the scrambling information of the second DCI, or the scrambling information of the fifth DCI may be different from both the scrambling information of the first DCI and the scrambling information of the second DCI. This is not limited in this application.

It can be understood that the terminal device may distinguish, based on scrambling information (for example, RNTIs) of different DCI, between content scheduled by different DCI. For example, the terminal device may determine, based on scrambling information of different DCI, whether data scheduled by different DCI includes the first SIB 1 or the second SIB 1. For another example, the terminal device may determine, based on scrambling information of different DCI, whether data scheduled by different DCI includes the first SIB 1, the second SIB 1, or the SI message.

It should be noted that, in the implementation 2, one or more of the following corresponding to DCI (for example, the first DCI) used to schedule the first SIB 1 may be the same as that corresponding to DCI (for example, the second DCI) used to schedule the second SIB 1: a time domain resource, a frequency domain resource, and a DCI format.

Implementation 3: The terminal device may determine, based on a DCI format of the first DCI, that the first data includes the first SIB 1.

It can be understood that the terminal device may distinguish, based on DCI formats of different DCI, between content scheduled by different DCI, or distinguish between types of system messages scheduled by different DCI.

For example, the terminal device may determine, based on the DCI format of the first DCI, that data scheduled by the first DCI includes the first SIB 1. For example, the terminal device determines, based on a DCI format of the second DCI, that data scheduled by the second DCI includes the second SIB 1. The DCI format of the first DCI is different from the DCI format of the second DCI. For example, a format of DCI used to schedule the first SIB 1 may be a DCI format 1_0, and a format of DCI used to schedule the second SIB 1 may be another DCI format (for example, a newly defined DCI format); or a format of DCI used to schedule the second SIB 1 may be a DCI format 1_0, and a format of DCI used to schedule the first SIB 1 may be another DCI format (for example, a newly defined DCI format). For another example, both a format of DCI used to schedule the first SIB 1 and a format of DCI used to schedule the second SIB 1 may be newly defined DCI formats. This is not limited herein.

It should be noted that a DCI format of the fifth DCI may be the same as the DCI format of the first DCI, or the DCI format of the fifth DCI may be the same as the DCI format of the second DCI, or the DCI format of the fifth DCI may be different from both the DCI format of the first DCI and the DCI format of the second DCI. This is not limited in this application.

It can be understood that the terminal device may distinguish, based on DCI formats of different DCI, between content scheduled by different DCI. For example, the terminal device may determine, based on DCI formats of different DCI, whether data scheduled by different DCI includes the first SIB 1 or the second SIB 1. For another example, the terminal device may determine, based on DCI formats of different DCI, whether data scheduled by different DCI includes the first SIB 1, the second SIB 1, or the SI message.

It should be noted that, in the implementation 3, one or more of the following corresponding to the DCI (for example, the first DCI) used to schedule the first SIB 1 may be the same as that corresponding to the DCI (for example, the second DCI) used to schedule the second SIB 1: a time domain resource, a frequency domain resource, and scrambling information of the DCI.

Implementation 4: The terminal device may determine, based on a time domain resource for the first DCI, that the first data includes the first SIB 1.

It can be understood that the terminal device may distinguish, based on time domain resources for different DCI, between content scheduled by different DCI. For example, the terminal device may determine, based on the time domain resource for the first DCI, that data scheduled by the first DCI includes the first SIB 1. For example, the terminal device determines, based on a time domain resource for the second DCI, that data scheduled by the second DCI includes the second SIB 1. The time domain resource for the first DCI is different from the time domain resource for the second DCI.

For example, search space for DCI (namely, the first DCI) used to schedule the first SIB 1 is CSS #0, and search space for DCI (namely, the second DCI) used to schedule the second SIB 1 is CSS #1. It should be noted that a time domain resource for the fifth DCI may be the same as the time domain resource for the first DCI, or the time domain resource for the fifth DCI may be the same as the time domain resource for the second DCI, or the time domain resource for the fifth DCI may be different from both the time domain resource for the first DCI and the time domain resource for the second DCI. This is not limited in this application.

It can be understood that the terminal device may distinguish, based on time domain resources for different DCI, between content scheduled by different DCI. For example, the terminal device may determine, based on time domain resources for different DCI, whether data scheduled by different DCI includes the first SIB 1 or the second SIB 1. For another example, the terminal device may determine, based on time domain resources for different DCI, whether data scheduled by different DCI includes the first SIB 1, the second SIB 1, or the SI message.

It should be noted that, in the implementation 4, one or more of the following corresponding to the DCI (for example, the first DCI) used to schedule the first SIB 1 may be the same as that corresponding to the DCI (for example, the second DCI) used to schedule the second SIB 1: a frequency domain resource, a DCI format, and scrambling information of the DCI.

Implementation 5: The terminal device may determine, based on a frequency domain resource for the first DCI, that the first data includes the first SIB 1.

It can be understood that the terminal device may distinguish, based on frequency domain resources for different DCI, between content scheduled by different DCI. For example, the terminal device may determine, based on the frequency domain resource for the first DCI, that data scheduled by the first DCI includes the first SIB 1. For example, the terminal device determines, based on a frequency domain resource for the second DCI, that data scheduled by the second DCI includes the second SIB 1. The frequency domain resource for the first DCI is different from the frequency domain resource for the second DCI. For example, a control resource set for DCI used to schedule the first SIB 1 is a CORESET #0, and a control resource set for DCI used to schedule the second SIB 1 is a CORESET #1.

It should be noted that a frequency domain resource for the fifth DCI may be the same as the frequency domain resource for the first DCI, or the frequency domain resource for the fifth DCI may be the same as the frequency domain resource for the second DCI, or the frequency domain resource for the fifth DCI may be different from both the frequency domain resource for the first DCI and the frequency domain resource for the second DCI. This is not limited in this application.

It can be understood that the terminal device may distinguish, based on frequency domain resources for different DCI, between content scheduled by different DCI. For example, the terminal device may determine, based on frequency domain resources for different DCI, whether data scheduled by different DCI includes the first SIB 1 or the second SIB 1. For another example, the terminal device may determine, based on frequency domain resources for different DCI, whether data scheduled by different DCI includes the first SIB 1, the second SIB 1, or the SI message.

It should be noted that, in the implementation 5, one or more of the following corresponding to the DCI (for example, the first DCI) used to schedule the first SIB 1 may be the same as that corresponding to the DCI (for example, the second DCI) used to schedule the second SIB 1: a time domain resource, a DCI format, and scrambling information of the DCI.

It should be noted that the foregoing five implementations may be combined with each other, or may be implemented independently. This is not limited in this application. It should be noted that the implementation 2, the implementation 3, the implementation 4, and the implementation 5 may occur before the terminal device receives, successfully receives, or monitors the DCI. This is specifically determined based on an actual application scenario, and is not limited herein. For example, in the implementation 2, the implementation 3, the implementation 4, and the implementation 5, that the terminal device receives the one or more pieces of DCI may be understood as that the terminal device monitors the one or more pieces of DCI.

It should be noted that step S902 may be performed before step S901 or after step S901. This is not limited in this application. For example, in the implementation 2, the implementation 3, the implementation 4, and the implementation 5, step S902 may be performed before step S901. For another example, in the implementation 1, step S902 may be performed after step S901.

In any one or more of the five implementations in step S902, the terminal device may determine content included in data scheduled by DCI. This ensures that the terminal device can correctly perform HARQ combined decoding, and helps improve transmission reliability.

S903: The terminal device receives the first data from the network device.

It should be noted that the terminal device may receive the first data from the network device based on the first DCI. Specifically, the terminal device may receive the first data from the network device based on scheduling information included in the first DCI.

S904: The terminal device determines, based on the first data, that the first data includes the first SIB 1.

After the terminal device receives the first data from the network device based on the first DCI, the terminal device may further decode (for example, ASN. 1 decoding), based on the first data, content included in the first data. Specifically, the terminal device may identify the content included in the first data in any one or more of the following implementation (1) to implementation (3), and then decode the identified content according to a decoding scheme corresponding to the identified content. The three implementations may be understood as being performed at an RRC layer of the terminal device, or may be performed at another layer (for example, another newly defined layer). This is not limited herein. To be specific, after successfully receiving the first data, a MAC layer, a PHY layer, or another newly defined layer of the terminal device may deliver all or some of the first data to the RRC layer or another layer (for example, another newly defined layer) of the terminal device, and then the first data is decoded at the RRC layer or the another layer (for example, the another newly defined layer) of the terminal device. The following separately describes the implementation (1) to the implementation (3) in detail.

In the implementation (1), the first data or a first message may include second indication information, and the second indication information indicates that the first data or the first message includes the first SIB 1.

The second indication information may be carried in the first data or the first message sent by the network device to the terminal device, and the second indication information indicates a type of a system message, namely, a system message type, included in the first data or the first message. The system message type includes at least one of the first SIB 1, the second SIB 2, or the SI message.

The second indication information may be carried in a third field in the first data or the first message.

In an implementation, for example, the first indication information may indicate that the first data or the first message includes the first SIB 1 or the second SIB 1. Different values of the first field may indicate a specific SIB 1 (for example, the first SIB 1 or the second SIB 1) included in the first data or the first message. A length of the first field may be one bit, two bits, four bits, or another quantity of bits. This is not limited in this application. For example, it is assumed that the length of the first field is one bit. A value of the first field being 0 may indicate that the first data or the first message includes the first SIB 1, and the value of the first field being 1 may indicate that the first data or the first message includes the second SIB 1. Alternatively, the value of the first field being 0 may indicate that the first data or the first message includes the second SIB 1, and the value of the first field being 1 may indicate that the first data or the first message includes the first SIB 1. This is not limited herein.

Optionally, the first field may alternatively be indicated in a form of a bitmap (bitmap). Each bit in the bitmap corresponds to a system message type, and a value of each bit indicates whether the first data or the first message includes a corresponding type of system message. For example, if the value of the bit is 1, it indicates that the first data or the first message includes the corresponding type of system message; or if the value of the bit is 0, it indicates that the first data or the first message does not include the corresponding type of system message. It should be noted that the system message type corresponding to each bit in the bitmap may be preset in a protocol, or may be configured by a network. This is not limited in this application. For example, a length of the bitmap is two bits, and the 1^{st} bit and the 2^{nd} bit from left to right in the two bits correspond to the first SIB 1 and the second SIB 1 respectively. If a value of the 1^{st} bit is 1, it indicates that the first data or the first message includes the first SIB 1. If a value of the 1^{st} bit is 0, it indicates that the first data or the first message does not include the first SIB 1.

Optionally, if the first indication information indicates that the first data or the first message includes the first SIB 1 or the second SIB 1, the first indication information may further perform joint indication with a fourth field or eleventh indication information, to indicate a specific SIB 1 included in the first data or the first message, or indicate that the SI message is scheduled. Different values of the fourth field or the eleventh indication information may indicate whether the first data or the first message includes a SIB 1 or the SI message. To be specific, whether the first data or the first message includes a SIB 1 or the SI message may be first determined based on the fourth field or the eleventh indication information. If it is determined that the first data or the first message includes a SIB 1, a specific SIB 1 included in the first data or the first message is further determined based on a specific value of the first field or the first indication information in the DCI.

In another implementation, the first indication information may indicate that the first data or the first message includes the first SIB 1, the second SIB 1, or the SI message. Different values of the first field may indicate a specific SIB 1 (for example, the first SIB 1 or the second SIB 1) or SI message included in the first data or the first message. A length of the first field may be two bits, four bits, or another quantity of bits. This is not limited in this application. For example, it is assumed that the length of the first field is two bits. In this case, a value of the first field being 01 may indicate that the first data or the first message includes the first SIB 1, the value of the first field being 10 may indicate that the first data or the first message includes the second SIB 1, and the value of the first field being 00 may indicate that the first data or the first message includes the SI message. Alternatively, the value of the first field being 01 may indicate that the first data or the first message includes the first SIB 1, the value of the first field being 10 may indicate that the first data or the first message includes the second SIB 1, and the value of the first field being 11 may indicate that the first data or the first message includes the SI message. Examples are not described herein one by one.

Optionally, the first field may alternatively be indicated in a form of a bitmap (bitmap). Each bit in the bitmap corresponds to a system message type, and a value of each bit indicates whether the first data or the first message includes a corresponding type of system message. For example, if the value of the bit is 1, it indicates that the first data or the first message includes the corresponding type of system message; or if the value of the bit is 0, it indicates that the first data or the first message does not include the corresponding type of system message. It should be noted that the system message type corresponding to each bit in the bitmap may be preset in a protocol, or may be configured by a network. This is not limited in this application. For example, a length of the bitmap is three bits, and the 1^{st} bit, the 2^{nd} bit, and the 3^{rd} bit from left to right in the three bits correspond to the first SIB 1, the second SIB 1, and the SI message respectively. If a value of the 1^{st} bit is 1, it indicates that the first data or the first message includes the first SIB 1. If a value of the 1^{st} bit is 0, it indicates that the first data or the first message does not include the first SIB 1.

In the implementation (2), the terminal device obtains third indication information associated with a first message.

That "the terminal device obtains third indication information associated with a first message" may be understood as follows: The RRC layer of the terminal device obtains, from a bottom layer of the terminal device, the third indication information associated with the first message. The third indication information indicates a type of a system message, namely, a system message type, included in the first data or the first message. The system message type includes at least one of the first SIB 1, the second SIB 2, or the SI message.

The "bottom layer of the terminal device" may include any one of the following: the PHY layer of the terminal device, the MAC layer of the terminal device, an RLC layer of the terminal device, or a PDCP layer of the terminal device. Herein, the bottom layer of the terminal device may deliver, layer by layer, the third indication information to the RRC layer, or deliver the third indication information to the RRC layer through one or more layers between the bottom layer of the terminal device and the RRC layer of the terminal device, or the bottom layer of the terminal device directly delivers the third indication information to the RRC layer of the terminal device.

It can be understood that the RRC layer of the terminal device not only obtains the first message, but also obtains the third indication information associated with the first message. The RRC layer of the terminal device may determine, based on the third indication information, the type of the system message included in the first data or the first message. It should be noted that an implementation of obtaining the first message by the RRC layer of the terminal device may be the same as or different from an implementation of obtaining the third indication information by the RRC layer of the terminal device. This is not limited in this application.

It should be noted that the third indication information may not be included in the first data. For example, the third indication information may be generated by the terminal device based on DCI (for example, information of the first DCI). For example, if the third indication information is generated by the PHY layer of the terminal device, the third indication information may not be included in the first data. Alternatively, the third indication information may be included in the first data, for example, included in any one of the following corresponding to the first data: a MAC subheader of a first MAC PDU, an RLC header of a first RLC PDU, or a PDCP header of a first PDCP PDU. For example, if the third indication information is generated by the MAC layer of the terminal device, the third indication information may be included in a MAC subheader (for example, the MAC subheader of the first MAC PDU). If the third indication information is generated by the RLC layer of the terminal device, the third indication information may be included in an RLC header (for example, the RLC header of the first RLC PDU). If the third indication information is generated by the PDCP layer of the terminal device, the third indication information may be included in a PDCP header (for example, the PDCP header of the first PDCP PDU).

It should be noted that, during actual implementation, a specific representation form of the third indication information may be the first indication information obtained based on the first DCI, information extracted from the first indication information, or the like. This is not limited herein. Therefore, the RRC layer of the terminal device may determine, based on the received third indication information, that the first data or the first message includes the first SIB 1. Alternatively, a specific representation form of the third indication information may be information obtained from scrambling information of DCI, or may be scrambling information of DCI, or the like. This is not limited herein. Alternatively, a specific representation form of the third indication information may be information obtained from a DCI format, or may be a DCI format, or the like. This is not limited herein. Alternatively, a specific representation form of the third indication information may be information obtained from a monitoring occasion, search space, or a time domain resource for DCI, or may be a monitoring occasion, search space, or a time domain resource for DCI. This is not limited herein. Alternatively, a specific representation form of the third indication information may be information obtained from a frequency domain resource or a control resource set for DCI, or may be a frequency domain resource on which DCI is monitored, a control resource set, or the like. This is not limited herein.

Optionally, in the implementation (1) and/or the implementation (2), the first SIB 1 and the second SIB 1 may correspond to a same logical channel and/or a same RLC entity. It should be noted that the SI message and either or both of the first SIB 1 and the second SIB 1 may correspond to a same logical channel and/or a same RLC entity. This is not limited in this application.

In the implementation (3), the first SIB 1 may be associated with a first RLC entity, or the first SIB 1 may be associated with a first logical channel LCH, a second RLC entity is associated with the second SIB 1, and a second LCH is associated with the second SIB 1. The first RLC entity is different from the second RLC entity, and the first LCH is different from the second LCH.

Therefore, the terminal device (for example, the RRC layer or another layer of the terminal device) may determine, based on LCHs or RLC entities associated with different data or messages, content included in received data or a received message. For example, the terminal device may determine, based on the first LCH or the first RLC entity associated with the first data, that the first data includes the first SIB 1. For another example, it is determined, based on the second LCH or the second RLC entity associated with the second data, that the second data includes the second SIB 1. For another example, it is determined, based on a third LCH or a third RLC entity associated with the third data, that the third data includes the SI message.

For example, the first SIB 1 may correspond to a logical channel (namely, a BCCH) in the conventional technology, and the second SIB 1 may correspond to another logical channel (for example, a newly defined logical channel 1); or the second SIB 1 corresponds to a logical channel (namely, a BCCH) in the conventional technology, and the first SIB 1 may correspond to another logical channel (for example, a newly defined logical channel 1). This is not limited herein.

It should be noted that the third RLC entity may be different from both the first RLC entity and the second RLC entity; or the third RLC entity may be the same as both the first RLC entity and the second RLC entity, or may be the same as one of the first RLC entity and the second RLC entity. This is not limited herein. Alternatively, this may be described as follows: The third LCH may be different from both the first LCH and the second LCH, or the third LCH may be the same as all or some of the first LCH and the second LCH. This is not limited herein. Optionally, if the third LCH is the same as all or some of the first LCH and the second LCH, or if the third RLC entity is the same as all or some of the first RLC entity and the second RLC entity, whether an RRC message (for example, the first message) includes the SI message or the first SIB 1, whether an RRC message (for example, the first message) includes the SI message or the second SIB 1, or whether an RRC message (for example, the first message) includes the SI message, the first SIB 1, or the second SIB 1 needs to be further determined according to the implementation (1) or the implementation (2).

It should be noted that any one or more of the implementation 1 to the implementation 5 may be combined with any one or more of the implementation (1) to the implementation (3). This is not limited herein.

For example, the implementation 1 and the implementation (1) are used as examples. The terminal device monitors a PDCCH scrambled by using an SI-RNTI. The terminal device receives DCI scrambled by using an SI-RNTI. The terminal device determines, based on that a system information indicator field included in the DCI is 0, that the DCI schedules a SIB 1. The terminal device determines, based on first indication information included in the DCI, that the SIB 1 scheduled by the DCI is the first SIB 1. The terminal device performs decoding by using a HARQ process corresponding to broadcast. If the decoding succeeds, the MAC layer of the terminal device delivers, through the RLC layer, data to the RRC layer of the terminal device for processing. If the decoding fails, the terminal device re-receives another piece of DCI scrambled by using an SI-RNTI, and the re-received DCI also indicates that the DCI schedules the first SIB 1. The terminal device may perform combined decoding on data received this time and data received last time. If the decoding succeeds, similarly, the MAC layer of the terminal device delivers, through the RLC layer, data to the RRC layer of the terminal device for processing. The RRC layer determines, based on second indication information included in an RRC message, that the RRC message includes the first SIB 1, and then may perform RRC decoding by using ASN.1 of the first SIB 1.

For another example, MAC layer processing and RRC layer processing are performed according to the implementation 1 and the implementation (2) respectively. The terminal device monitors a PDCCH scrambled by using an SI-RNTI. The terminal device receives DCI scrambled by using an SI-RNTI. The terminal device determines, based on that a system information indicator field included in the DCI is 0, that the DCI schedules a SIB 1 (in the conventional technology). The terminal device determines, based on first indication information included in the DCI, that the SIB 1 scheduled by the DCI is the first SIB 1. The terminal device performs decoding by using a HARQ process corresponding to broadcast. If the decoding succeeds, the MAC layer of the terminal device delivers data to an upper layer (the RRC layer) of the terminal device. If the decoding fails, the terminal device re-receives another piece of DCI scrambled by using an SI-RNTI, and the re-received DCI also indicates that the DCI schedules the first SIB 1. The terminal device may perform combined decoding on data received this time and data received last time. If the decoding succeeds, similarly, the MAC layer of the terminal device delivers data to an upper layer (the RRC layer) of the terminal device. The RRC layer may determine, based on third indication information received from the MAC layer, that the RRC message includes the first SIB 1, and then may perform RRC decoding by using ASN.1 of the first SIB 1.

For example, the implementation 1 and the implementation (3) are used as examples. The terminal device monitors a PDCCH scrambled by using an SI-RNTI. The terminal device receives DCI scrambled by using an SI-RNTI. The terminal device determines, based on that a system information indicator field included in the DCI is 0, that the DCI schedules a SIB 1. The terminal device determines, based on first indication information included in the DCI, that the SIB 1 scheduled by the DCI is the first SIB 1. The terminal device performs decoding by using a HARQ process corresponding to broadcast. If the decoding succeeds, the MAC layer of the terminal device delivers data to the RRC layer of the terminal device through the RLC layer. If the decoding fails, the terminal device re-receives another piece of DCI scrambled by using an SI-RNTI, and the re-received DCI also indicates that the DCI schedules the first SIB 1. The terminal device may perform combined decoding on data received this time and data received last time. If the decoding succeeds, similarly, the MAC layer of the terminal device delivers data to the RRC layer of the terminal device through the RLC layer. The RRC layer can determine, by receiving data from an RLC entity corresponding to the first SIB 1, that the RRC message includes the first SIB 1, and then may perform RRC decoding by using ASN.1 of the first SIB 1.

It can be understood that other combinations between the implementation 2 to the implementation 5 and the implementation (1) to the implementation (3) are not described herein one by one by using examples.

Optionally, in some feasible implementations, in a scenario with three or more SIBs 1, to be specific, in a scenario in which the network device may send more SIBs 1 (for example, a third SIB 1 and a fourth SIB 1) in addition to the first SIB 1 and the second SIB 1, similar to the foregoing descriptions of the first SIB 1 and the second SIB 1, for decoding by the terminal device (for example, the MAC layer, the PHY layer, or another layer of the terminal device), similarly, different SIBs 1 may be distinguished based on any one or more of first indication information or a first field in DCI, scrambling information of DCI, a DCI format, a time domain resource for DCI, or a frequency domain resource for DCI. Correspondingly, for decoding by the terminal device (or the RRC layer or another layer of the terminal device), different SIBs 1 may also be distinguished based on any one or more of second indication information, third indication information, or a logical channel (or an RLC entity).

For example, it is assumed that there are four SIBs 1: a SIB 1 corresponding to a version N, a SIB 1 corresponding to a version N+1, a SIB 1 corresponding to a version N+2, and a SIB 1 corresponding to a version N+3. The SIB 1 corresponding to the version N is a SIB 1 of an earlier version. The SIB 1 corresponding to the version N+1, the SIB 1 corresponding to the version N+2, and the SIB 1 corresponding to the version N+3 are all SIBs 1 of later versions. For decoding by the terminal device (for example, the MAC layer, the PHY layer, or another layer of the terminal device):

In the implementation 1, if first indication information in DCI is used to distinguish between different SIBs 1, the following may be defined: A value of a first field used to carry the first indication information being 0000 indicates the SIB 1 corresponding to the version N, the value of the first field being 0001 indicates the SIB 1 corresponding to the version N+1, the value of the first field being 0010 indicates the SIB 1 corresponding to the version N+2, and the value of the first field being 0011 indicates the SIB 1 corresponding to the version N+3. Therefore, the terminal device may determine, based on a specific value of the first field in the DCI, a specific SIB 1 scheduled by the DCI.

In the implementation 2, if scrambling information of DCI is used to distinguish between SIBs 1 of different versions, the following may be defined: Scrambling information of DCI used to schedule the SIB 1 corresponding to the version N is a newly defined RNTI 1, scrambling information of DCI used to schedule the SIB 1 corresponding to the version N+1 is a newly defined RNTI 2, scrambling information of DCI used to schedule the SIB 1 corresponding to the version N+2 is a newly defined RNTI 3, and scrambling information of DCI used to schedule the SIB 1 corresponding to the version N+3 is a newly defined RNTI 4. Therefore, the terminal device may determine, based on the scrambling information of the DCI, a specific SIB 1 scheduled by the DCI.

In the implementation 3, if DCI formats are used to distinguish between SIBs 1 of different versions, the following may be defined: A format of DCI used to schedule the SIB 1 corresponding to the version N is a newly defined format 1, a format of DCI used to schedule the SIB 1 corresponding to the version N+1 is a newly defined format 2, a format of DCI used to schedule the SIB 1 corresponding to the version N+2 is a newly defined format 3, and a format of DCI used to schedule the SIB 1 corresponding to the version N+3 is a newly defined format 4. Therefore, the terminal device may determine, based on the format of the DCI, a specific SIB 1 scheduled by the DCI.

In the implementation 4, if time domain resources for DCI are used to distinguish between SIBs 1 of different versions, the following may be defined: A time domain resource for DCI used to schedule the SIB 1 corresponding to the version N may be a time domain resource 1, a time domain resource for DCI used to schedule the SIB 1 corresponding to the version N+1 may be a time domain resource 2, a time domain resource for DCI used to schedule the SIB 1 corresponding to the version N+2 may be a time domain resource 3, and a time domain resource for DCI used to schedule the SIB 1 corresponding to the version N+3 may be a time domain resource 4. The time domain resource 1 to the time domain resource 4 are different from each other. Therefore, the terminal device may determine, based on the time domain resource for the DCI, a specific SIB 1 scheduled by the DCI.

In the implementation 5, if frequency domain resources for DCI are used to distinguish between SIBs 1 of different versions, the following may be defined: A frequency domain resource for DCI used to schedule the SIB 1 corresponding to the version N may be a frequency domain resource 1, a frequency domain resource for DCI used to schedule the SIB 1 corresponding to the version N+1 may be a frequency domain resource 2, a frequency domain resource for DCI used to schedule the SIB 1 corresponding to the version N+2 may be a frequency domain resource 3, and a frequency domain resource for DCI used to schedule the SIB 1 corresponding to the version N+3 may be a frequency domain resource 4. The frequency domain resource 1 to the frequency domain resource 4 are different from each other. Therefore, the terminal device may determine, based on the frequency domain resource for the DCI, a specific SIB 1 scheduled by the DCI.

For decoding by the terminal device (for example, the RRC layer or another layer of the terminal device):
In the implementation (1), if second indication information included in data is used to distinguish between different SIBs 1, the following may be defined: A value of a third field used to carry the second indication information being 0000 indicates the SIB 1 corresponding to the version N, the value of the field being 0001 indicates the SIB 1 corresponding to the version N+1, the value of the field being 0010 indicates the SIB 1 corresponding to the version N+2, and the value of the field being 0011 indicates the SIB 1 corresponding to the version N+3. Therefore, the terminal device may determine, based on a specific value of the third field included in the data, a specific SIB 1 included in the data.

In the implementation (2), if third indication information is used to distinguish between SIBs 1 of different versions, different meanings corresponding to different values of a field used to carry the third indication information may be predefined, to indicate a specific SIB 1 included in the data. For example, a value of the field being 0000 indicates the SIB 1 corresponding to the version N, the value of the field being 0001 indicates the SIB 1 corresponding to the version N+1, the value of the field being 0010 indicates the SIB 1 corresponding to the version N+2, and the value of the field being 0011 indicates the SIB 1 corresponding to the version N+3. Therefore, the terminal device may determine, based on a specific value of the third indication information, a specific SIB 1 included in the data.

In the implementation (3), if different logical channels (or RLC entities) are used to distinguish between SIBs 1 of different versions, the following may be defined: Logical channels or RLC entities corresponding to the versions are different. For example, a logical channel corresponding to the SIB 1 corresponding to the version N is a newly defined logical channel 1 (or RLC 1), a logical channel corresponding to the SIB 1 corresponding to the version N+1 is a newly defined logical channel 2 (or RLC 2), a logical channel corresponding to the SIB 1 corresponding to the version N+2 is a newly defined logical channel 3 (or RLC 3), and a logical channel corresponding to the SIB 1 corresponding to the version N+3 is a newly defined logical channel 4 (or RLC 4). Therefore, the terminal device may determine, based on a corresponding logical channel or RLC entity, a specific SIB 1 included in the data.

S905: The terminal device receives or obtains fourth indication information from the network device.

Correspondingly, the network device may send the fourth indication information to the terminal device. The fourth indication information may indicate whether a specific SIB 1 (for example, the first SIB 1 and/or the second SIB 1) exists in a cell or on the network device, or indicate whether the network device is to send a specific SIB 1 (for example, the first SIB 1 and/or the second SIB 1), or indicate whether a cell or the network device supports a specific operation mode (for example, the first operation mode and/or the second operation mode), or indicate whether a cell or the network device sends different SIBs 1 by using the solution in this embodiment of this application.

It should be noted that, according to the solution in step S905, the terminal device may learn of whether a specific cell or network device sends different SIBs 1 by using the solution in this embodiment of this application, or the terminal device may learn of whether the network device sends a specific SIB 1 (for example, the first SIB 1) by using the solution in this embodiment of this application, or the terminal device may learn of whether the cell or the network device supports a specific operation mode (for example, the first operation mode). Further, if the terminal device may learn of, in advance, that the first SIB 1 does not exist in a cell or on a network device, the terminal device may not need to monitor a PDCCH corresponding to the first SIB 1. This can save energy for the terminal device. It should be noted that the step of receiving, by the terminal device, the fourth indication information from the network device may be performed before step S901, or may be performed simultaneously when step S901 is performed. This is not limited herein. A field used to carry the fourth indication information may include one bit, two bits, or more bits. This is not limited herein. In addition, that the terminal device receives fourth indication information from the network device may be understood as follows: The terminal device receives a MIB from the network device, where the MIB includes the fourth indication information. Alternatively, that the terminal device receives fourth indication information from the network device may be understood as follows: The terminal device receives second DCI from the network device, where the second DCI includes the fourth indication information. Alternatively, that the terminal device receives fourth indication information from the network device may be understood as follows: The terminal device receives fifth DCI from the network device, where the fifth DCI includes the fourth indication information. That is, the fourth indication information may be carried in the MIB, or in the second DCI for scheduling the second SIB 1 or the second data, or in the fifth DCI for scheduling the SI message.

It should be noted that, if the first SIB 1 is a SIB 1 related to the earlier version or the secure mode and the second SIB 1 is a SIB 1 related to the later version or the normal mode, the fourth indication information may be carried in a MIB, or carried in DCI for scheduling the second SIB 1, or carried in DCI for scheduling the SI message. If the first SIB 1 is a SIB 1 related to the later version or the normal mode and the second SIB 1 is a SIB 1 related to the earlier version or the secure mode, the fourth indication information may be carried in the second SIB 1 or the second data in addition to a MIB, DCI for scheduling the second SIB 1 or the second data, or DCI for scheduling the SI message.

It should be noted that the foregoing steps S901 and S902 each may be considered as an independent embodiment, or may be combined with one or more steps in this embodiment of this application as an optional step. This is not limited herein. The foregoing steps S903 and S904 each may be considered as an independent embodiment, or may be combined with one or more steps in this embodiment of this application as an optional step. This is not limited herein. The foregoing step S905 may be considered as an independent embodiment, or may be combined with one or more steps in this embodiment of this application as an optional step. This is not limited herein. In addition, a numbering sequence of the steps in this embodiment of this application does not indicate an execution sequence of the steps. The execution sequence of the steps is specifically determined based on an actual application scenario, and is not limited herein.

In this embodiment of this application, the network device sends or broadcasts at least one piece of data, for example, including the first data corresponding to the first SIB 1 and/or the second data corresponding to the second SIB 1, to ensure that the terminal device can obtain the first SIB 1 and/or the second SIB 1. It is assumed that the first SIB 1 is a SIB 1 related to the secure mode and the second SIB 1 is a SIB 1 related to the normal mode. When the terminal device cannot obtain the second SIB 1 or cannot access a network based on the second SIB 1 due to a compatibility problem, the terminal device may still obtain the first SIB 1, and access the network based on the first SIB 1. This can ensure a basic communication channel between the terminal device and the network device, so that basic communication can be performed between the terminal device and the network. Different SIBs 1 are scheduled by independent DCI. For example, the first data is scheduled based on the first DCI, and the second data is scheduled based on the second DCI. This can resolve a problem that the network device schedules different SIBs 1. This can ensure that the terminal device can obtain the first SIB 1 and/or the second SIB 1. For the PHY layer or the MAC layer of the terminal device, DCI used to schedule different SIBs 1 is distinguished based on first indication information in the DCI, scrambling information of the DCI, a DCI format, a time domain resource for the DCI, or a frequency domain resource for the DCI. In this way, the terminal device can correctly identify content scheduled by the DCI and correctly perform HARQ combination, to improve reliability of data reception. For the RRC layer of the terminal device, the terminal device can correctly identify content included in the first message based on the second indication information, inter-layer interaction (namely, the third indication information), or a logical channel in the first message, to correctly perform RRC decoding to obtain correct information. In addition, whether the network device is to send the first data is indicated in a MIB, DCI for scheduling the second data, DCI for scheduling the third data, or the second data. This helps save energy for the terminal device.

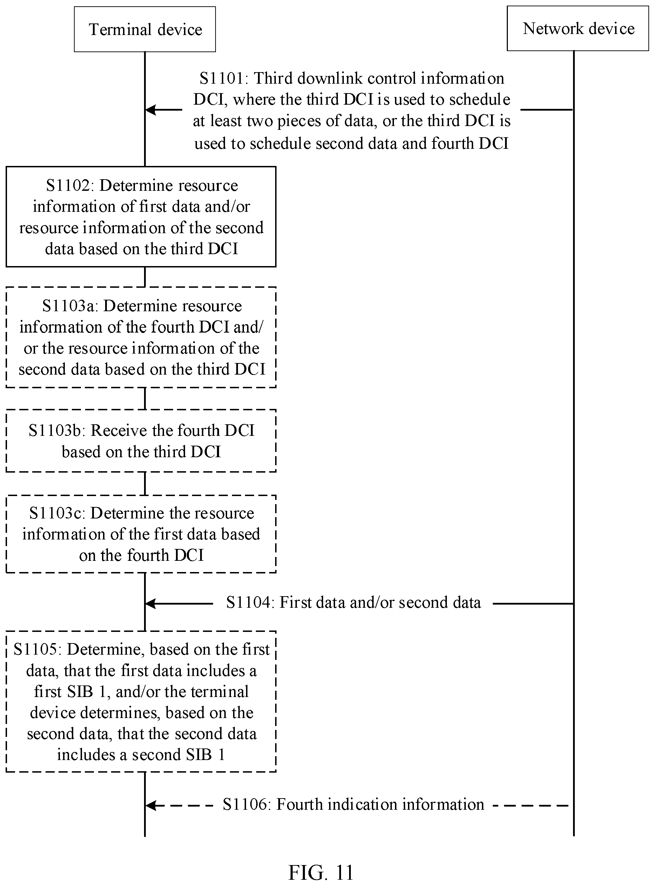

FIG. 11 is another schematic flowchart of a communication method according to an embodiment of this application. As shown in FIG. 11, the communication method includes the following steps S1101 to S 1106.

S1101: A terminal device receives third downlink control information DCI from a network device, where the third DCI is used to schedule at least two pieces of data, or the third DCI is used to schedule second data and fourth DCI.

Correspondingly, the network device may send or broadcast the third DCI. Scrambling information of the third DCI may be an SI-RNTI, a newly defined RNTI, or the like. This is not limited herein. A DCI format of the third DCI may be a DCI format 1_0, a newly defined DCI format, or the like. This is not limited herein.

The fourth DCI is used to schedule first data. It can be understood that, compared with a solution in which the at least two pieces of data are scheduled by the third DCI, a scheduling mode in which the second data and the fourth DCI are scheduled by the third DCI is more flexible.

For ease of understanding, an example in which the at least two pieces of data include the first data and the second data is mainly used below for detailed description in this embodiment of this application. For understanding of the first data and the second data in this embodiment of this application, refer to related descriptions of the first data and the second data in step S901 in FIG. 9. Details are not described herein again.

The following specifically describes the solution in which the third DCI is used to schedule the at least two pieces of data. The at least two pieces of data include the first data and the second data. The first data includes a first SIB 1, and the second data includes a second SIB 1.

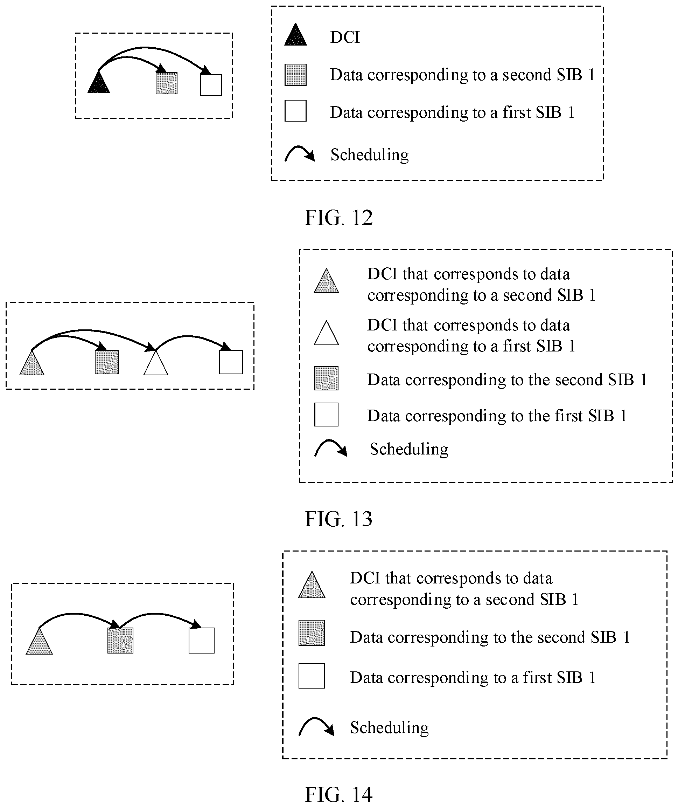

For example, FIG. 12 is a diagram of a scheduling mode according to an embodiment of this application. As shown in FIG. 12, the network device may schedule, by using one piece of DCI, at least two SIBs 1 or at least two pieces of data corresponding to at least two SIBs 1. For example, the DCI shown in FIG. 12 may be used to schedule data corresponding to the second SIB 1 and data corresponding to the first SIB 1. To be specific, the terminal device may determine, based on the DCI, resource information of the data corresponding to the second SIB 1 and resource information of the data corresponding to the first SIB 1. In other words, the terminal device may determine, based on the DCI, resource information corresponding to the second data and resource information corresponding to the first data.

Specifically, the third DCI includes scheduling information of the second data. For example, resource information (for example, time domain resource information and/or frequency domain resource information) of the second data is configured in the third DCI. It should be noted that a manner of indicating the resource information of the second data in the third DCI is not limited in this application, and direct indication or indirect indication may be performed. Scheduling information in this embodiment of this application may include one or more of the following: resource information, a transport block size (transport block size, TBS), a modulation and coding scheme (modulation and coding scheme, MCS), and the like.

Optionally, scheduling information of the first data may be dynamically configured in the third DCI (this may be referred to as dynamic configuration), or the scheduling information of the first data may be statically configured (this may be referred to as static configuration), or the scheduling information of the first data may be semi-statically configured (this may be referred to as semi-static configuration). This is not limited in this application.

The dynamic configuration may be understood as that the scheduling information of the first data is configured in the third DCI. For example, the third DCI carries or includes information about a time domain resource and a frequency domain resource for the first data.

The third DCI may carry or include information about the time domain resource for the first data through direct indication and/or indirect indication. That "the third DCI may carry or include information about the time domain resource for the first data through direct indication" may be understood as or indicate that the information about the time domain resource for the first data is directly configured in the third DCI (for example, the information about the time domain resource for the first data may include any one or more of the following: a start of the time domain resource for the first data, a length of the time domain resource for the first data, and an end of the time domain resource for the first data). That "the third DCI may carry or include information about the time domain resource for the first data through indirect indication" may be understood as or indicate any one of the following implementations:
(1) Information about an interval between a time domain resource for the third DCI and the time domain resource for the first data is indicated in the third DCI.
(2) Information about an interval between a time domain resource for the second data and the time domain resource for the first data is indicated in the third DCI.

The third DCI may carry or include information about the frequency domain resource for the first data through direct indication and/or indirect indication. For understanding of that "the third DCI may carry or include information about the frequency domain resource for the first data through direct indication", refer to the foregoing descriptions of that "the third DCI may carry or include information about the time domain resource for the first data through direct indication", provided that the "time domain" is replaced with "frequency domain". Details are not described herein again. Correspondingly, for understanding of that "the third DCI may carry or include information about the frequency domain resource for the first data through indirect indication", refer to the foregoing descriptions of that "the third DCI may carry or include information about the time domain resource for the first data through indirect indication", provided that the "time domain" is replaced with "frequency domain". Details are not described herein again.

It should be noted that, in this embodiment of this application, an interval between time domain resources may be at various granularities such as a slot, a symbol, a subframe, or a frame. This is specifically determined based on an actual application scenario, and is not limited herein. An interval between frequency domain resources may be at various granularities such as a carrier or a frequency band. This is specifically determined based on an actual application scenario, and is not limited herein.

It should be noted that a time domain start point of the "interval between the time domain resource for the third DCI and the time domain resource for the first data" may be any one of the following: a start of the time domain resource for the third DCI, an end of the time domain resource for the third DCI, time before the start of the time domain resource for the third DCI, time after the end of the time domain resource for the third DCI, a symbol/slot/subframe/frame to which the time domain resource for the third DCI belongs, a start of the symbol/slot/subframe/frame to which the time domain resource for the third DCI belongs, an end of the symbol/slot/subframe/frame to which the time domain resource for the third DCI belongs, time before the start of the symbol/slot/subframe/frame to which the time domain resource for the third DCI belongs, and time after the end of the symbol/slot/subframe/frame to which the time domain resource for the third DCI belongs. A time domain end point of the "interval between the time domain resource for the third DCI and the time domain resource for the first data" may be any one of the following: the start of the time domain resource for the first data, the end of the time domain resource for the first data, time before the start of the time domain resource for the first data, time after the end of the time domain resource for the first data, a symbol/slot/subframe/frame to which the time domain resource for the first data belongs, a start of the symbol/slot/subframe/frame to which the time domain resource for the first data belongs, an end of the symbol/slot/subframe/frame to which the time domain resource for the first data belongs, time before the start of the symbol/slot/subframe/frame to which the time domain resource for the first data belongs, and time after the end of the symbol/slot/subframe/frame to which the time domain resource for the first data belongs. Similarly, for understanding of the "interval between the time domain resource for the second data and the time domain resource for the first data", only the "third DCI" needs to be replaced with "second data". Details are not described herein again. It should be noted that, in this embodiment of this application, the interval between the time domain resource for the second data and the time domain resource for the first data may alternatively be 0. In a possible implementation, the time domain resource for the second data may be the same as the time domain resource for the first data. A location sequence of the second data and the first data in time domain is not limited in this application.

A start point (or an end point) of an "interval between a frequency domain resource for the third DCI and the frequency domain resource for the first data" may be any one of the following: a start of the frequency domain resource for the third DCI, an end of the frequency domain resource for the third DCI, a frequency before the start of the frequency domain resource for the third DCI, and a frequency after the end of the frequency domain resource for the third DCI. An end point (or a start point) of the "interval between the frequency domain resource for the third DCI and the frequency domain resource for the first data" may be any one of the following: a start of the frequency domain resource for the first data, an end of the frequency domain resource for the first data, a frequency before the start of the frequency domain resource for the first data, and a frequency after the end of the frequency domain resource for the first data. It should be noted that, in this embodiment of this application, the interval between the frequency domain resource for the third DCI and the frequency domain resource for the first data may alternatively be 0. In a possible implementation, the frequency domain resource for the third DCI may be the same as the frequency domain resource for the first data. It can be understood that a location sequence of the third DCI and the first data in frequency domain is not limited in this application. Similarly, for understanding of an "interval between a frequency domain resource for the second data and the frequency domain resource for the first data", only the "third DCI" needs to be replaced with "second data". Details are not described herein again.

For example, the interval between the time domain resource for the third DCI and the time domain resource for the first data may be an interval between the end of the time domain resource for the third DCI and the start of the time domain resource for the first data, or may be an interval between the start of the time domain resource for the third DCI and the start of the time domain resource for the first data. This is not limited herein. For example, the interval between the time domain resource for the third DCI and the time domain resource for the first data may be an interval between a start slot of slots (slot) to which the time domain resource for the third DCI belongs and a start slot of slots to which the time domain resource for the first data belongs, or may be an interval between an end slot of the slots to which the time domain resource for the third DCI belongs and an end slot of the slots to which the time domain resource for the first data belongs.

The static configuration may be understood as determining the scheduling information of the first data based on first priori information.

In a possible implementation, the first priori information includes first interval information and second interval information. The first priori information may be configured by the network device, for example, may be configured by the network device by using an RRC message, or may be preconfigured, or may be defined in a protocol. This is not limited herein.

The first interval information includes information about an interval between a time domain resource for the third DCI and a time domain resource for the first data, or information about an interval between a time domain resource for the second data and the time domain resource for the first data. The second interval information includes information about an interval between a frequency domain resource for the third DCI and a frequency domain resource for the first data, or information about an interval between a frequency domain resource for the second data and the frequency domain resource for the first data. Optionally, the first priori information may further include any one or more of information about a length of the time domain resource for the first data, information about a length of the frequency domain resource for the first data, information about an MCS, and information about a TBS.

In another possible implementation, the first priori information includes information about a time domain resource and a frequency domain resource for the first data. To be specific, for the static configuration, although the third DCI does not include resource information of the first data, the terminal device may determine the resource information of the first data based on the first priori information and resource information of the third DCI or resource information of the second data.

The semi-static configuration may be understood as that information about a time domain resource for the first data is dynamically configured in the third DCI, and information about a frequency domain resource for the first data (or second interval information) is statically configured. Alternatively, the semi-static configuration may be understood as that information about a frequency domain resource for the first data is dynamically configured in the third DCI, and information about a time domain resource for the first data (or first interval information) is statically configured.

The following specifically describes the solution in which the third DCI is used to schedule the second data and the fourth DCI.

The fourth DCI is used to schedule the first data. The first data includes a first SIB 1, and the second data includes a second SIB 1.

For example, FIG. 13 is a diagram of another scheduling mode according to an embodiment of this application. As shown in FIG. 13, DCI that corresponds to data corresponding to the second SIB 1 is the third DCI in this embodiment of this application, and DCI that corresponds to data corresponding to the first SIB 1 is the fourth DCI in this embodiment of this application. To be specific, for ease of description, the DCI that corresponds to the data corresponding to the second SIB 1 in FIG. 13 may be referred to as the third DCI, and the DCI that corresponds to the data corresponding to the first SIB 1 in FIG. 13 may be referred to as the fourth DCI. The third DCI is used to schedule the fourth DCI and the data corresponding to the second SIB 1, and the fourth DCI is used to schedule the data corresponding to the first SIB 1. The terminal device may determine, based on the third DCI, resource information of the data corresponding to the second SIB 1 and resource information of the fourth DCI.

Specifically, the third DCI includes scheduling information of the second data. For example, resource information (for example, time domain resource information and/or frequency domain resource information) of the second data is configured in the third DCI. It should be noted that a manner of indicating the resource information of the second data in the third DCI is not limited in this application, and direct indication or indirect indication may be performed.

Scheduling information of the fourth DCI may be dynamically configured in the third

DCI (this may be referred to as dynamic configuration), or the scheduling information of the fourth DCI may be statically configured (this may be referred to as static configuration), or the scheduling information of the fourth DCI may be semi-statically configured (this may be referred to as semi-static configuration). This is not limited in this application.

It should be noted that, for understanding of that the scheduling information of the fourth DCI is dynamically configured, statically configured, or semi-statically configured, reference may be made to the foregoing descriptions of that the scheduling information of the first data may be dynamically configured, statically configured, or semi-statically configured, provided that the "first data" is replaced with "fourth DCI". Details are not described herein again.

Optionally, in some feasible implementations, in a scenario in which the network device may schedule two SIBs 1, namely, the first SIB 1 and the second SIB 1, the following further specifically describes two other scheduling modes.

In a first scheduling mode, alternatively, one SIB 1 may be scheduled based on one piece of DCI. For example, the SIB 1 may be the second SIB 1. Then another SIB 1 is scheduled based on the second SIB 1. For example, the another SIB 1 may be the first SIB 1. To be specific, one SIB 1 may include scheduling information of another SIB 1, or data corresponding to one SIB 1 may include scheduling information of another SIB 1.

For example, FIG. 14 is a diagram of another scheduling mode according to an embodiment of this application. As shown in FIG. 14, DCI that corresponds to data corresponding to the second SIB 1 is used to schedule the second SIB 1. Alternatively, this is described as follows: DCI that corresponds to data corresponding to the second SIB 1 is used to schedule the data corresponding to the second SIB 1. The second SIB 1 or the data corresponding to the second SIB 1 includes scheduling information of the first SIB 1. Alternatively, this is understood as that the second SIB 1 or the data corresponding to the second SIB 1 may schedule the first SIB 1; or this is understood as that the second SIB 1 or the data corresponding to the second SIB 1 includes scheduling information of data corresponding to the first SIB 1; or this is understood as that the second SIB 1 or the data corresponding to the second SIB 1 may schedule the first SIB 1 or data corresponding to the first SIB 1. The terminal device may determine, based on the DCI that corresponds to the data corresponding to the second SIB 1, a location of a PDSCH that corresponds to the data corresponding to the second SIB 1; and may determine, based on the second SIB 1 or the data corresponding to the second SIB 1, a location of a PDSCH that corresponds to the data corresponding to the first SIB 1. The scheduling information of the first SIB 1 may be dynamically configured in the second SIB 1 or the data corresponding to the second SIB 1, or the scheduling information of the first SIB 1 may be statically configured, or the scheduling information of the first SIB 1 may be semi-statically configured. This is not limited herein. It should be noted that, for understanding of that the scheduling information of the first SIB 1 is dynamically configured in the second SIB 1 or the data corresponding to the second SIB 1, or the scheduling information of the first SIB 1 may be statically configured, or the scheduling information of the first SIB 1 may be semi-statically configured, reference may be made to the foregoing descriptions of that the scheduling information of the first data may be dynamically configured in the third DCI, or the scheduling information of the first data may be statically configured, or the scheduling information of the first data may be semi-statically configured in FIG. 12. Details are not described herein again.

Optionally, in some feasible implementations, the network device may further send fifth indication information to the terminal device, and the fifth indication information may indicate whether the second SIB 1 exists on or is to be sent by the network device. The fifth indication information may be carried in a MIB sent by the network device to the terminal device, or the fifth indication information may be carried in DCI used to schedule the second SIB 1, or the like. This is not limited herein. Optionally, whether the first SIB 1exists in a network may be further determined based on whether the second SIB 1 or the data corresponding to the second SIB 1 includes the scheduling information of the first SIB 1.

In a second scheduling mode, one SIB 1 may be scheduled based on one piece of DCI. For example, the SIB 1 may be the second SIB 1. Then DCI for another SIB 1 is scheduled based on the SIB 1. For example, the another SIB 1 may be the first SIB 1. To be specific, one SIB 1 may include scheduling information of DCI for another SIB 1, or data corresponding to one SIB 1 may include scheduling information of DCI for another SIB 1.

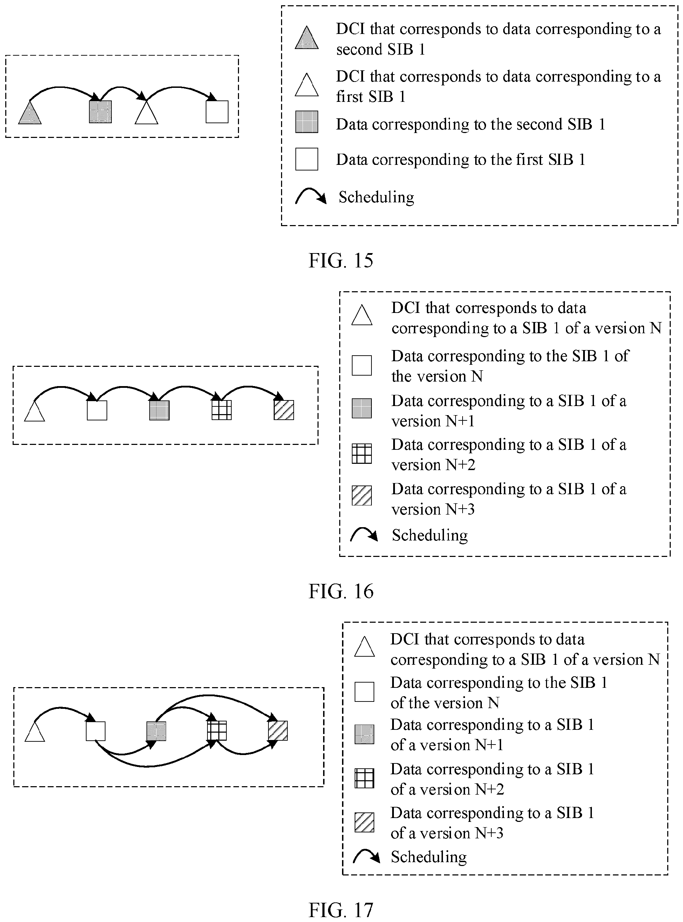

For example, FIG. 15 is a diagram of another scheduling mode according to an embodiment of this application. As shown in FIG. 15, DCI that corresponds to data corresponding to the second SIB 1 is used to schedule the data corresponding to the second SIB 1, and the data corresponding to the second SIB 1 includes scheduling information of DCI that corresponds to data corresponding to the first SIB 1. To be specific, the second SIB 1 or the data corresponding to the second SIB 1 may schedule the DCI that corresponds to the data corresponding to the first SIB 1, and the DCI that corresponds to the data corresponding to the first SIB 1 is used to schedule the data corresponding to the first SIB 1. The terminal device may determine, based on DCI corresponding to the second SIB 1 or the DCI that corresponds to the data corresponding to the second SIB 1, a location of a PDSCH that corresponds to the second SIB 1 or the data corresponding to the second SIB 1; may determine, based on the second SIB 1 or the data corresponding to the second SIB 1, a location of the DCI that corresponds to the data corresponding to the first SIB 1; and may determine, based on the DCI that corresponds to the data corresponding to the first SIB 1, a location of a PDSCH that corresponds to the data corresponding to the first SIB 1. The scheduling information of the DCI that corresponds to the data corresponding to the first SIB 1 may be dynamically configured in the second SIB 1 or the data corresponding to the second SIB 1, or the scheduling information of the DCI that corresponds to the data corresponding to the first SIB 1 may be statically configured, or the scheduling information of the DCI that corresponds to the data corresponding to the first SIB 1 may be semi-statically configured. This is not limited herein. It should be noted that, for understanding of that the scheduling information of the DCI that corresponds to the data corresponding to the first SIB 1 is dynamically configured in the second SIB 1 or the data corresponding to the second SIB 1, or the scheduling information of the DCI that corresponds to the data corresponding to the first SIB 1 may be statically configured, or the scheduling information of the DCI that corresponds to the data corresponding to the first SIB 1 may be semi-statically configured, reference may be made to the foregoing descriptions of that the scheduling information of the first data may be dynamically configured in the third DCI, or the scheduling information of the first data may be statically configured, or the scheduling information of the first data may be semi-statically configured in FIG. 12. Details are not described herein again.

Optionally, in some feasible implementations, the network device may further send fifth indication information to the terminal device, and the fifth indication information may indicate whether the second SIB 1 exists on or is to be sent by the network device. The fifth indication information may be carried in a MIB sent by the network device to the terminal device, or the fifth indication information may be carried in DCI used to schedule the second SIB 1, or the like. This is not limited herein. Optionally, whether the first SIB 1 (namely, the first SIB 1) exists in a network may be further determined based on whether the second SIB 1 or the data corresponding to the second SIB 1 includes the scheduling information of the first SIB 1.

It should be noted that, compared with the scheduling mode shown in FIG. 14, in FIG. 15, a time domain resource, a frequency domain resource, an MCS, a TBS, or the like for the data corresponding to the first SIB 1 may be flexibly indicated in the DCI for scheduling the first SIB 1, and scheduling is more flexible.

Optionally, in some feasible implementations, the network device may alternatively schedule three or more SIBs 1. Specifically, in a scenario in which the network device may alternatively schedule three or more SIBs 1, the following specifically describes four scheduling modes.

For ease of understanding, data corresponding to four SIBs 1 is mainly used below as examples for description: data that corresponds to a SIB 1 corresponding to a version N, data that corresponds to a SIB 1 corresponding to a version N+1, data that corresponds to a SIB 1 corresponding to a version N+2, and data that corresponds to a SIB 1 corresponding to a version N+3. Among the four SIBs 1, the data that corresponds to the SIB 1 corresponding to the version N may be understood as data corresponding to a SIB 1 of an earlier version, and the data that corresponds to the SIB 1 corresponding to each of the version N+1 to the version N+3 may be understood as data corresponding to a SIB 1 of a later version. For ease of description, the data that corresponds to the SIB 1 corresponding to the version N may be referred to as the SIB 1 corresponding to the version N, the data that corresponds to the SIB 1 corresponding to the version N+1 may be referred to as the SIB 1 corresponding to the version N+1, the data that corresponds to the SIB 1 corresponding to the version N+2 may be referred to as the SIB 1 corresponding to the version N+2, and the data that corresponds to the SIB 1 corresponding to the version N+3 may be referred to as the SIB 1 corresponding to the version N+3.

In a first scheduling mode, in a scenario in which the network device schedules three or more SIBs 1, a level-by-level scheduling mode may be used. To be specific, a SIB 1 of an earlier version includes scheduling information of a SIB 1 of a later version. Alternatively, this is described as follows: Data corresponding to a SIB 1 of an earlier version includes scheduling information of a SIB 1 of a later version.

The scheduling information of the SIB 1 of the later version may be dynamically configured in the SIB 1 of the earlier version or the data corresponding to the SIB 1 of the earlier version, or the scheduling information of the SIB 1 of the later version may be statically configured, or the scheduling information of the SIB 1 of the later version may be semi-statically configured. This is not limited herein. It should be noted that, for understanding of that the scheduling information of the SIB 1 of the later version is dynamically configured in the SIB 1 of the earlier version or the data corresponding to the SIB 1 of the earlier version, or the scheduling information of the SIB 1 of the later version may be statically configured, or the scheduling information of the SIB 1 of the later version may be semi-statically configured, reference may be made to the foregoing descriptions of that the scheduling information of the first data may be dynamically configured in the third DCI, or the scheduling information of the first data may be statically configured, or the scheduling information of the first data may be semi-statically configured in FIG. 12. Details are not described herein again.

For example, FIG. 16 is a diagram of another scheduling mode according to an embodiment of this application. As shown in FIG. 16, DCI for a SIB 1 of a version N is used to schedule the SIB 1 of the version N or data corresponding to the SIB 1 of the version N, the SIB 1 of the version N may schedule a SIB 1 of a version N+1 or data corresponding to the SIB 1 of the version N+1, the SIB 1 of the version N+1 may schedule a SIB 1 of a version N+2 or data corresponding to the SIB 1 of the version N+2, and the SIB 1 of the version N+2 may schedule a SIB 1 of a version N+3 or data corresponding to the SIB 1 of the version N+3. To be specific, the DCI for the SIB 1 of the version N includes scheduling information of the SIB 1 of the version N, the SIB 1 of the version N includes scheduling information of the SIB 1 of the version N+1, the SIB 1 of the version N+1 includes scheduling information of the SIB 1 of the version N+2, and the SIB 1 of the version N+2 includes scheduling information of the SIB 1 of the version N+3.

Optionally, in a second scheduling mode, in a scenario in which the network device schedules three or more SIBs 1, a cross-level scheduling mode may be used. For example, a SIB 1 of an earlier version may include scheduling information of one or more SIBs 1 of a later version, or data corresponding to a SIB 1 of an earlier version may include scheduling information of one or more SIBs 1 of a later version.

The scheduling information of the one or more SIBs 1 of the later version may be dynamically configured in the SIB 1 of the earlier version or the data corresponding to the SIB 1 of the earlier version, or the scheduling information of the one or more SIBs 1 of the later version may be statically configured, or the scheduling information of the one or more SIBs 1 of the later version may be semi-statically configured. This is not limited herein. It should be noted that, for understanding of that the scheduling information of the one or more SIBs 1 of the later version is dynamically configured in the SIB 1 of the earlier version or the data corresponding to the SIB 1 of the earlier version, or the scheduling information of the one or more SIBs 1 of the later version may be statically configured, or the scheduling information of the one or more SIBs 1 of the later version may be semi-statically configured, reference may be made to the foregoing descriptions of that the scheduling information of the first data may be dynamically configured in the third DCI, or the scheduling information of the first data may be statically configured, or the scheduling information of the first data may be semi-statically configured in FIG. 12. Details are not described herein again. Optionally, a version of the SIB 1 of the later version may be further additionally indicated in a SIB 1 of a base version.

For example, FIG. 17 is a diagram of another scheduling mode according to an embodiment of this application. As shown in FIG. 17, DCI for a SIB 1 of a version N is used to schedule the SIB 1 of the version N or data corresponding to the SIB 1 of the version N; the SIB 1 of the version N may schedule a SIB 1 of a version N+1 and a SIB 1 a version N+2, or data corresponding to the SIB 1 of the version N+1 and data corresponding to the SIB 1 the version N+2; the SIB 1 of the version N+1 may schedule the SIB 1 of the version N+2 and a SIB 1 of a version N+3, or data corresponding to the SIB 1 of the version N+2 and data corresponding to the SIB 1 of the version N+3; and the SIB 1 of the version N+2 may schedule the SIB 1 of the version N+3 or the data corresponding to the SIB 1 of the version N+3. To be specific, the DCI for the SIB 1 of the version N includes scheduling information of the SIB 1 of the version N, the SIB 1 of the version N includes scheduling information of the SIB 1 of the version N+1 and the SIB 1 of the version N+2, the SIB 1 of the version N+1 includes scheduling information of the SIB 1 of the version N+2 and the SIB 1 of the version N+3, and the SIB 1 of the version N+2 includes scheduling information of the SIB 1 of the version N+3.

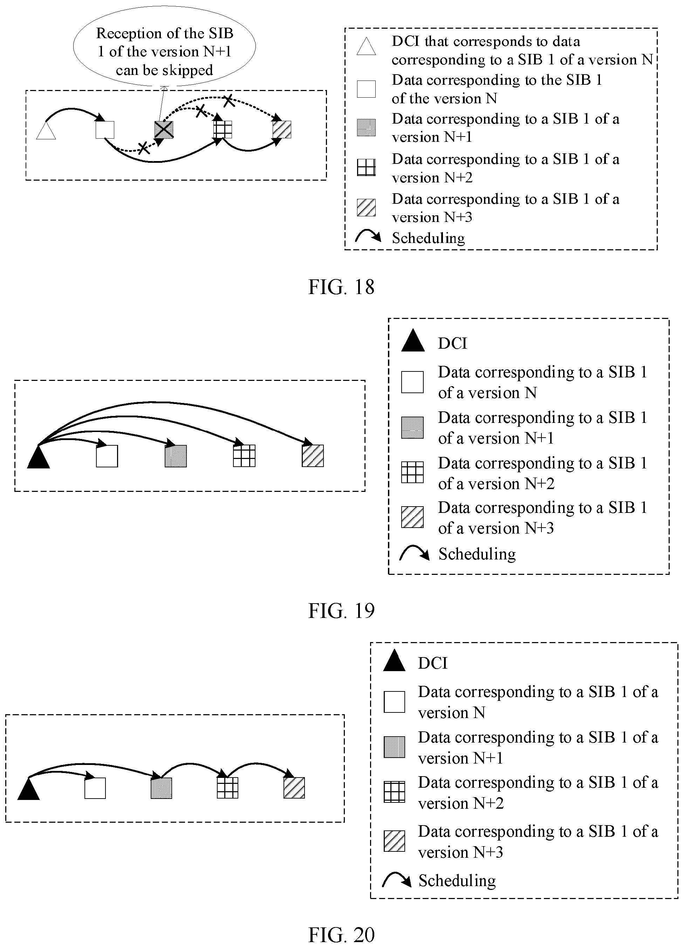

It should be noted that, compared with the level-by-level scheduling mode, in the cross-level scheduling mode, reception of SIBs 1 of some versions may be skipped. For example, FIG. 18 is a diagram of another scheduling mode according to an embodiment of this application. As shown in FIG. 18, DCI for a SIB 1 of a version N is used to schedule the SIB 1 of the version N or data corresponding to the SIB 1 of the version N, the SIB 1 of the version N may schedule a SIB 1 of a version N+2 or data corresponding to the SIB 1 of the version N+2, and the SIB 1 of the version N+2 may schedule a SIB 1 of a version N+3 or data corresponding to the SIB 1 of the version N+3. To be specific, the DCI for the SIB 1 of the version N includes scheduling information of the SIB 1 of the version N, the SIB 1 of the version N includes scheduling information of the SIB 1 of the version N+2, and the SIB 1 of the version N+2 includes scheduling information of the SIB 1 of the version N+3.

Optionally, in a third scheduling mode, in a scenario in which the network device schedules three or more SIBs 1, a scheduling mode in which one piece of DCI is used to schedule SIBs 1 of all versions may alternatively be used. For example, FIG. 19 is a diagram of another scheduling mode according to an embodiment of this application. As shown in FIG. 19, the network device may schedule a SIB 1 of a version N, a SIB 1 of a version N+1, a SIB 1 of a version N+2, and a SIB 1 of a version N+3 by using one piece of DCI; or the network device may schedule, by using one piece of DCI, data corresponding to the SIB 1 of the version N, data corresponding to the SIB 1 of the version N+1, data corresponding to the SIB 1 of the version N+2, and data corresponding to the SIB 1 of the version N+3. To be specific, the DCI includes scheduling information of the SIB 1 of the version N, the SIB 1 of the version N+1, the SIB 1 of the version N+2, and the SIB 1 of the version N+3; or the DCI includes scheduling information of the data corresponding to the SIB 1 of the version N, the data corresponding to the SIB 1 of the version N+1, the data corresponding to the SIB 1 of the version N+2, and the data corresponding to the SIB 1 of the version N+3. Scheduling information of a SIB 1 of a later version may be dynamically configured in the DCI, or may be statically configured, or may be semi-statically configured. Optionally, a version of the SIB 1 of the later version may be further additionally indicated in the DCI.

Optionally, in a fourth scheduling mode, in a scenario in which the network device schedules three or more SIBs 1, a hybrid scheduling mode may alternatively be used. For example, one piece of DCI may include scheduling information of SIBs 1 of a plurality of versions (which may be, for example, an earlier version and/or some later versions), a SIB 1 of an earlier version or data corresponding to a SIB 1 of an earlier version does not need to include scheduling information of a SIB 1 of any later version, and a SIB 1, scheduled by the DCI, of a later version or data corresponding to a SIB 1 of a later version may include scheduling information of a SIB 1 of a further later version.

For example, FIG. 20 is a diagram of another scheduling mode according to an embodiment of this application. As shown in FIG. 20, the network device may schedule both a SIB 1 of a version N and a SIB 1 of a version N+1 by using one piece of DCI, the SIB 1 of the version N+1 may schedule a SIB 1 of a version N+2, and the SIB 1 of the version N+2 may schedule a SIB 1 of a version N+3. Alternatively, the network device may schedule, by using one piece of DCI, both data corresponding to the SIB 1 of the version N and data corresponding to the SIB 1 of the version N+1, the data corresponding to the SIB 1 of the version N+1 may schedule data corresponding to the SIB 1 of the version N+2, and the data corresponding to the SIB 1 of the version N+2 may schedule data corresponding to the SIB 1 of the version N+3.

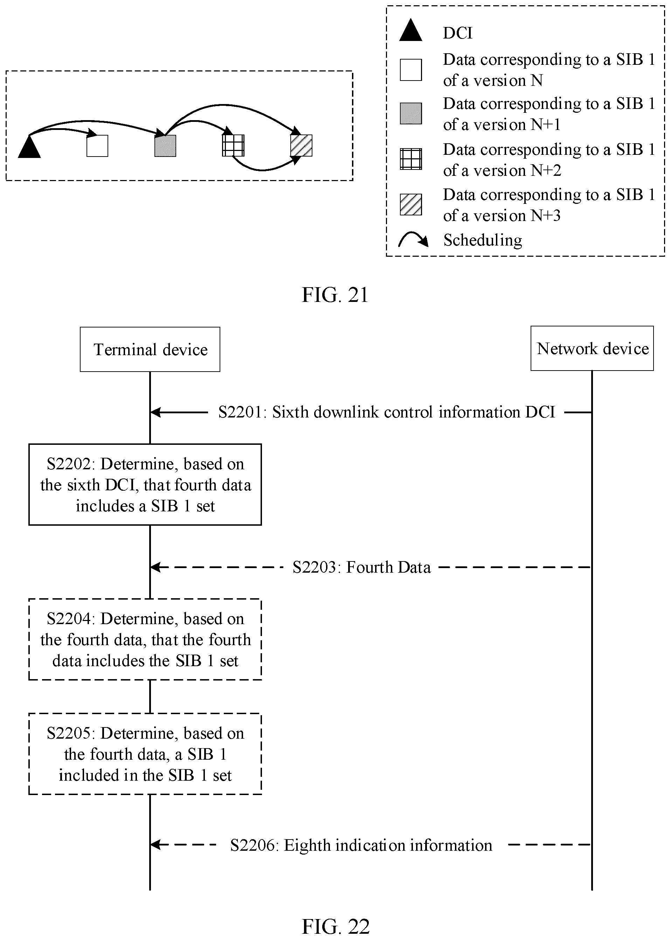

For another example, FIG. 21 is a diagram of another scheduling mode according to an embodiment of this application. As shown in FIG. 21, the network device may schedule both a SIB 1 of a version N and a SIB 1 of a version N+1 by using one piece of DCI, the SIB 1 of the version N+1 may schedule a SIB 1 of a version N+2 and a SIB 1 of a version N+3, and the SIB 1 of the version N+2 may schedule the SIB 1 of the version N+3. Alternatively, the network device may schedule, by using one piece of DCI, both data corresponding to the SIB 1 of the version N and data corresponding to the SIB 1 of the version N+1, the data corresponding to the SIB 1 of the version N+1 may schedule data corresponding to the SIB 1 of the version N+2 and data corresponding to the SIB 1 of the version N+3, and the data corresponding to the SIB 1 of the version N+2 may schedule the data corresponding to the SIB 1 of the version N+3.

It should be noted that, in the examples of FIG. 16 to FIG. 21, the SIB 1 of the version N may be understood as a SIB 1 of a base version, and SIBs 1 other than the SIB 1 of the version N, for example, the SIBs 1 of the version N+1 to the version N+3, are SIBs 1 of later versions.

S1102: The terminal device determines resource information of the first data and/or resource information of the second data based on the third DCI.

In some feasible implementations, the terminal device may determine the resource information of the first data and/or the resource information of the second data based on the third DCI. It should be noted that step S1102 is an optional step.

S1103a: The terminal device determines resource information of the fourth DCI and/or the resource information of the second data based on the third DCI.

In some feasible implementations, the terminal device may determine the resource information of the fourth DCI and/or the resource information of the second data based on the third DCI. It should be noted that step S1103a may also be an optional step.

S1103b: The terminal device receives the fourth DCI based on the third DCI.

In some feasible implementations, the terminal device may receive the fourth DCI based on the third DCI. It should be noted that step S1103b may also be an optional step.

S1103c: The terminal device determines the resource information of the first data based on the fourth DCI.

In some feasible implementations, the terminal device may determine the resource information of the first data based on the fourth DCI. It should be noted that step S 1103c may also be an optional step.

S1104: The terminal device receives the first data and/or the second data from the network device.

In some feasible implementations, for descriptions of that the terminal device receives the first data and/or the second data from the network device, a type of possible understanding is as follows: The terminal device receives the first data and/or the second data from the network device based on the third DCI. Another type of possible understanding is as follows: The terminal device receives the second data from the network device based on the third DCI, and/or the terminal device receives the first data from the network device based on the fourth DCI.

In some feasible implementations, the terminal device may receive the first data and/or the second data from the network device based on the third DCI. For example, it is assumed that a first operation mode is a secure mode and a second operation mode is a normal mode. When an operation mode supported by the terminal device is the first operation mode, the terminal device may receive the first data based on the third DCI. Optionally, when the operation mode supported by the terminal device is the second operation mode and full configuration is used for the second SIB 1, the terminal device may receive the second data based on the third DCI. Optionally, when the operation mode supported by the terminal device is the second operation mode and delta configuration is used for the second SIB 1, the terminal device may receive the first data and the second data based on the third DCI, and obtain a complete second SIB 1 through combination based on the first data and the second data.

Specifically, for decoding by the terminal device, based on different scheduling modes described in step S1101, the terminal device (for example, a MAC layer of the terminal device or a PHY layer of the terminal device) may successfully receive or decode data scheduled by the third DCI. When the third DCI is used to schedule at least two pieces of data (for example, the first data and the second data), the terminal device (for example, the MAC layer of the terminal device or the PHY layer of the terminal device) may receive, according to the implementation shown in FIG. 12 in step S1101, the first data and/or the second data, namely, the data corresponding to the first SIB 1 and/or the data corresponding to the second SIB 1 in FIG. 12. When the third DCI is used to schedule the second data and the fourth DCI, the terminal device (for example, the MAC layer of the terminal device or the PHY layer of the terminal device) may receive, according to the implementation shown in FIG. 13 in step S1101, the first data and/or the second data, namely, the data corresponding to the first SIB 1 and/or the data corresponding to the second SIB 1 in FIG. 13.

S1105: The terminal device determines, based on the first data, that the first data includes the first SIB 1, and/or the terminal device determines, based on the second data, that the second data includes the second SIB 1.

It should be noted that, for an implementation of determining, by the terminal device based on the first data, that the first data includes the first SIB 1 and/or determining, by the terminal device based on the second data, that the second data includes the second SIB 1, reference may be made to the foregoing descriptions of determining, by the terminal device based on the first data, that the first data includes the first SIB 1 in step S904 in FIG. 9. Details are not described herein again.

S1106: The terminal device receives or obtains fourth indication information from the network device.

It should be noted that, for descriptions of the fourth indication information in this embodiment of this application, reference may be made to the descriptions of the fourth indication information in step S905 in FIG. 9. Details are not described herein again. It should be noted that the fourth indication information may be carried in a MIB sent by the network device to the terminal device, or the fourth indication information may be carried in the third DCI. This is not limited herein. For example, the terminal device obtains the fourth indication information, and may determine, based on the fourth indication information, whether the third DCI is schedules the first data and the second data. Further, the terminal device may receive the first data. For example, the terminal device obtains the fourth indication information, and may determine, based on the fourth indication information, whether the third DCI schedules the second data and the fourth DCI. Further, the terminal device may receive the fourth DCI and the first data.

It should be noted that the foregoing steps 51101 and S1102 each may be considered as an independent embodiment, or may be combined with one or more steps in this embodiment of this application as an optional step. This is not limited herein. The foregoing steps S1101 and S1103a to S1103c, steps S1101, S1103a, and S1103b, or steps S1101 and S1103a each may be considered as an independent embodiment, or may be combined with one or more steps in this embodiment of this application as an optional step. This is not limited herein. The foregoing steps S1104 and S1105 each may be considered as an independent embodiment, or may be combined with one or more steps in this embodiment of this application as an optional step. This is not limited herein. The foregoing step S1106 may be considered as an independent embodiment, or may be combined with one or more steps in this embodiment of this application as an optional step. This is not limited herein. It should be noted that a numbering sequence of the steps in this embodiment of this application does not indicate an execution sequence of the steps. The execution sequence of the steps is specifically determined based on an actual application scenario, and is not limited herein. For example, S1105 may be performed before or after S1103b. This is not limited.

In this embodiment of this application, the network device sends or broadcasts the first data corresponding to the first SIB 1, the second data corresponding to the second SIB 1, and/or the like, to ensure that the terminal device can obtain the first SIB 1 and/or the second SIB 1. It is assumed that the first SIB 1 is a SIB 1 related to the secure mode and the second SIB 1 is a SIB 1 related to the normal mode. When the terminal device cannot obtain the second SIB 1 or cannot access a network based on the second SIB 1 due to a compatibility problem, the terminal device may still obtain the first SIB 1, and access the network based on the first SIB 1. This can ensure a basic communication channel between the terminal device and the network device, so that basic communication can be performed between the terminal device and the network. In this embodiment of this application, one piece of DCI (namely, the third DCI) is used to schedule two SIBs 1, or the DCI for the second SIB 1 is used to schedule the DCI for the first SIB 1, or the second SIB 1 or the data corresponding to the second SIB 1 includes the scheduling information of the first SIB 1, or the second SIB 1 or the data corresponding to the second SIB 1 includes scheduling information of the DCI for the first SIB 1. This provides an effective method for scheduling different SIBs 1. Optionally, in this way, the terminal device can correctly identify data, and therefore can correctly perform HARQ combination, to improve reliability of data reception. For an RRC layer of the terminal device, different SIBs 1 are distinguished based on indication information, an inter-layer interaction indication (namely, the third indication information), or a logical channel in an RRC message. In this way, the terminal device can correctly identify data included in the RRC message, and therefore can correctly perform RRC decoding to obtain correct information. This improves communication reliability. In addition, whether the network device is to send the first data or the second data is indicated in a MIB or the third DCI for scheduling. This helps save energy for the terminal device.

FIG. 22 is a schematic flowchart of a communication method according to an embodiment of this application.

S2201: A terminal device receives sixth downlink control information DCI from a network device.

In some feasible implementations, the sixth DCI is received from the network device, where the sixth DCI is used to schedule fourth data, and the fourth data includes a SIB 1 set. The SIB 1 set includes at least one SIB 1. The at least one SIB 1 may include SIBs 1 related to different versions or different operation modes. To be specific, different SIBs 1 may be mapped to one SIB 1 set, and then the SIB 1 set is scheduled by one piece of DCI. For example, the at least one SIB 1 may include a first SIB 1. For another example, the SIB 1 set may include a first SIB 1 and a second SIB 1. It should be noted that, for understanding of the first SIB 1 and the second SIB 1 in this embodiment of this application, reference may be made to the descriptions of the first SIB 1 and the second SIB 1 in FIG. 9. Details are not described herein again.

It should be noted that, in a possible implementation, the SIB 1 set or the at least one SIB 1 may include one SIB 1 of a base version. This is not limited herein. In a possible implementation, the SIB 1 set or the at least one SIB 1 may include one or more SIBs 1 of a later version. This is not limited herein.

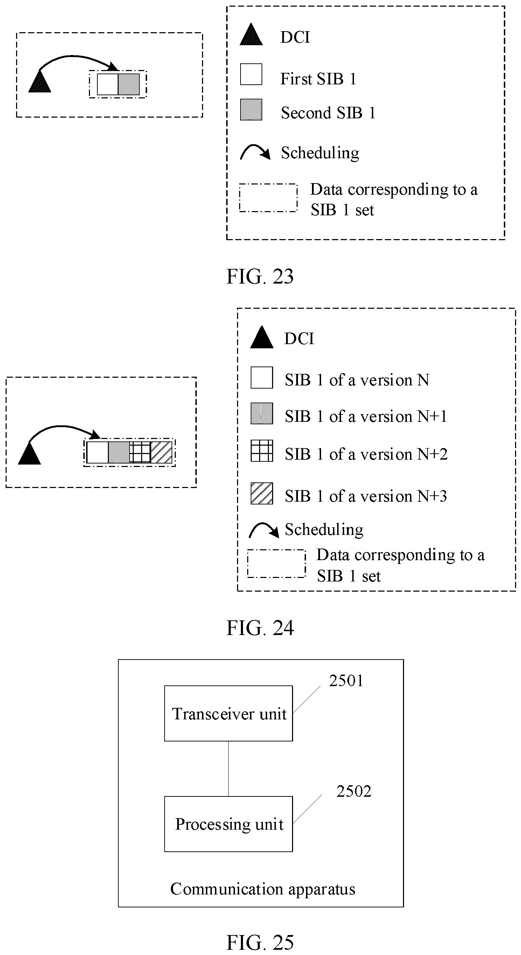

For example, FIG. 23 is a diagram of a scenario in which a SIB 1 set is scheduled based on sixth DCI according to an embodiment of this application. As shown in FIG. 23, the SIB 1 set scheduled by the DCI includes a first SIB 1 and a second SIB 1. The first SIB 1 may be understood as a SIB 1 of an earlier version, and the second SIB 1 may be understood as a SIB 1 of a later version. To be specific, the first SIB 1 and the second SIB 1 may be mapped to the SIB 1 set, and the SIB 1 set or data (namely, the fourth data) corresponding to the SIB 1 set is scheduled by DCI (namely, the sixth DCI).

For another example, FIG. 24 is a diagram of another scenario in which a SIB 1 set is scheduled based on sixth DCI according to an embodiment of this application. As shown in FIG. 24, data corresponding to the SIB 1 set scheduled by the DCI includes a SIB 1 of a version N, a SIB 1 of a version N+1, a SIB 1 of a version N+2, and a SIB 1 of a version N+3. The SIB 1 of the version N may be understood as a SIB 1 of a base version, and the SIB 1 of the version N+1 to the SIB 1 of the version N+3 may be understood as SIBs 1 of a plurality of later versions. To be specific, the SIB 1 of the version N, the SIB 1 of the version N+1, the SIB 1 of the version N+2, and the SIB 1 of the version N+3 may be mapped to the SIB 1 set, and the SIB 1 set or the data corresponding to the SIB 1 set is scheduled by the sixth DCI.

S2202: The terminal device determines, based on the sixth DCI, that the fourth data includes the SIB 1 set.

Step S2202 may be understood as being performed at a PHY layer or a MAC layer of the terminal device, or may be performed at another layer (for example, another newly defined layer). This is specifically determined based on an actual application scenario, and is not limited herein. It should be noted that step S2202 is an optional step. It should be noted that, for the terminal device, determining whether the sixth DCI schedules the SIB 1 set or determining whether the sixth DCI schedules the SIB 1 set or an SI message may be implemented according to the solution in FIG. 9 (for example, any one or more of the implementation 1 to the implementation 5 in step S902 in FIG. 9). To be specific, the determining, based on the first DCI, that the first data includes the first SIB 1 in the five implementations in FIG. 9 may be replaced with the determining, based on the sixth DCI, that the fourth data includes the SIB 1 set in this embodiment for understanding. Details are not described herein again.

S2203: The terminal device receives the fourth data from the network device based on the sixth DCI.

Step S2203 may be understood as being performed at the PHY layer or the MAC layer of the terminal device, or may be performed at another layer (for example, another newly defined layer). This is specifically determined based on an actual application scenario, and is not limited herein. It can be understood that, that the terminal device receives the fourth data from the network device based on the sixth DCI may be understood as follows: The terminal device receives the fourth data from the network device based on scheduling information in the sixth DCI. It should be noted that step S2203 is an optional step.

S2204: The terminal device determines, based on the fourth data, that the fourth data includes the SIB 1 set.

In some feasible implementations, after the terminal device (for example, the PHY layer, the MAC layer, or another layer of the terminal device) receives the fourth data from the network device based on the sixth DCI and delivers all or some of the fourth data to an upper layer of the terminal device (for example, an RRC layer or another layer of the terminal device, where for ease of description, the RRC layer of the terminal device is used below as an example for description), the RRC layer of the terminal device may further decode, based on the fourth data, content included in the fourth data or content corresponding to the fourth data. Based on this, the RRC layer of the terminal device may determine, based on the fourth data, that the fourth data includes the SIB 1 set. It should be noted that, for an implementation of determining, by the terminal device based on the fourth data, that the fourth data includes the SIB 1 set, reference may be made to any one or more of the implementation (1) to the implementation (3) in step S904 in FIG. 9. To be specific, the determining, based on the first data, that the first data includes the first SIB 1 in the three implementations in FIG. 9 may be replaced with determining, based on the fourth data, that the fourth data includes the SIB 1 set in this embodiment for understanding. Details are not described herein again. It should be noted that step S2204 may be an optional step.

S2205: The terminal device determines, based on the fourth data, a SIB 1 included in the SIB 1 set.

In some feasible implementations, the terminal device determines that the fourth data or a fourth message includes the SIB 1 set, and the terminal device further needs to determine a specific SIB 1 or specific SIBs 1 included in the SIB 1 set. A specific SIB 1 or specific SIBs 1, a SIB 1 of a specific version or SIBs 1 of specific versions, or a SIB 1 related to a specific operation mode or SIBs 1 related to specific operation modes that are included in the fourth data, the fourth message, or the SIB 1 set may be identified in either of the following two implementations. That "the terminal device determines, based on the fourth data, a SIB 1 included in the SIB 1 set" may be understood as follows: The terminal device determines, based on the fourth message, the SIB 1 included in the SIB 1 set; or the terminal device determines, based on the SIB 1 set, the SIB 1 included in the SIB 1 set; or the terminal device determines, based on the fourth data, a SIB 1 included in the fourth message; or the terminal device determines, based on the fourth message, a SIB 1 included in the fourth message; or the terminal device determines, based on the SIB 1 set, a SIB 1 included in the fourth message; or the terminal device determines, based on the fourth data, a SIB 1 included in the fourth data; or the terminal device determines, based on the fourth message, a SIB 1 included in the fourth data; or the terminal device determines, based on the SIB 1 set, a SIB 1 included in the fourth data.

How the terminal device determines, based on the fourth data, a specific SIB 1 or specific SIBs 1 included in the SIB 1 set is described below in a first implementation and a second implementation.

In the first implementation, the fourth data, the fourth message, or the SIB 1 set may include sixth indication information, and the sixth indication information indicates a specific SIB 1 or specific SIBs 1 included in the fourth data, the fourth message, or the SIB 1 set.

To be specific, the sixth indication information may be carried in the fourth data sent by the network device to the terminal device, and the sixth indication information indicates a specific SIB 1 or specific SIBs 1, a SIB 1 of a specific version or SIBs 1 of specific versions, or a SIB 1 related to a specific operation mode or SIBs 1 related to specific operation modes that are included in the fourth data, the fourth message, or the SIB 1 set, or indicates content included in the fourth data, the fourth message, or the SIB 1 set.

A specific form of indication by the sixth indication information may include any one of the following plurality of forms. This is not limited herein.

Form 1: When the SIB 1 set may include a maximum of two SIBs 1 (for example, the first SIB 1 and the second SIB 1), the sixth indication information may occupy one bit, and the sixth indication information indicates whether the first SIB 1 exists, or indicates whether only the second SIB 1 exists, or indicates whether the second SIB 1 exists, or indicates whether only the first SIB 1 exists.

Form 2: When the SIB 1 set may include a maximum of three or more SIBs 1, the sixth indication information may perform indication in a form of a bitmap (bitmap), where one SIB 1 corresponds to one bit, and each bit indicates whether a corresponding SIB 1 exists. Optionally, when indication is performed in the form of the bitmap, to save bits, a SIB 1 of a base version may alternatively not need to be indicated, and is considered as existing by default. To be specific, the bitmap only needs to indicate SIBs 1 of a plurality of later versions. For example, it is assumed that the SIB 1 set includes SIBs 1 of four versions: a SIB 1 of a version N, a SIB 1 of a version N+1, a SIB 1 of a version N+2, and a SIB 1 of a version N+3. The SIB 1 of the version N is a SIB 1 of a base version, and the SIB 1 of the version N+1 to the SIB 1 of the version N+3 are SIBs 1 of a plurality of later versions. Therefore, a length of the bitmap may be four bits, sequentially corresponding to the SIB 1 of the version N, the SIB 1 of the version N+1, the SIB 1 of the version N+2, and the SIB 1 of the version N+3 from left to right. Assuming that 0 indicates that a SIB 1 does not exist and 1 indicates that a SIB 1 exists, the bitmap may be represented as 1111. Optionally, to save bits, a length of the bitmap may be three bits, and a SIB 1 of a base version may alternatively not need to be indicated. To be specific, the SIB 1 of the base version is considered as definitely existing by default. In this case, the bitmap may be represented as 111.

Form 3: When the SIB 1 set includes three or more SIBs 1, to save bits, the sixth indication information may alternatively be information indicating existence of a SIB 1 of a latest version. To be specific, it is considered by default that a network is to send SIBs 1 of all earlier versions earlier than the SIB 1 of the latest version. For example, the sixth indication information occupies four bits, where 0000 represents a SIB 1 of a version R15, 0001 represents a SIB 1 of a version R16, and so on. Assuming that the sixth indication information is 0001, it may be determined that the SIB 1 set includes the SIB 1 of the version R16 and SIBs 1 of all versions earlier than the version R16.

In the second implementation, the terminal device obtains seventh indication information associated with the fourth message.

That "the terminal device obtains seventh indication information associated with the fourth message" may be understood as follows: The RRC layer of the terminal device obtains, from a bottom layer of the terminal device, the seventh indication information associated with the fourth message.

The seventh indication information indicates a SIB 1, or a specific SIB 1 or specific SIBs 1, included in the fourth data, the fourth message, or the SIB 1 set. The terminal device determines, based on the thirteenth indication information, the SIB 1 included in the fourth data, the fourth message, or the SIB 1 set.

The "bottom layer of the terminal device" may include any one of the following: the PHY layer of the terminal device, the MAC layer of the terminal device, an RLC layer of the terminal device, or a PDCP layer of the terminal device. Herein, the bottom layer of the terminal device may deliver, layer by layer, the seventh indication information to the RRC layer, or deliver the seventh indication information to the RRC layer through one or more layers between the bottom layer of the terminal device and the RRC layer of the terminal device, or the bottom layer of the terminal device directly delivers the seventh indication information to the RRC layer of the terminal device.

It can be understood that the RRC layer of the terminal device not only obtains the fourth message, but also obtains the seventh indication information associated with the fourth message. The RRC layer of the terminal device may determine, based on the seventh indication information, a specific SIB 1 or specific SIBs 1 included in the fourth data, the fourth message, or the SIB 1 set. It should be noted that an implementation of obtaining the fourth message by the RRC layer of the terminal device may be the same as or different from an implementation of obtaining the seventh indication information by the RRC layer of the terminal device. This is not limited in this application.

It should be noted that the seventh indication information may not be included in the fourth data. For example, the seventh indication information may be generated by the terminal device based on the sixth DCI. For example, if the seventh indication information is generated by the PHY layer of the terminal device, the seventh indication information may not be included in the fourth data. Alternatively, the seventh indication information may be included in the fourth data, for example, included in any one of the following corresponding to the fourth data: a MAC subheader of a fourth MAC PDU, an RLC header of a fourth RLC PDU, and a PDCP header of a fourth PDCP PDU. For example, if the seventh indication information is generated by the MAC layer of the terminal device, the seventh indication information may be included in a MAC subheader (for example, the MAC subheader of the fourth MAC PDU). If the seventh indication information is generated by the RLC layer of the terminal device, the seventh indication information may be included in an RLC header (for example, the RLC header of the fourth RLC PDU). If the seventh indication information is generated by the PDCP layer of the terminal device, the seventh indication information may be included in a PDCP header (for example, the PDCP header of the fourth PDCP PDU).

Optionally, the SIB 1 set and the SI message may correspond to a same logical channel and/or a same RLC entity.

It should be noted that the descriptions of the solution in which the RRC layer of the terminal device determines, according to the foregoing two implementations, a specific SIB 1 or specific SIBs 1 included in a SIB 1 set of a received RRC message in this embodiment of this application may be considered as an independent embodiment, or may be combined with one or more steps in this embodiment of this application as an optional step. This is not limited herein.

S2206: The terminal device receives or obtains eighth indication information from the network device.

Optionally, in some feasible implementations, the terminal device needs to learn of whether a specific cell sends different SIBs 1 by using the solution for sending the SIB 1 set in this embodiment of this application. Specifically, the network device may send the eighth indication information to the terminal device, and the eighth indication information may indicate whether the SIB 1 set exists in the network, or indicate whether the network device is to send the SIB 1 set. Correspondingly, the terminal device receives the eighth indication information from the network device, and the terminal device may determine, based on the eighth indication information, whether the SIB 1 set exists in the network, or determine whether the network device is to send the SIB 1 set. A field used to carry the eighth indication information may include one bit, two bits, or more bits. This is not limited herein.

It should be noted that, that the terminal device receives eighth indication information from the network device may be understood as follows: The terminal device receives a MIB from the network device, where the MIB includes the eighth indication information. In other words, the eighth indication information may be carried in the MIB. Alternatively, the eighth indication information may be carried in the sixth DCI for scheduling the SIB 1 set. Alternatively, the eighth indication information may be carried in DCI for scheduling the SI message. To be specific, the terminal device determines, based on the eighth indication information in the MIB, the sixth DCI for scheduling the SIB 1 set, or the eighth indication information in the DCI for scheduling the SI message, that the SIB 1 set exists on or is to be sent by the network device. In a possible terminal implementation, the terminal device may interpret, by using DCI corresponding to the SIB 1 set, a field in the DCI, and/or the terminal device may perform decoding by using ASN.1 of an RRC message corresponding to the SIB 1 set.

It should be noted that the foregoing steps S2201 and S2202 each may be considered as an independent embodiment, or may be combined with one or more steps in this embodiment of this application as an optional step. This is not limited herein. The foregoing steps S2203, S2204, and 2205 or steps S2203 and S2205 each may be considered as an independent embodiment, or may be combined with one or more steps in this embodiment of this application as an optional step. This is not limited herein. The foregoing step S2206 may be considered as an independent embodiment, or may be combined with one or more steps in this embodiment of this application as an optional step. This is not limited herein. It should be noted that a numbering sequence of the steps in this embodiment of this application does not indicate an execution sequence of the steps. The execution sequence of the steps is specifically determined based on an actual application scenario, and is not limited herein. For example, S1106 may be performed before or after S1101. This is not limited.

In this embodiment of this application, different SIBs 1 are mapped to one SIB 1 set, and the SIB 1 set is scheduled by one piece of DCI. This can ensure that the terminal device can obtain the first SIB 1 or the SIB 1 of the base version, can ensure that the terminal device can access the network based on the first SIB 1 or the SIB 1 of the base version, and can ensure a basic communication channel between the terminal device and the network device, so that basic communication can be performed between the terminal device and the network. For the PHY layer or the MAC layer of the terminal device, DCI used to schedule the SIB 1 set and DCI used to schedule the SI message are distinguished based on indication information in the DCI, scrambling information of the DCI, a DCI format, a time domain resource for the DCI, or a frequency domain resource for the DCI. In this way, the terminal device can correctly identify content scheduled by the DCI and correctly perform HARQ combination, to improve reliability of data reception. For the RRC layer of the terminal device, the terminal device can correctly identify content included in the fourth message based on indication information, inter-layer interaction, or a logical channel in the fourth message. Further, for the RRC layer of the terminal device, the terminal device can correctly identify a specific SIB 1 or specific SIBs 1 included in the SIB 1 set in the fourth message based on the sixth indication information in the fourth message or the seventh indication information associated with the fourth message, to correctly perform RRC decoding to obtain correct information. In addition, whether the network device is to send the fourth data is indicated in the eighth indication information in the MIB, DCI for scheduling the fourth data, or DCI for scheduling third data. This helps the terminal device correctly receive and decode the SIB 1 set, improves reliability of reception, and also helps save energy.

It should be noted that this application further includes the following implementations in addition to the solutions described in FIG. 9, FIG. 11, and FIG. 22. It should be noted that the following implementations may be combined with some steps in the foregoing embodiments, or may be implemented independently.

Optionally, in some feasible implementations, a terminal device of an earlier version may access a network device by using a SIB 1 related to a base version or a secure mode, but the network device may change a SIB 1 or another SIB that is related to a later version or a normal mode. The terminal device of the earlier version does not need the SIB 1 or the another SIB that is related to the later version or the normal mode. Therefore, to avoid impact of a change of SI related to the later version or the normal mode (for example, the SIB 1 related to the later version or the normal mode, and/or the another SIB related to the later version or the normal mode) on the terminal device of the earlier version, for notification of an SI change, ninth indication information may be included in DCI or a short message (short message), where the ninth indication information indicates whether the SI change relates to SI related to the base version or the secure mode (for example, the SIB 1 related to the base version or the secure mode, and/or another SIB 1 related to the base version or the secure mode), or indicates whether the SI change relates only to SI related to the later version or the normal mode. A length of the ninth indication information may be one bit or the like. This is specifically determined based on an actual application scenario, and is not limited herein. It is easily understood that, because the ninth indication information is sent to the terminal device, energy can be saved for the terminal device.

It should be noted that, during specific implementation, when a terminal device cannot access a network device in a normal mode, the terminal device usually attempts to access the network device in a secure mode. However, an abnormal case in which the terminal device cannot access the network device in the secure mode may occur. In this case, the terminal device may give up access in the secure mode based on maximum attempt time or a maximum quantity of attempts. To be specific, the maximum attempt time or the maximum quantity of attempts may be set, and when time or a quantity of attempts of access in the secure mode is greater than or equal to the preset maximum attempt time or maximum quantity of attempts, the terminal device gives up access in the secure mode. This can save energy for the terminal device.

It should be noted that, for a terminal device that accesses a network device in a secure mode, when performing configuration for the terminal device, the network device needs to send a parameter related to the secure mode, for example, a configuration of an earlier version. It should be noted that the terminal device may receive information from a serving cell, where the information indicates whether a neighboring cell supports the terminal device in accessing the network device in the secure mode. For the terminal device that accesses the network device in the secure mode, during cell reselection, a cell that can support the terminal device in accessing the network device in the secure mode may be preferentially selected. For example, information about the neighboring cell may be included in system information.

It should be noted that different embodiments or some steps in different embodiments of this application may be combined with each other to form a new embodiment. It should be noted that, unless otherwise specified or a logical conflict occurs, terms and/or descriptions in different embodiments are consistent and may be mutually referenced.

A communication apparatus provided in this application is described in detail below with reference to FIG. 25 to FIG. 28.

FIG. 25 is a diagram of a structure of a communication apparatus according to an embodiment of this application. The communication apparatus shown in FIG. 25 may be configured to perform some or all functions of the terminal device in the method embodiments described in FIG. 9 to FIG. 24. The apparatus may be a terminal device, an apparatus in a terminal device, or an apparatus that can be used with a terminal device. Alternatively, the communication apparatus may be a chip system. The communication apparatus shown in FIG. 25 may include a transceiver unit 2501 and a processing unit 2502. The processing unit 2502 is configured to process data. The transceiver unit 2501 is integrated with a receiving unit and a sending unit. The transceiver unit 2501 may also be referred to as a communication unit. Alternatively, the transceiver unit 2501 may be split into a receiving unit and a sending unit. Descriptions of the processing unit 2502 and the transceiver unit 2501 below are similar. Details are not described below again.

In an implementation, the transceiver unit 2501 is configured to receive first downlink control information DCI from a network device, where the first DCI is used to schedule first data; and the processing unit 2502 is configured to determine, based on the first DCI, that the first data includes a first system information block 1 SIB 1, where the first SIB 1 includes information related to network access in a first operation mode. The first DCI includes first indication information, and the first indication information indicates that the first data includes the first SIB 1; or one or more of the following information associated with the first DCI is different from that associated with second DCI: scrambling information, downlink control information format DCI format information, time domain resource information, or frequency domain resource information, the second DCI is used to schedule a second SIB 1, and the second SIB 1 includes information related to network access in a second operation mode.

Optionally, the first data includes a first message, and the first message includes the first SIB 1. Optionally, the first message further includes second indication information, and the second indication information indicates that the first message includes the first SIB 1. Optionally, the first SIB 1 is associated with a first radio link control RLC entity, or the first SIB 1 is associated with a first logical channel LCH. The first RLC entity is different from a second RLC entity, or the first LCH is different from a second LCH. The second RLC entity is associated with the second SIB 1, and the second LCH is associated with the second SIB 1.

Optionally, the transceiver unit 2501 is further configured to obtain third indication information associated with the first message, where the third indication information indicates that the first message includes the first SIB 1.

Optionally, the transceiver unit 2501 is specifically configured to obtain, through a radio resource control RRC layer, the third indication information from a physical layer, a media access control MAC layer, a radio link control RLC layer, or a packet data convergence protocol PDCP layer.

Optionally, the transceiver unit 2501 is further configured to receive fourth indication information from the network device, where the fourth indication information indicates the network device to send the first SIB 1, and the fourth indication information is carried in a master information block MIB or the second DCI. Optionally, the transceiver unit 2501 is further configured to receive the first data from the network device based on the first DCI.

In another implementation, the transceiver unit 2501 is configured to receive third downlink control information DCI from a network device, where the third DCI is used to schedule at least two pieces of data, or the third DCI is used to schedule second data and fourth DCI, and the fourth DCI is used to schedule first data; and the transceiver unit 2501 is configured to receive the first data and/or the second data from the network device based on the third DCI, where the at least two pieces of data include the first data and the second data, the first data includes a first system information block 1 SIB 1, the second data includes a second SIB 1, the first SIB 1 includes information related to network access in a first operation mode, and the second SIB 1 includes information related to network access in a second operation mode.

Optionally, the third DCI includes time domain resource information and/or frequency domain resource information of the first data. Optionally, the time domain resource information of the first data includes an interval between a time domain resource for the first data and a time domain resource for the second data, or the time domain resource information of the first data includes an interval between a time domain resource for the first data and a time domain resource for the third DCI; and/or
the frequency domain resource information of the first data includes an interval between a frequency domain resource for the first data and a frequency domain resource for the second data, or the frequency domain resource information of the first data includes an interval between a frequency domain resource for the first data and a frequency domain resource for the third DCI, where
the interval between the time domain resources is used to determine the time domain resource for the first data, and the interval between the frequency domain resources is used to determine the frequency domain resource for the first data.

Optionally, one or more of the following intervals are predefined: the interval between the time domain resource for the first data and the time domain resource for the second data, the interval between the time domain resource for the first data and the time domain resource for the third DCI, the interval between the frequency domain resource for the first data and the frequency domain resource for the second data, or the interval between the frequency domain resource for the first data and the frequency domain resource for the third DCI, where the interval between the time domain resources is used to determine the time domain resource for the first data, and the interval between the frequency domain resources is used to determine the frequency domain resource for the first data.

Optionally, the first data includes a first message, and the first message includes the first SIB 1.

Optionally, the first message further includes second indication information, and the second indication information indicates that the first message includes the first SIB 1.

Optionally, the first SIB 1 is associated with a first radio link control RLC entity, or the first SIB 1 is associated with a first logical channel LCH, where
the first RLC entity is different from a second RLC entity, or the first LCH is different from a second LCH, the second RLC entity is associated with the second SIB 1, and the second LCH is associated with the second SIB 1.

Optionally, the transceiver unit 2501 is further configured to obtain third indication information associated with the first message, where the third indication information indicates that the first message includes the first SIB 1.

Optionally, the transceiver unit 2501 is further configured to obtain, through a radio resource control RRC layer, the third indication information from a physical layer or a media access control MAC, radio link control RLC, or packet data convergence protocol PDCP layer.

Optionally, the transceiver unit 2501 is further configured to receive a master information block MIB from the network device, where the MIB includes fourth indication information, and the fourth indication information indicates the network device to send the first SIB 1.

Optionally, the third DCI further includes fourth indication information, and the fourth indication information indicates the network device to send the first SIB 1.

For other possible implementations of the communication apparatus, refer to related descriptions of functions of the access network device in the method embodiments corresponding to FIG. 9 to FIG. 24. Details are not described herein again.

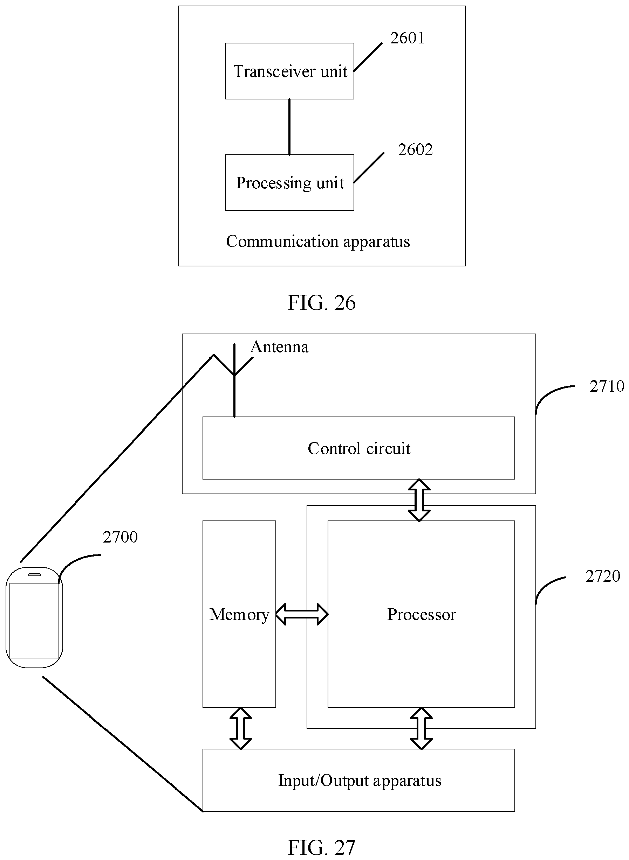

FIG. 26 is a diagram of a structure of another communication apparatus according to an embodiment of this application. The communication apparatus shown in FIG. 26 may be configured to perform some or all functions of the network device in the method embodiments described in FIG. 9 to FIG. 24. The apparatus may be a network device, an apparatus in a network device, or an apparatus that can be used with a network device. Alternatively, the communication apparatus may be a chip system. The communication apparatus shown in FIG. 26 may include a transceiver unit 2601 and a processing unit 2602.

In an implementation, the processing unit 2602 is configured to determine first downlink control information DCI, where the first DCI is used to schedule first data, the first data includes a first system information block 1 SIB 1, and the first SIB 1 includes information related to network access in a first operation mode; and the transceiver unit 2601 is configured to send the first DCI to a terminal device, where the first DCI includes first indication information, and the first indication information indicates that the first data includes the first SIB 1; or one or more of the following information associated with the first DCI is different from that associated with second DCI: scrambling information, downlink control information format DCI format information, time domain resource information, or frequency domain resource information, the second DCI is used to schedule a second SIB 1, and the second SIB 1 includes information related to network access in a second operation mode.

Optionally, the first data includes a first message, and the first message includes the first SIB 1. Optionally, the first message further includes second indication information, and the second indication information indicates that the first message includes the first SIB 1.

Optionally, the transceiver unit 2601 is further configured to send fourth indication information to the terminal device, where the fourth indication information indicates the network device to send the first SIB 1, and the fourth indication information is carried in a master information block MIB or the second DCI. Optionally, the transceiver unit 2601 is further configured to send the first data to the terminal device.

In another implementation, the transceiver unit 2601 is configured to send third downlink control information DCI to a terminal device, where the third DCI is used to schedule at least two pieces of data, or the third DCI is used to schedule second data and fourth DCI, and the fourth DCI is used to schedule first data; and the transceiver unit 2601 is configured to send the first data and the second data to the terminal device, where the at least two pieces of data include the first data and the second data, the first data includes a first system information block 1 SIB 1, the second data includes a second SIB 1, the first SIB 1 includes information related to network access in a first operation mode, and the second SIB 1 includes information related to network access in a second operation mode.

Optionally, the third DCI includes time domain resource information and/or frequency domain resource information of the first data. Optionally, the time domain resource information of the first data includes an interval between a time domain resource for the first data and a time domain resource for the second data, or the time domain resource information of the first data includes an interval between a time domain resource for the first data and a time domain resource for the third DCI; and/or
the frequency domain resource information of the first data includes an interval between a frequency domain resource for the first data and a frequency domain resource for the second data, or the frequency domain resource information of the first data includes an interval between a frequency domain resource for the first data and a frequency domain resource for the third DCI, where
the interval between the time domain resources is used to determine the time domain resource for the first data, and the interval between the frequency domain resources is used to determine the frequency domain resource for the first data.

Optionally, one or more of the following intervals are predefined: the interval between the time domain resource for the first data and the time domain resource for the second data, the interval between the time domain resource for the first data and the time domain resource for the third DCI, the interval between the frequency domain resource for the first data and the frequency domain resource for the second data, or the interval between the frequency domain resource for the first data and the frequency domain resource for the third DCI, where the interval between the time domain resources is used to determine the time domain resource for the first data, and the interval between the frequency domain resources is used to determine the frequency domain resource for the first data.

Optionally, the first data includes a first message, and the first message includes the first SIB 1. Optionally, the first message further includes second indication information, and the second indication information indicates that the first message includes the first SIB 1.

Optionally, the transceiver unit 2601 is further configured to send a master information block MIB to the terminal device, where the MIB includes fourth indication information, and the fourth indication information indicates the network device to send the first SIB 1.

Optionally, the third DCI further includes fourth indication information, and the fourth indication information indicates the network device to send the first SIB 1. For other possible implementations of the communication apparatus, refer to related descriptions of functions of the access network device in the method embodiments corresponding to FIG. 9 to FIG. 24. Details are not described herein again.

FIG. 27 is a diagram of a structure of another communication apparatus according to an embodiment of this application. As shown in FIG. 27, the communication apparatus may be the terminal device described in embodiments of this application, and is configured to implement functions of the terminal device in FIG. 9 to FIG. 24. For ease of description, FIG. 27 shows only main components of the terminal device 2700. As shown in FIG. 27, the terminal device 2700 includes a processor, a memory, a control circuit, an antenna, and an input/output apparatus. The processor is mainly configured to process a communication protocol and communication data, control the entire terminal device 2700, execute a software program, and process data of the software program. The memory is mainly configured to store the software program and data. The control circuit is mainly configured to perform conversion between a baseband signal and a radio frequency signal, and process a radio frequency signal. The antenna is mainly configured to send/receive a radio frequency signal in a form of an electromagnetic wave. The input/output apparatus, for example, a touchscreen, a display, a microphone, or a keyboard, is mainly configured to receive data entered by a user and output data to the user.

For example, the terminal device 2700 is a mobile phone. After the terminal device 2700 is powered on, the processor may read a software program in a storage unit, interpret and execute instructions of the software program, and process data of the software program. When data needs to be sent wirelessly, the processor performs baseband processing on the to-be-sent data, and then outputs a baseband signal to the control circuit. The control circuit performs radio frequency processing on the baseband signal, and then sends a radio frequency signal to the outside in a form of an electromagnetic wave through the antenna. When data is sent to the terminal device 2700, the control circuit receives a radio frequency signal through the antenna, converts the radio frequency signal into a baseband signal, and outputs the baseband signal to the processor, and the processor converts the baseband signal into data and processes the data.

A person skilled in the art can understand that, for ease of description, FIG. 27 shows only one memory and one processor. In some embodiments, the terminal device 2700 may include a plurality of processors and memories. The memory may also be referred to as a storage medium, a storage device, or the like. This is not limited in this embodiment of the present invention.

In an optional implementation, the processor may include a baseband processor and a central processing unit. The baseband processor is mainly configured to process the communication protocol and the communication data. The central processing unit is mainly configured to control the entire terminal device 2700, execute the software program, and process the data of the software program. The processor in FIG. 27 integrates the functions of the baseband processor and the central processing unit. A person skilled in the art can understand that the baseband processor and the central processing unit may alternatively be processors independent of each other, and are interconnected by using a technology such as a bus. The terminal device 2700 may include a plurality of baseband processors to adapt to different network standards. The terminal device 2700 may include a plurality of central processing units to enhance a processing capability of the terminal device 2700. Components of the terminal device 2700 may be connected through various buses. The baseband processor may also be expressed as a baseband processing circuit or a baseband processing chip. The central processing unit may also be expressed as a central processing circuit or a central processing chip. A function of processing the communication protocol and the communication data may be built in the processor, or may be stored in the storage unit in a form of a software program, and the processor executes the software program to implement a baseband processing function.

In an example, the antenna and the control circuit that have a transceiver function may be considered as a transceiver unit 2710 of the terminal device 2700, and the processor that has a processing function may be considered as a processing unit 2720 of the terminal device 2700. As shown in FIG. 27, the terminal device 2700 includes the transceiver unit 2710 and the processing unit 2720. The transceiver unit may also be referred to as a transceiver, a transceiver device, a transceiver apparatus, or the like. Optionally, a component that is in the transceiver unit 2710 and that is configured to implement a receiving function may be considered as a receiving unit, and a component that is in the transceiver unit 2710 and that is configured to implement a sending function may be considered as a sending unit. That is, the transceiver unit 2710 includes the receiving unit and the sending unit. For example, the receiving unit may also be referred to as a receiving device, a receiver, a receiving circuit, or the like; and the sending unit may be referred to as a transmitting device, a transmitter, a transmitting circuit, or the like.

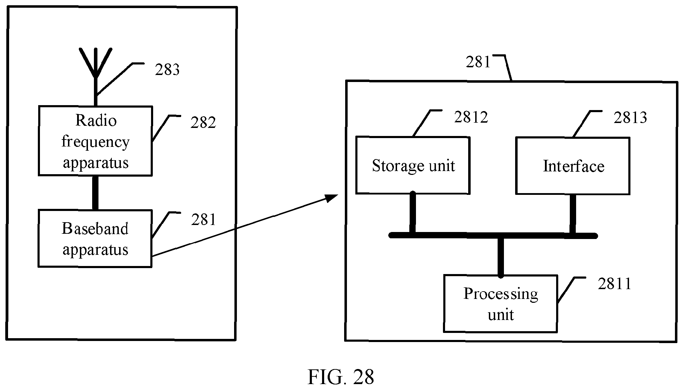

FIG. 28 is a diagram of a structure of another communication apparatus according to an embodiment of this application. As shown in FIG. 28, the communication apparatus may be the network device described in embodiments of this application, and is configured to implement functions of the network device in FIG. 9 to FIG. 24. The network device 28 includes a baseband apparatus 281, a radio frequency apparatus 282, and an antenna 283. In an uplink direction, the radio frequency apparatus 282 receives, through the antenna 283, information sent by a terminal device; and sends, to the baseband apparatus 281 for processing, the information sent by the terminal device. In a downlink direction, the baseband apparatus 281 processes information for the terminal device, and sends processed information to the radio frequency apparatus 282; and the radio frequency apparatus 282 processes the information for the terminal device, and sends processed information to the terminal device through the antenna 283.

The baseband apparatus 281 includes one or more processing units 2811, a storage unit 2812, and an interface 2813. The processing unit 2811 is configured to support the network device in performing functions of the network device in the foregoing method embodiments. The storage unit 2812 is configured to store a software program and/or data. The interface 2813 is configured to exchange information with the radio frequency apparatus 282, and the interface includes an interface circuit, configured to input and output information. In an implementation, the processing unit is an integrated circuit, for example, one or more ASICs, one or more DSPs, one or more FPGAs, or a combination of these integrated circuits. These integrated circuits may be integrated together to form a chip. The storage unit 2812 and the processing unit 2811 may be located in one chip. In other words, the storage unit 2812 is an on-chip storage element. Alternatively, the storage unit 2812 and the processing unit 2811 may be located on different chips. In other words, the storage unit 2812 is an off-chip storage element. The storage unit 2812 may be one memory, or may be a collective term for a plurality of memories or storage elements.

The network device may schedule a program through one or more processing units to implement some or all of the steps in the foregoing method embodiments, for example, implement corresponding functions of the network device in FIG. 9 to FIG. 24. The one or more processing units may support a radio access technology of a same standard, or may support radio access technologies of different standards.

An embodiment of this application further provides a computer-readable storage medium. The computer-readable storage medium stores instructions. When the instructions are run on a processor, the method processes in the foregoing method embodiments are implemented.

An embodiment of this application further provides a computer program product. When the computer program product is run on a processor, the method processes in the foregoing method embodiments are implemented.

A person of ordinary skill in the art may be aware that, in combination with examples described in embodiments disclosed in this specification, units and steps can be implemented by electronic hardware or a combination of computer software and electronic hardware. Whether the functions are performed by hardware or software depends on particular applications and design constraints of technical solutions. A person skilled in the art may use different methods to implement the described functions for each particular application, but it should not be considered that the implementation goes beyond the scope of this application.

In several embodiments provided in this application, it should be understood that the disclosed system, apparatus, and method may be implemented in another manner. For example, the apparatus embodiments described above are merely examples. For example, the unit division is merely logical function division. The units described as separate parts may or may not be physically separate, and parts shown as units may or may not be physical units, that is, may be located in one place, or may be distributed on a plurality of network units. Some or all of the units may be selected according to actual requirements to achieve objectives of solutions of embodiments.

When the functions are implemented in a form of a software functional unit and sold or used as an independent product, the functions may be stored in a computer-readable storage medium. Based on such an understanding, technical solutions of this application essentially, or a part contributing to the conventional technology, or some of technical solutions may be implemented in a form of a software product. The computer software product is stored in a storage medium, and includes several instructions for instructing a computer device (which may be a personal computer, a server, a network device, or the like) to perform all or some of the steps of the methods described in embodiments of this application. The computer-readable storage medium may be any usable medium accessible to a computer. For example, the computer-readable medium may include but is not limited to a random access memory (random access memory, RAM), a read-only memory (read-only memory, ROM), a programmable read-only memory (programmable ROM, PROM), an erasable programmable read-only memory (erasable PROM, EPROM), an electrically erasable programmable read-only memory (electrically erasable programmable read only memory, EEPROM), a compact disc read-only memory (compact disc read-only memory, CD-ROM), a universal serial bus flash disk (universal serial bus flash disk), a removable hard disk, another optical disk storage, a magnetic disk storage medium, another magnetic storage device, or any other medium that can carry or store expected program code in a form of an instruction or a data structure and that can be accessed by a computer. In addition, by way of example but not limitative description, RAMs in many forms may be used, for example, a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), or a direct rambus random access memory (direct rambus RAM, DR RAM).

The foregoing descriptions are merely specific implementations of this application, but are not intended to limit the protection scope of embodiments of this application. Any variation or replacement readily figured out by a person skilled in the art within the technical scope disclosed in embodiments of this application shall fall within the protection scope of embodiments of this application. Therefore, the protection scope of embodiments of this application shall be subject to the protection scope of the claims.

## Claims

1. A communication method, wherein the method is applicable to a terminal device, and comprises:
receiving first downlink control information DCI from a network device, wherein the first DCI is used to schedule first data; and
determining, based on the first DCI, that the first data comprises a first system information block 1 SIB 1, wherein the first SIB 1 comprises information related to network access in a first operation mode, wherein
the first DCI comprises first indication information, and the first indication information indicates that the first data comprises the first SIB 1; or one or more of the following information associated with the first DCI is different from that associated with second DCI: scrambling information, downlink control information format DCI format information, time domain resource information, or frequency domain resource information, the second DCI is used to schedule second data, the second data comprises a second SIB 1, and the second SIB 1 comprises information related to network access in a second operation mode.

2. The method according to claim 1, wherein the first data comprises a first message, and the first message comprises the first SIB 1.

3. The method according to claim 2, wherein the first message further comprises second indication information, and the second indication information indicates that the first message comprises the first SIB 1.

4. The method according to claim 2 or 3, wherein the first SIB 1 is associated with a first radio link control RLC entity, or the first SIB 1 is associated with a first logical channel LCH, wherein
the first RLC entity is different from a second RLC entity, or the first LCH is different from a second LCH, the second RLC entity is associated with the second SIB 1, and the second LCH is associated with the second SIB 1.

5. The method according to claim 2, wherein the method further comprises:
obtaining third indication information associated with the first message, wherein the third indication information indicates that the first message comprises the first SIB 1.

6. The method according to claim 5, wherein the obtaining third indication information associated with the first message comprises:
obtaining, by a radio resource control RRC layer of the terminal device, the third indication information from a physical PHY layer of the terminal device or a media access control MAC layer, a radio link control RLC layer, or a packet data convergence protocol PDCP layer of the terminal device.

7. The method according to any one of claims 1 to 6, wherein the method further comprises:
receiving fourth indication information from the network device, wherein the fourth indication information indicates the network device to send the first SIB 1; and
the fourth indication information is carried in a master information block MIB or the second DCI.

8. The method according to any one of claims 1 to 7, wherein the method further comprises:
receiving the first data from the network device based on the first DCI.

9. A communication method, wherein the method is applicable to a terminal device, and comprises:
receiving third downlink control information DCI from a network device, wherein the third DCI is used to schedule at least two pieces of data, or the third DCI is used to schedule second data and fourth DCI, and the fourth DCI is used to schedule first data; and
receiving the first data and/or the second data from the network device based on the third DCI, wherein
the at least two pieces of data comprise the first data and the second data, the first data comprises a first system information block 1 SIB 1, the second data comprises a second SIB 1, the first SIB 1 comprises information related to network access in a first operation mode, and the second SIB 1 comprises information related to network access in a second operation mode.

10. The method according to claim 9, wherein the third DCI comprises time domain resource information and/or frequency domain resource information of the first data.

11. The method according to claim 10, wherein the time domain resource information of the first data comprises an interval between a time domain resource for the first data and a time domain resource for the second data, or the time domain resource information of the first data comprises an interval between a time domain resource for the first data and a time domain resource for the third DCI; and/or
the frequency domain resource information of the first data comprises an interval between a frequency domain resource for the first data and a frequency domain resource for the second data, or the frequency domain resource information of the first data comprises an interval between a frequency domain resource for the first data and a frequency domain resource for the third DCI, wherein
the interval between the time domain resources is used to determine the time domain resource for the first data, and the interval between the frequency domain resources is used to determine the frequency domain resource for the first data.

12. The method according to any one of claims 9 to 11, wherein one or more of the following intervals are predefined:
the interval between the time domain resource for the first data and the time domain resource for the second data, the interval between the time domain resource for the first data and the time domain resource for the third DCI, the interval between the frequency domain resource for the first data and the frequency domain resource for the second data, or the interval between the frequency domain resource for the first data and the frequency domain resource for the third DCI, wherein
the interval between the time domain resources is used to determine the time domain resource for the first data, and the interval between the frequency domain resources is used to determine the frequency domain resource for the first data.

13. The method according to any one of claims 10 to 12, wherein the first data comprises a first message, and the first message comprises the first SIB 1.

14. The method according to claim 13, wherein the first message further comprises second indication information, and the second indication information indicates that the first message comprises the first SIB 1.

15. The method according to claim 13 or 14, wherein the first SIB 1 is associated with a first radio link control RLC entity, or the first SIB 1 is associated with a first logical channel LCH, wherein
the first RLC entity is different from a second RLC entity, or the first LCH is different from a second LCH, the second RLC entity is associated with the second SIB 1, and the second LCH is associated with the second SIB 1.

16. The method according to claim 13, wherein the method further comprises:
obtaining third indication information associated with the first message, wherein the third indication information indicates that the first message comprises the first SIB 1.

17. The method according to claim 16, wherein the obtaining third indication information associated with the first message comprises:
obtaining, by a radio resource control RRC layer of the terminal device, the third indication information from a physical PHY layer of the terminal device or a media access control MAC, radio link control RLC, or packet data convergence protocol PDCP layer of the terminal device.

18. The method according to any one of claims 9 to 17, wherein the method further comprises:
receiving a master information block MIB from the network device, wherein the MIB comprises fourth indication information, and the fourth indication information indicates the network device to send the first SIB 1.

19. The method according to any one of claims 9 to 18, wherein the third DCI further comprises fourth indication information, and the fourth indication information indicates the network device to send the first SIB 1.

20. A communication method, wherein the method is applicable to a network device, and comprises:
determining first downlink control information DCI, wherein the first DCI is used to schedule first data, the first data comprises a first system information block 1 SIB 1, and the first SIB 1 comprises information related to network access in a first operation mode; and
sending the first DCI to a terminal device, wherein
the first DCI comprises first indication information, and the first indication information indicates that the first data comprises the first SIB 1; or one or more of the following information associated with the first DCI is different from that associated with second DCI: scrambling information, downlink control information format DCI format information, time domain resource information, or frequency domain resource information, the second DCI is used to schedule a second SIB 1, and the second SIB 1 comprises information related to network access in a second operation mode.

21. The method according to claim 20, wherein the first data comprises a first message, and the first message comprises the first SIB 1.

22. The method according to claim 21, wherein the first message further comprises second indication information, and the second indication information indicates that the first message comprises the first SIB 1.

23. The method according to any one of claims 20 to 22, wherein the method further comprises:
sending fourth indication information to the terminal device, wherein the fourth indication information indicates the network device to send the first SIB 1; and
the fourth indication information is carried in a master information block MIB or the second DCI.

24. The method according to any one of claims 20 to 23, wherein the method further comprises:
sending the first data to the terminal device.

25. A communication method, wherein the method is applicable to a network device, and comprises:
sending third downlink control information DCI to a terminal device, wherein the third DCI is used to schedule at least two pieces of data, or the third DCI is used to schedule second data and fourth DCI, and the fourth DCI is used to schedule first data; and
sending the first data and the second data to the terminal device, wherein
the at least two pieces of data comprise the first data and the second data, the first data comprises a first system information block 1 SIB 1, the second data comprises a second SIB 1, the first SIB 1 comprises information related to network access in a first operation mode, and the second SIB 1 comprises information related to network access in a second operation mode.

26. The method according to claim 25, wherein the third DCI comprises time domain resource information and/or frequency domain resource information of the first data.

27. The method according to claim 26, wherein the time domain resource information of the first data comprises an interval between a time domain resource for the first data and a time domain resource for the second data, or the time domain resource information of the first data comprises an interval between a time domain resource for the first data and a time domain resource for the third DCI; and/or
the frequency domain resource information of the first data comprises an interval between a frequency domain resource for the first data and a frequency domain resource for the second data, or the frequency domain resource information of the first data comprises an interval between a frequency domain resource for the first data and a frequency domain resource for the third DCI, wherein
the interval between the time domain resources is used to determine the time domain resource for the first data, and the interval between the frequency domain resources is used to determine the frequency domain resource for the first data.

28. The method according to any one of claims 25 to 27, wherein one or more of the following intervals are predefined:
the interval between the time domain resource for the first data and the time domain resource for the second data, the interval between the time domain resource for the first data and the time domain resource for the third DCI, the interval between the frequency domain resource for the first data and the frequency domain resource for the second data, or the interval between the frequency domain resource for the first data and the frequency domain resource for the third DCI, wherein
the interval between the time domain resources is used to determine the time domain resource for the first data, and the interval between the frequency domain resources is used to determine the frequency domain resource for the first data.

29. The method according to any one of claims 25 to 28, wherein the first data comprises a first message, and the first message comprises the first SIB 1.

30. The method according to claim 29, wherein the first message further comprises second indication information, and the second indication information indicates that the first message comprises the first SIB 1.

31. The method according to any one of claims 25 to 30, wherein the method further comprises:
sending a master information block MIB to the terminal device, wherein the MIB comprises fourth indication information, and the fourth indication information indicates the network device to send the first SIB 1.

32. The method according to any one of claims 25 to 31, wherein the third DCI further comprises fourth indication information, and the fourth indication information indicates the network device to send the first SIB 1.

33. A communication apparatus, wherein the communication apparatus is a terminal device and comprises a processor and a transceiver, and the processor and the transceiver are configured to execute a computer program or instructions stored in at least one memory to enable the apparatus to implement the method according to any one of claims 1 to 8, or implement the method according to any one of claims 9 to 19.

34. A communication apparatus, wherein the communication apparatus is a network device and comprises a processor and a transceiver, and the processor and the transceiver are configured to execute a computer program or instructions stored in at least one memory to enable the apparatus to implement the method according to any one of claims 20 to 24, or implement the method according to any one of claims 25 to 32.

35. A computer-readable storage medium, wherein the storage medium stores a computer program or instructions, and when the computer program or the instructions are executed by a computer, the method according to any one of claims 1 to 8 is implemented, or the method according to any one of claims 9 to 19 is implemented.

36. A computer-readable storage medium, wherein the storage medium stores a computer program or instructions, and when the computer program or the instructions are executed by a computer, the method according to any one of claims 20 to 24 is implemented, or the method according to any one of claims 25 to 32 is implemented.
